(19) Europäisches Patentamt / European Patent Office / Office européen des brevets

(11) **EP 2 870 686 B1**

# (12) FASCICULE DE BREVET EUROPEEN

(45) Date de publication et mention de la délivrance du brevet:
**17.02.2021 Bulletin 2021/07**

(21) Numéro de dépôt: **13734038.6**

(22) Date de dépôt: **01.07.2013**

(51) Int Cl.:
**H02M 3/158** (2006.01)   **H02M 7/483** (2007.01)

(86) Numéro de dépôt international:
**PCT/EP2013/063784**

(87) Numéro de publication internationale:
**WO 2014/005973 (09.01.2014 Gazette 2014/02)**

## (54) CONVERTISSEURS STATIQUES MODULAIRES À ARCHITECTURE PARALLÈLE OU SÉRIE ET À COMMANDE MODULAIRE DECENTRALISÉE

MODULARE STATISCHE UMFORME MIT PARALLELER ODER SERIELLER STRUKTUR UND DEZENTRALER STEUERUNG DER MODULE

MODULAR STATIC CONVERTERS WITH PARALLEL OR SERIES STRUCTURE AND DECENTRALIZED MODULE CONTROL

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **04.07.2012 FR 1256408**

(43) Date de publication de la demande:
**13.05.2015 Bulletin 2015/20**

(73) Titulaires:
• **Institut National Polytechnique De Toulouse - INPT**
**31029 Toulouse Cedex 4 (FR)**
• **Centre National de la Recherche Scientifique (C.N.R.S.)**
**75016 Paris (FR)**

(72) Inventeur: **COUSINEAU, Marc**
**F-81500 Lavaur (FR)**

(74) Mandataire: **Lavoix**
**2, place d'Estienne d'Orves**
**75441 Paris Cedex 09 (FR)**

(56) Documents cités:
**EP-A1- 0 823 772     EP-A1- 2 458 726**

• **MARC COUSINEAU ET AL: "Triangular Carrier Self-Alignment Using Modular Approach for Interleaved Converter Control", PROCEEDINGS OF THE 2011-14TH EUROPEAN CONFERENCE ON POWER ELECTRONICS AND APPLICATIONS (EPE 2011), 30 août 2011 (2011-08-30), pages 1-10, XP055059797, ISBN: 978-1-61284167-0 cité dans la demande**
• **LE BOLLOCH M ET AL: "New Masterless Modular Current-Sharing technique for DC/DC Parallel converters", POWER ELECTRONICS AND MOTION CONTROL CONFERENCE (EPE/PEMC), 2010 14TH INTERNATIONAL, IEEE, PISCATAWAY, NJ, USA, 6 septembre 2010 (2010-09-06), pages T3-73, XP031778624, ISBN: 978-1-4244-7856-9 cité dans la demande**
• **SCHUELLEIN G: "Current sharing of redundant synchronous buck regulators powering high performance microprocessors using the V<2> control method", APPLIED POWER ELECTRONICS CONFERENCE AND EXPOSITION, 1998. APEC '98. C ONFERENCE PROCEEDINGS 1998., THIRTEENTH ANNUAL ANAHEIM, CA, USA 15-19 FEB. 1998, NEW YORK, NY, USA,IEEE, US, vol. 2, 15 février 1998 (1998-02-15), pages 853-859, XP010263692, DOI: 10.1109/APEC.1998.653998 ISBN: 978-0-7803-4340-5**

EP 2 870 686 B1

**Description**

La présente invention concerne des convertisseurs statiques à architecture parallèle ou série à Commande Modulaire Décentralisée (CDM).

Les architectures parallèle ou série des convertisseurs statiques sont connues pour posséder plusieurs cellules de commutation placées soit en parallèle, soit en série.

Dans la plupart des cas, un organe de contrôle centralisé de ces cellules est nécessaire pour déterminer et transmette les ordres de commandes adaptés à la régulation et à l'équilibrage de la structure complète du convertisseur.

Pour des applications de type fort courant de sortie, faible tension de sortie, forte dynamique de sortie, les structures parallèles offrent de grands avantages. L'application la plus évidente est celle de l'alimentation des microcontrôleurs, laquelle nécessite par exemple des courants moyens de 100 A sous une tension proche de 1 Volt avec des dynamiques de l'ordre de 100 A/ns. Ces alimentations de proximité sont appelées classiquement des VRMs (en anglais Voltage Regulator Module).

Par l'usage de structures parallèles, il est obtenu une fréquence apparente élevée sur l'ondulation du courant en entrée et en sortie du convertisseur, ce qui permet de réduire l'encombrement des filtres. Chaque branche de commutation du convertisseur ne laisse circuler qu'une fraction du courant de sortie, ce qui permet de réduire les contraintes associées à l'inductance de la branche et également d'utiliser des interrupteurs rapides de faible calibre en courant. De plus, le stockage inductif est considérablement réduit du fait de la mise en parallèle des inductances, ce qui permet d'obtenir des temps de réponse très courts afin de réagir correctement à des variations de charge quasi-instantanée.

L'organe de contrôle centralisé ou superviseur du convertisseur à architecture parallèle est configuré pour remplir trois fonctions. Une première fonction est de fournir l'entrelacement des commandes à Modulation à Largeur d'Impulsion (MLI). Une deuxième fonction est de calculer le rapport cyclique permettant de réguler la tension de sortie, ici la tension du microcontrôleur. Une troisième fonction est de déterminer les corrections à apporter à chaque signal MLI afin d'égaliser les courants des branches du convertisseur, chaque branche fournissant au superviseur l'information de la valeur du courant la traversant.

Pour des applications de conversion nécessitant un facteur de transformation élevée en tension ou devant assurer un faible niveau de distorsion, les structures série offrent de grands avantages. Une première application concerne le cas de l'élévation d'une tension continue de faible valeur vers une tension continue de valeur très élevée. Dans ce cas, il s'agit de réaliser un survolteur ayant un facteur d'amplification supérieur à 50, un tel facteur ne pouvant pas être atteint avec une architecture à une cellule de commutation pour laquelle le rapport cyclique est trop proche de un. Une deuxième application concerne le cas de conversion DC/AC et AC/DC nécessitant un très faible taux de distorsion (THD) inférieur à 3%. Dans ce cas, une approche multicellulaire série permet d'obtenir des formes d'ondes de tension approchant le plus possibles les signaux sinusoïdaux.

Par l'usage de structures série, il est obtenu une fréquence apparente élevée sur l'ondulation de la tension en entrée et en sortie du convertisseur, ce qui permet de réduire l'encombrement des filtres. Chaque cellule de commutation du convertisseur n'est soumise qu'à une fraction de la tension totale d'entrée, ce qui permet d'utiliser des interrupteurs de faible calibre en tension.

A l'instar du superviseur du convertisseur à architecture parallèle, le superviseur du convertisseur à architecture série est configuré pour remplir trois fonctions principales. Une première fonction est de fournir l'entrelacement des commandes à Modulation à Largeur d'Impulsion (MLI). Une deuxième fonction est de calculer le rapport cyclique permettant de réguler le courant de sortie. Une troisième fonction est de déterminer les corrections à apporter à chaque signal MLI afin d'égaliser les tensions des cellules élémentaires du convertisseur, chaque cellule fournissant au superviseur l'information de la valeur de la tension à laquelle elle est soumise.

Il est remarquer que les structures parallèles et série des convertisseurs statiques son duales entre elles en termes d'une symétrie existant entre les grandeurs de courant et les grandeurs de tension.

Les convertisseurs à architecture parallèle et série présentent en commun l'inconvénient principal de la nécessité de mettre en œuvre un nombre important d'interconnexions permettant de faire le lien entre le superviseur centralisé et les diverses cellules de commutations. Ainsi, dans le cas où le superviseur est réalisé par un FPGA, le nombre de pattes du composant vient limiter le nombre de cellules de commutation pouvant être contrôlées.

Ainsi, la décentralisation des tâches de calculs et de contrôle effectuées par le superviseur centralisée est recherchée en confiant localement ces tâches à des circuits de proximité, dédiés au contrôle des cellules de commutation et dénommés modules de contrôle.

Une première étape a été franchie en réalisant un module de contrôle générique capable de générer sa propre porteuse triangulaire et d'imposer sa phase, c'est-à-dire sa position temporelle, en fonction des autres porteuses entrelacées du convertisseur.

La réalisation d'un tel module est décrite dans l'article de Marc Cousineau et al. intitulé « Triangular Carrier Self-Alignment Using Modular Approach for Interleaved Converter Control », EPE 2011 :14th European Conference on Power Electronics and Applications, Birmingham, UK, 1st September 2011.

Le problème technique est d'augmenter le degré d'intégration locale des fonctions de contrôle du convertisseur au sein des modules de contrôle.

Dans le cas des architectures parallèles, il s'agit de rendre le module capable d'apporter la correction locale nécessaire pour égaliser la valeur de son courant de branche avec la valeur moyenne de tous les courants de branche du convertisseur, et de déterminer la valeur du rapport cyclique local de sa branche afin que l'ensemble des modules imposent à terme une valeur de tension de sortie égale à une consigne d'entrée désignée par Vref ou une valeur de courant égale à une consigne d'entrée désignée par Iref.

A cet effet, l'objet de l'invention a pour objet un convertisseur statique à architecture parallèle, comme défini par les revendications 1-8.

L'invention a également pour objet un convertisseur statique à architecture série, comme défini par les revendications 9-15.

L'invention sera mieux comprise à la lecture de la description de plusieurs formes de réalisation qui va suivre, donnée à titre d'exemple et faite en se référant aux dessins sur lesquels :

- la Figure 1 est une vue d'une première forme de réalisation générale d'un convertisseur statique à architecture parallèle et à CDM selon l'invention ;
- la Figure 2 est une vue d'une deuxième forme de réalisation d'un convertisseur statique à architecture parallèle et à CDM selon l'invention, dérivée de la première forme de réalisation générale décrite dans la Figure 1 et dans laquelle une régulation externe de la tension et du courant de sortie est mise en oeuvre par une boucle et un module externes, l'entrelacement des commande et l'équilibrage des courants de branches sont mis en œuvre par des unités locales d'équilibrage des courants de branche ;
- la Figure 3 est une vue d'un schéma général de mise en œuvre de l'équilibrage des courants de branche par les unités locales d'équilibrage des courants décrites à la Figure 2 ;
- la Figure 4 est une vue d'un schéma de mise en œuvre de la régulation externe de la tension et du courant de sortie par la boucle et le module externes, décrits à la Figure 2 ;
- la Figure 5 est une vue d'une variante de la mise en œuvre structurelle de la régulation externe décrite dans la Figure 4, par un module de régulation externe de type AVP (en anglais Adaptative Voltage Positioning) ;
- la Figure 6 est une vue de la réalisation du module externe de régulation externe de type AVP, décrit dans la Figure 5, à l'aide d'un amplificateur opérationnel ;
- la Figure 7 est une vue d'une troisième forme de réalisation du convertisseur statique à architecture parallèle et à CDM, dérivée de la première forme de réalisation décrite dans la Figure 2, et dans laquelle chaque module de contrôle dispose d'une d'unité de régulation interne locale de type AVP, d'un contrôle de l'entrelacement des commandes et d'une unité locale d'équilibrage des courants des sortie ;
- la Figure 8 est un schéma de mise en œuvre, du convertisseur statique à architecture parallèle et à CDM de la Figure 7 et pour chaque module de contrôle, de la régulation locale interne de type AVP couplée à un équilibrage local des courants de branche ;
- la Figure 9 est une vue d'une quatrième forme de réalisation du convertisseur à architecture parallèle, dérivée de la première forme de réalisation de la Figure 2 et de la troisième forme de réalisation de la Figure 7, dans laquelle chaque module de contrôle dispose d'une unité de régulation interne de la tension de sortie de type AVP en étant dépourvu d'une unité locale d'équilibrage des courants de branche ;
- la Figure 10 est un schéma de mise en œuvre des régulations locales internes en tension de type AVP décrites à la Figure 9 ;
- la Figure 11 est une vue d'un exemple de moyens de reconfiguration automatique de la chaîne de communication entre modules, appliqués à la fonction de génération de porteuses triangulaires dans le cas de la suppression d'un module de la chaîne ;
- la Figure 12 est une vue d'un exemple des interfaces de communications d'un module de contrôle et des données échanges entre modules adjacents au sein de la chaîne de communication ;
- la Figure 13 est une vue d'une configuration particulière des inductances de lissage de sortie des branches dans laquelle des couplages magnétiques sont mis en œuvre, et d'un mode de mesure différentielle des courants de deux branches de sortie adjacentes ;
- les Figures 14 et 15 sont des vues d'une première forme de réalisation générale d'un convertisseur statique à architecture série et à CDM selon l'invention ;
- la Figure 16 est une vue générique d'une cellule de commutation de rang i du convertisseur statique à architecture série des Figures 14 et 15, dans laquelle les paramètres mesurables permettant d'obtenir la tension cellule de la cellule de rang i sont mis en évidence ;
- la Figure 17 est une vue d'une deuxième forme de réalisation d'un convertisseur statique à architecture série et à CDM selon l'invention, dérivée de la première forme générale décrite dans les Figures 14, 15, et dans laquelle une régulation externe de la tension et du courant de sortie est mise en oeuvre par une boucle et un circuit externes, l'entrelacement des commandes et un équilibrage des tensions cellules des cellules de commutation sont mis en œuvre par des unités locales ;

- la Figure 18 est une vue d'un schéma général de mise en œuvre de l'équilibrage des tensions cellule et de la régulation externe de la tension et du courant de sortie par la boucle et le module externes décrits à la Figure 17 ;
- la Figure 19 est une vue d'une troisième forme de réalisation du convertisseur statique à architecture série et à CDM, dérivée de la première forme de réalisation de la Figure 15, et dans laquelle chaque module de contrôle dispose d'une unité locale de régulation interne du courant d'entrée de type ACP (en anglais Adaptative Current Positioning), de la gestion de l'entrelacement des commandes et d'une unité locale d'équilibrage des tensions cellule des cellules de commutation ;
- la Figure 20 est un schéma de mise en œuvre de la CDM pour le convertisseur statique à architecture série de la Figure 19, de la régulation locale interne du courant d'entrée, de type ACP et de l'équilibrage local des tensions cellule des cellules de commutation ;
- la Figure 21 est une vue de la réalisation de la régulation locale interne du courant d'entrée, de type ACP et décrite à la Figure 20, à l'aide d'un amplificateur opérationnel ;
- la Figure 22 est une vue d'une quatrième forme de réalisation du convertisseur statique à architecture série et à CDM, dérivée de la troisième forme de réalisation de la Figure 19, et dans laquelle chaque module de contrôle dispose d'une d'unité locale de régulation interne du courant de sortie de type ACP, de la gestion de l'entrelacement des commandes et d'une unité locale d'équilibrage des tensions cellule des cellules de commutation ;
- la Figure 23 est un schéma de mise en œuvre par le convertisseur statique à architecture série de la Figure 22, de la régulation locale interne du courant de sortie, de type ACP et de l'équilibrage local des tensions cellule des cellules de commutation ;
- la Figure 24 est une vue d'une cinquième forme de réalisation du convertisseur statique à architecture série, dérivée de la troisième forme de réalisation de la Figure 19, et dans laquelle chaque module de contrôle dispose d'une d'unité locale de régulation interne du courant d'entrée de type ACP, d'un dispositif de gestion de l'entrelacement des commandes en étant dépourvu d'une unité locale d'équilibrage des tensions cellule des cellules de commutation ;
- la Figure 25 est un schéma de mise en œuvre par le convertisseur statique à architecture série de la Figure 24, de la régulation locale interne du courant d'entrée de type ACP en étant dépourvu d'unités d'équilibrage local des tensions cellule des cellules de commutation ;
- la Figure 26 est une vue d'une sixième forme de réalisation du convertisseur statique à architecture série et à CDM, dérivée de la quatrième forme de réalisation de la Figure 22, et dans laquelle chaque module de contrôle dispose d'une d'unité locale de régulation interne du courant de sortie de type ACP, d'un dispositif de gestion de l'entrelacement des commandes en étant dépourvu d'une unité locale d'équilibrage des tensions cellule des cellules de commutation ;
- la Figure 27 est une vue d'un schéma de mise en œuvre de la CDM pour le convertisseur statique à architecture série de la Figure 26, de la régulation locale interne du courant de sortie de type ACP en étant dépourvu d'unités d'équilibrage local des tensions cellule des cellules de commutation.

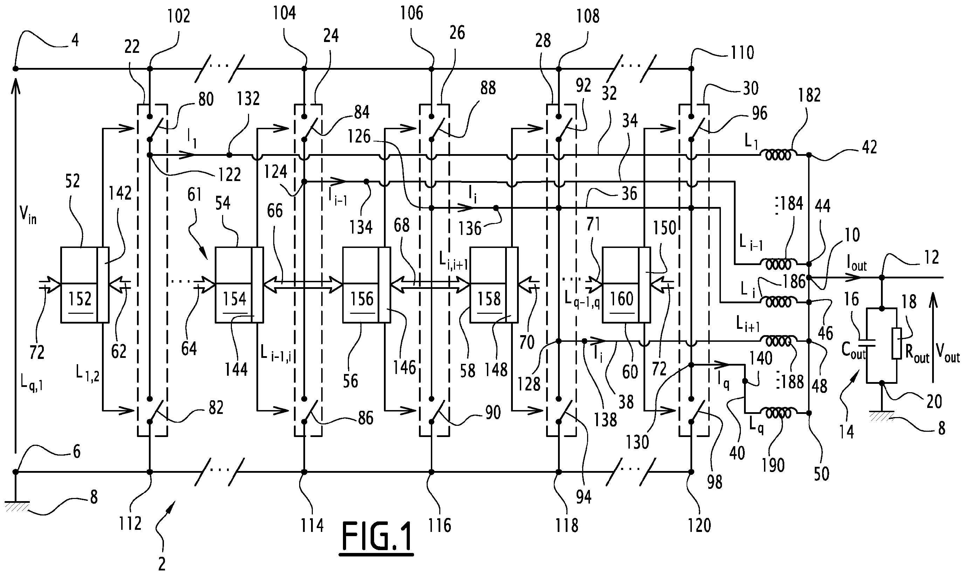

Suivant la Figure 1, un convertisseur statique à architecture parallèle 2, comprend une première borne d'entrée d'alimentation 4 et une deuxième borne d'entrée d'alimentation 6, raccordées à une source d'alimentation, non représentée, sous une tension Vin, la deuxième borne d'entrée 6 d'alimentation étant mise à une masse 8.

Le convertisseur statique 2 comprend une borne de sortie 10, raccordée à une première extrémité 12 d'une charge de sortie 14 modélisée par une capacité de sortie 16 de valeur Cout et une résistance de sortie 18 de valeur Rout mises en parallèle, une deuxième extrémité 20 de la charge de sortie 14 étant raccordée à la masse 8, et la résistance de sortie étant traversée par un courant de sortie Iout.

Le convertisseur statique 2 comprend également :

- un nombre entier total q de cellules de commutation 22, 24, 26, 28, 30, disposées en parallèle,
- un même nombre total q branches de sortie 32, 34, 36, 38, 40, reliées en commun suivant des premières extrémités 42, 44, 46, 48, 50 à la borne de sortie 10,
- un même nombre total q de modules de contrôle 52, 54, 56, 58, 60,
- une chaîne de communication 61 ayant un même nombre q de liaisons de communication 62, 64, 66, 68, 70, 72 reliant suivant une boucle fermée (en anglais Daisy chain) les modules de contrôle 52, 54, 56, 58, 60.

De manière générale, le nombre total q est supérieur ou égal à 3.

Chaque cellule de commutation électronique est associée respectivement à un module de contrôle unique et différent et à une branche de sortie unique est différent.

Un module de contrôle quelconque, un cellule de commutation quelconque, une branche de sortie quelconque, associés entre eux son repérés par un même rang entier de positionnement au sein de la chaîne de communication, unique et différent, compris entre 1 et q.

A titre d'exemple sur la Figure 1, le nombre total q commun de cellules de commutation, de modules de contrôle, et de branches de sortie est supérieur ou égal à 7. Seuls, cinq modules sont représentés, un premier module de contrôle 52 ayant un rang i égal à 1, un deuxième module 56 étant un module générique ayant un rang d'indice courant i, un troisième module 54 ayant un rang d'indice i-1 et étant un module générique adjacent précédent le module générique 56 dans la chaîne de communication 61, un quatrième module 58 ayant un rang d'indice i+1 et étant un module générique adjacent succédant au module générique 56 dans la chaîne, un cinquième module de contrôle 60 ayant un rang i égal à q et étant un module adjacent précédent le premier module générique 52 de rang 1.

Deux modules de contrôle adjacents quelconques de la chaîne de communication 61, ayant respectivement les rang i et i+1 au sein de la chaîne de communication 61 sont reliés par une liaison de communication unique et différente, désignée par Li,i+1.

Il est à remarquer que dans la structure minimale d'un convertisseur à trois modules de contrôle et à trois cellules de commutation, le module adjacent successeur au module de rang 3 est le module de rang 1, et le module de rang adjacent précédent le rang de module 1 est le module de rang 3.

Il est à remarquer également que le rang de positionnement i dépend seulement de l'ordre fixé par la connectivité des modules de contrôle au sein de la boucle formant la chaîne de communication 61 et ne dépend pas d'un ordre fixé par la disposition spatiale relative des cellules de commutation entre elles.

Les cellules de commutation 22 ; 24 ; 26 ; 28 ; 30 comprennent respectivement chacune une paire unique et différente d'interrupteurs électroniques 80, 82 ; 84, 86 ; 88, 90 ; 92, 94 ; 96, 98 ; reliés en série, une première borne d'alimentation 102 ; 104 ; 106 ; 108 ; 110 ; une deuxième borne d'alimentation 112 ; 114 ; 116 ; 118 ; 120, et une borne de sortie intermédiaire 122 ; 124 ; 126 ; 128 ; 130 ; unique et différente, commune respectivement aux deux interrupteurs électroniques associés 80, 82 ; 84, 86 ; 88, 90 ; 92, 94 ; 96, 98 et reliée respectivement à une deuxième extrémité 132 ; 134 ; 136 ; 138 ; 140 ; de la branche de sortie associée 32, 34, 36, 38, 40.

Les premières bornes d'alimentation 102 ; 104 ; 106 ; 108 ; 110 et les deuxièmes bornes d'alimentation 122 ; 124 ; 126 ; 128 ; 130 sont connectées respectivement à la première borne d'entrée d'alimentation 4 et à la deuxième borne d'entrée d'alimentation 6.

Chaque module de contrôle 52, 54, 56, 58, 60 comprend respectivement une unité de pilotage amplifiée 142, 144, 146, 148, 150 des deux interrupteurs de la cellule de commutation correspondante 22, 24, 26, 28, 30, et une unité locale 152, 154, 156, 158, 160, unique et différente, de génération d'une porteuse propre triangulaire en tension.

Chaque unité locale de génération de la porteuse triangulaire d'un module de contrôle quelconque ayant un rang courant i est configuré pour contrôler le positionnement de sa phase d'entrelacement au sein de la totalité des porteuses triangulaires entrelacées en fonction seulement des signaux des porteuses triangulaires des deux modules adjacents au module quelconque de rang i et ayant les rangs respectifs i-1, i+1, fournis par les deux modules adjacents i-1, i+1 au module quelconque de rang i au travers des deux liaisons de communication correspondantes $L_{i-1,i}$ et $L_{i,i+1}$. Le rang de positionnement i est compris entre 1 et q avec i-1 égal à q lorsque i égal à q et i+1 égal à 1 lorsque i est égal à q.

Ainsi, par exemple l'unité locale 152 de génération de la porteuse triangulaire du premier module de contrôle 52 de rang 1 est configuré pour contrôler le positionnement de sa phase d'entrelacement au sein de la totalité des porteuses triangulaires entrelacées en fonction seulement des signaux des porteuses triangulaires de ses deux modules adjacents ayant les rangs respectifs q, 2, fournis par les deux modules adjacents q, 2 au premier module 52 au travers des deux liaisons de communication correspondantes 72, 62, désignés par $L_{q,1}$ et $L_{1,2}$.

De même l'unité locale 160 de génération de la porteuse triangulaire du cinquième module de contrôle 60 de rang q est configurée pour contrôler le positionnement de sa phase d'entrelacement au sein de la totalité des porteuses triangulaires entrelacées en fonction seulement des signaux des porteuses triangulaires de ses deux modules adjacents ayant les rangs respectifs q-1, 1, fournis par les deux mêmes modules adjacents q-1, 1 au cinquième module 160 de rang q au travers des deux liaisons de communication correspondantes 71, 72, désignés par $L_{q-1,q}$ et $L_{q,1}$.

Chaque module de contrôle 52, 54, 56, 58, 60 comprend une unité locale d'équilibrage des courants, non représentée sur la Figure 1, et/ou une unité de régulation interne de la tension de sortie de type AVP, non représentée sur la Figure 1.

Chaque unité locale d'équilibrage des courants d'un module quelconque de rang i est configurée pour déterminer une correction de rapport cyclique di en fonction seulement de la différence entre la moyenne des valeurs des deux courants, notés $I_{i-1}$, $I_{i+1}$, traversant les deux branches des cellules de commutation dont les modules sont adjacents au module quelconque de rang i et la valeur du courant li traversant la branche connectée à la cellule de commutation associée au module quelconque de rang i.

Chaque unité de régulation interne de la tension de sortie de type AVP d'un module quelconque i est configurée au travers de la mise en œuvre d'une boucle propre en tension et/ou en courant pour déterminer un rapport cyclique propre Di, la détermination de Di étant fonction d'un produit de la valeur du courant li traversant la branche connectée à la cellule de commutation associée au module quelconque et d'un facteur de pente $\alpha i$ dépendant du rang du module.

Le réglage de ce facteur $\alpha i$ permet d'ajuster correctement la pente de la caractéristique $V_{out}=f(I_{out})$ que procure la régulation de type AVP.

Chaque branche de sortie 32, 34, 36, 38, 40 et de rang 1,i-1, i, i+1, q comprend au moins une inductance de lissage, respectivement désigné par 182, 184, 186, 188, 190, une fraction du courant de sortie traversant la branche, respectivement noté $I_1$, $I_{i-1}$, $I_i$, $I_{i+1}$, $I_q$, les inductances de deux branches quelconques adjacentes étant dépourvues ici de couplage entre elles.

Ainsi, l'association dans chaque module des fonctions de régulation de la tension de sortie de type AVP, de l'équilibrage des courants de branche et de la génération des porteuses avec gestion de leur entrelacement permet d'obtenir un contrôle entièrement décentralisé d'un convertisseur parallèle comportant un nombre q quelconque de cellules de commutation. Aucun organe de contrôle centralisé n'est plus alors nécessaire.

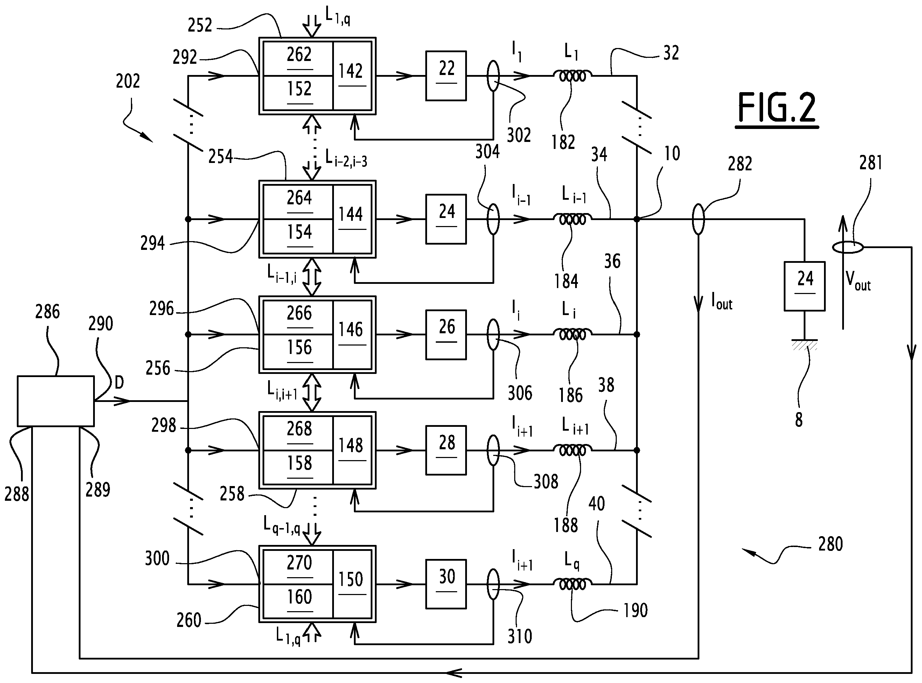

Suivant la Figure 2, une deuxième forme de réalisation 202 de la CDM du convertisseur statique comprend des composants identiques à ceux décrits à la Figure 1 qui portent les mêmes références numériques et qui sont agencés suivant la même architecture.

Le convertisseur statique 202 à architecture parallèle comprend des modules de contrôle 252, 254, 256, 258, 260, associés chacun à une branche de sortie 32, 34, 36, 38, 40 unique et différente, et ayant respectivement les mêmes unités de pilotage amplifié 142, 144, 146, 148, 150 et les mêmes unités locales 152, 154, 156, 158, 160 de génération d'une porteuse propre triangulaire en tension.

Chaque module de contrôle 252, 254, 256, 258, 260 comprend ici respectivement unité locale d'équilibrage des courants 262, 264, 266, 268, 270 en étant dépourvu d'unité locale de régulation interne de la tension de sortie de type AVP.

Chaque unité locale d'équilibrage des courants d'un module quelconque i, i variant de 1 à q, est configurée pour déterminer une correction de rapport cyclique di en fonction seulement de la différence entre la moyenne des valeurs des deux courants $I_{i-1}$, $I_{i+1}$ traversant les deux branches des cellules de commutation dont les modules sont adjacents au module quelconque et la valeur du courant Ii traversant la branche connectée à la cellule de commutation associée au module quelconque,

Le convertisseur statique 202 comprend une boucle principale externe 280 en tension et en courant dans laquelle la tension de sortie Vout et le courant de sortie Iout sont des observables dont les images sont prélevées respectivement par une prise de tension 281 et une prise de courant 282.

Le convertisseur statique 202 comprend un module de régulation externe 286 ayant une première borne d'entrée 288, une deuxième borne d'entrée 289 et une borne de sortie 290.

La première borne d'entrée 288 et la deuxième borne d'entrée 289 sont connectées respectivement à la prise de tension 281 et à la prise de courant 282 pour recevoir un signal de mesure représentatif de la tension de sortie Vout et un signal de mesure représentatif du courant de sortie Iout.

Le module externe de régulation externe 286 est configuré pour déterminer un rapport cyclique D de mode commun aux branches de sortie à partir de la mesure de la tension de sortie Vout et de la mesure du courant de sortie Iout, et à partir d'une tension de référence Vref.

La borne de sortie 290 du module externe de régulation 286 est connectée de manière partagée à chaque module de contrôle local 252, 254, 256, 258, 260 au travers d'une borne d'entrée, unique et différente, 292, 294, 296, 298, 300 associée pour fournir le même rapport cyclique D de mode commun aux cellules de commutation 22, 24, 26, 28, 30.

Chaque branche 32, 34, 36, 38, 40, associée au module 252, 254, 256, 258, 260 de rang respectif 1, i-1, i, i+1, q comprend ici une unique et différente prise individuelle 302, 304, 306, 308, 310 de mesure du courant $I_1$, $I_{i-1}$, $I_i$, $I_{i+1}$, $I_q$ traversant respectivement la branche de sortie 32, 34, 36, 38, 40.

Chaque prise individuelle de courant 302, 304, 306, 308, 310 est connectée ici à son module de contrôle associé 252, 254, 256, 258, 260 pour fournir à l'unité locale d'équilibrage des courants 262, 264, 266, 268, 270 la mesure de courant $I_1$, $I_{i-1}$, $I_i$, $I_{i+1}$, $I_q$ de la branche de sortie 32, 34, 36, 38, 40 correspondante.

En variante, lorsqu'un module de contrôle quelconque parmi l'ensemble des modules 252, 254, 256, 258, 260, par exemple le module 256 de rang i, comprend une unité locale d'équilibrage des courant 266 en étant dépourvu d'unité de régulation interne de la tension de sortie de type AVP, ce qui est le cas sur la Figure 2, la branche 36 associée de rang i comprend deux prises de mesures différentielles entre le courant Ii traversant la branche 36 et les courants $I_{i-1}$, $I_{i+1}$ traversant les deux branches 34, 38, associées respectivement aux modules 254, 258 adjacents au module 36.

Chaque module de contrôle 252, 254, 256, 258, 260 comprend un circuit additionneur associé, unique et différent, pour calculer un rapport cyclique corrigé $D'_1$, $D'_{i-1}$, $D'_i$, $D'_{i+1}$, $D'_q$, comme la somme du rapport cyclique D de mode commun et de la correction de rapport cyclique respective $d_1$, $d_{i-1}$, $d_i$, $d_{i+1}$, $d_q$ déterminée par l'unité locale d'équilibrage des courants correspondante 262, 264, 266, 268, 270.

Ainsi, l'association dans chaque module des fonctions de l'équilibrage des courants de branche et de la génération des porteuses avec gestion de leur entrelacement permet de réduire considérablement la connectique nécessaire entre l'organe de contrôle centralisé et les cellules de commutation. Dans ce cas, un seul fil portant l'information commune du rapport cyclique de mode commun calculé dans le circuit externe est nécessaire. Cette information est transmise sous forme de tension.

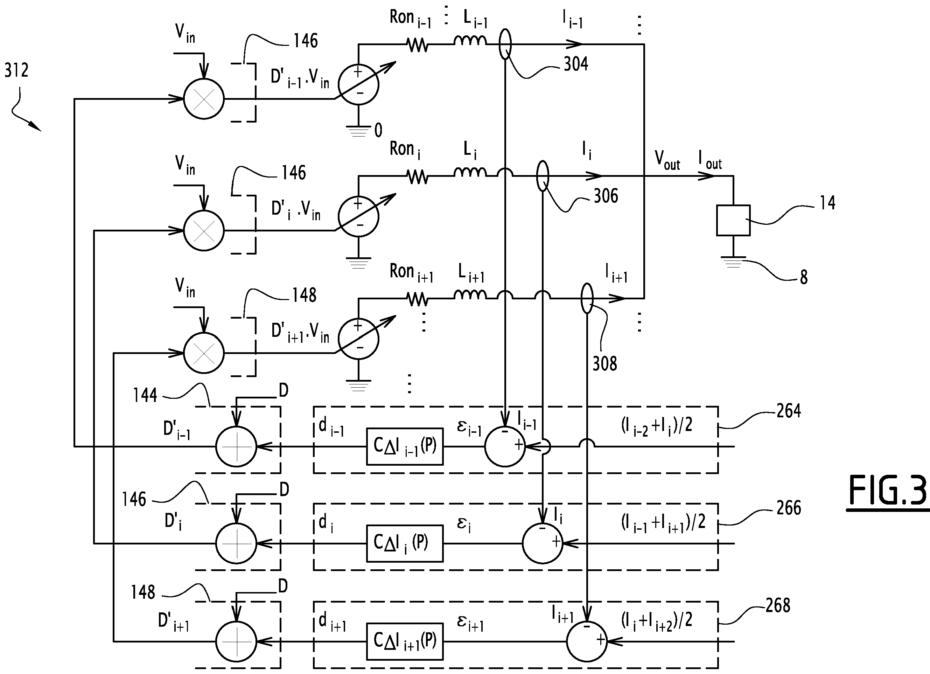

Suivant la Figure 3, un schéma simplifié 312 du convertisseur statique 202 de la Figure 2, représente de manière plus détaillée la mise en œuvre de l'équilibrage des courants des branches de sortie par les unités locales d'équilibrage des courants décrites à la Figure 2.

Ici, seules sont représentées les unités locales d'équilibrage des courants 264, 266, 268 associées respectivement aux modules de contrôle 264, 266, 268 de rang respectif i-1, i, i+1.

Chaque unité locale d'équilibrage des courants 264, 266, 268 est configurée pour déterminer respectivement les courants moyennés localement $(I_{i-2} + I_i)/2$, $(I_{i-1} + I_{i+1})/2$, $(I_i + I_{i+2})/2$, à partir de la donnée de couples de mesures des courants adjacents $(I_{i-2}, I_i)$, $(I_{i-1}, I_{i+1})$, $(I_i, I_{i+2})$, encadrant respectivement les courants $I_{i-1}$, $I_i$, $I_{i+1}$ et fournies respectivement par les paires de liaison $(L_{i-2,i-1}; L_{i-1,i})$, $(L_{i-1,i}; L_{i,i+1})$, et $(L_{i,i+1}; L_{i+1,i+2})$.

Chaque unité locale d'équilibrage des courants 264, 266, 268 comprend respectivement un circuit soustracteur, unique et différent, pour calculer un signal de différence $\varepsilon_{i-1}$, $\varepsilon_i$, $\varepsilon_{i+1}$ avec pour i donné :

$$\varepsilon_i = \frac{(I_{i-1} + I_{i+1})}{2} - I_i,$$

$I_i$ étant le courant traversant la branche associée au module de contrôle de rang i,

$I_{i-1}$ et $I_{i+1}$ étant les courants traversant les branches associées aux modules de contrôle de rang i-1 et i+1, adjacents au module de contrôle de rang i, en terme de positionnement dans la chaîne de communication 61.

Chaque unité locale d'équilibrage des courants 264, 266, 268 comprend également un filtre de conversion, unique et différent, caractérisé par sa fonction de transfert propre $C\Delta I_{i-1}(p)$, $C\Delta I_i(p)$, et $C\Delta I_{i+1}(p)$, pour convertir la signal de différence $\varepsilon_{i-1}$, $\varepsilon_i$, et $\varepsilon_{i+1}$, en la correction de rapport cyclique correspondante $d_{i-1}$, $d_i$, et $d_{i+1}$.

Chaque unité de pilotage amplifiée 144, 146, 148 du module de contrôle correspondant 254, 256, 258 comprend un circuit additionneur associé, unique et différent, pour calculer un rapport cyclique corrigé $D'_{i-1}$, $D'_i$, $D'_{i+1}$ respectivement égal à

$D+d_{i-1}$, $D+d_i$, $D+d_{i+1}$, D désignant le rapport cyclique commun fourni par le module externe 286 de régulation externe décrit à la Figure 1.

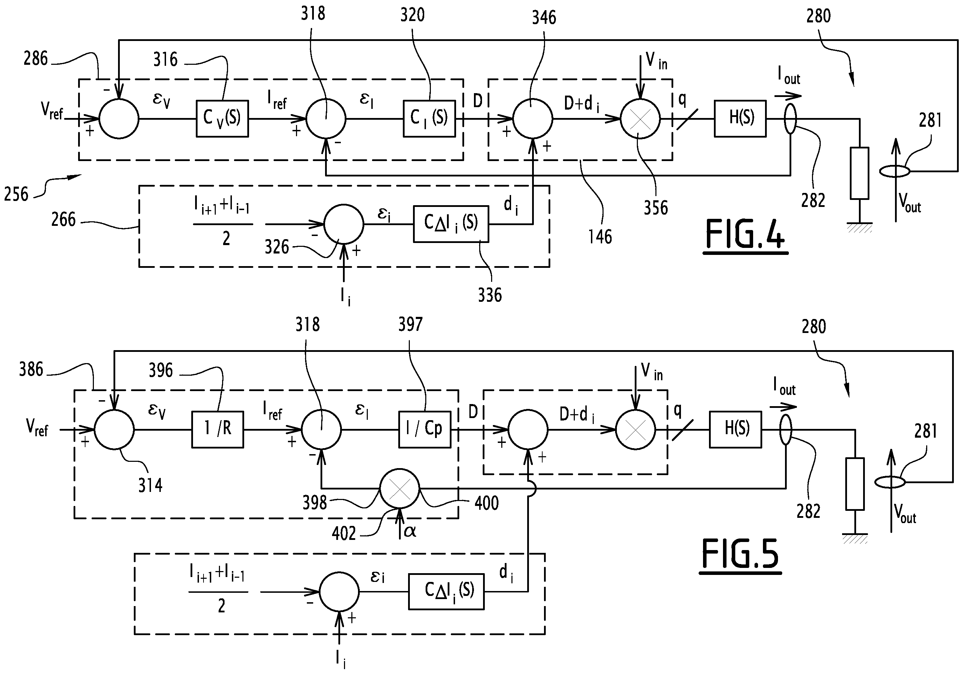

Suivant la Figure 4, la mise en œuvre structurelle de la régulation externe de la tension et du courant de sortie Vout, Iout par la boucle et le module externes 286, décrits à la Figure 2, est décrite de manière plus détaillée.

A titre d'exemple, le module de contrôle 256 de rang i est représenté partiellement avec son unité de pilotage amplifiée 146 et son unité locale d'équilibrage des courants 266.

Les interfaces d'interaction entre l'unité de pilotage amplifiée 146, l'unité locale d'équilibrage des courants 266, et le module externe 286 de régulation externe en tension et courant de sortie, sont représentées également.

Le module de régulation externe 286 en tension de sortie Vout est ici classique en terme d'absence d'un contrôle externe de type AVP, et comprend un premier circuit soustracteur 314 à deux entrées positive et négative, désignées respectivement par les signes + et -, un premier filtre 316 de conversion d'une tension d'erreur de mode commun $\varepsilon_V$ en un courant de référence Iref, un deuxième circuit soustracteur 318 à deux entrées positive et négative, désignées respectivement par les signes + et -, et un deuxième filtre 320 de conversion d'un courant d'erreur de mode commun $\varepsilon_I$ en le rapport cyclique D de mode commun aux cellules de commutation 22, 24, 26, 28 et branches de sortie correspondantes.

La structure de l'unité locale d'équilibrage des courants 266 est identique à celle décrite à la Figure 3, le circuit soustracteur de calcul du signal de courant différentiel local $\varepsilon_i$, et le filtre de conversion, caractérisé par sa fonction de transfert propre $C\Delta I_i(p)$, pour convertir le signal de courant différentiel $\varepsilon_i$ en la correction de rapport cyclique correspondante $d_i$, étant respectivement désignés par les références numériques 326, 336.

La structure de unité de pilotage amplifiée 146 est identique à celle décrite à la Figure 3, le circuit additionneur de calcul du rapport cyclique corrigé $D'_i$, égal à $D+d_i$, étant désigné ici par la référence numérique 346, et ayant des première et deuxième bornes d'entrée, désignées par un signe + différent. La première borne d'entrée est connectée à l'unité de régulation externe 286 pour recevoir le rapport cyclique commun D, tandis que la deuxième borne d'entrée est connectée à l'unité locale d'équilibrage des courants 266 pour recevoir la correction de rapport cyclique $d_i$ correspondant au module de contrôle de rang i.

Lorsque le module de régulation externe 286 fonctionne, le premier circuit soustracteur 314 calcule la différence entre la tension de référence prédéterminée Vref et la tension de sortie Vout mesurée par la prise de mesure 281. Cette différence formant la tension d'erreur de mode commun $\varepsilon_V$ est convertie en un courant de référence Iref par le premier filtre de conversion 316 caractérisé par une fonction de transfert notée $C_V(s)$.

Le signal de courant de référence Iref et le signal du courant de sortie Iout du convertisseur, mesuré par la prise de courant 282, sont respectivement injectés à la borne d'entrée positive et à la borne d'entrée négative du deuxième circuit soustracteur 318.

Le deuxième circuit soustracteur 318 calcule la différence (Iref - Iout) entre le signal de courant de référence Iref et le signal du courant de sortie Iout, pour former le courant d'erreur de mode commun $\varepsilon_I$. Le courant d'erreur de mode commun $\varepsilon_I$ est converti en le rapport cyclique D de mode commun par le deuxième filtre de conversion 320 caractérisé par une fonction de transfert notée $C_I(s)$.

En variante, l'unité de régulation externe 286 est dépourvue d'un contrôle interne de type AVP, et la régulation externe mise en œuvre est, soit une régulation externe en tension de sortie fondée sur la mesure de la tension de sortie, soit une régulation externe en courant de sortie fondée sur la mesure du courant de sortie

Suivant la Figure 5, une variante de la mise en œuvre structurelle de la régulation externe de la tension et du courant de sortie Vout, Iout décrite dans la Figure 4 est représentée dans laquelle le module externe 286 classique est remplacé par un module de régulation externe 386 de type AVP.

A l'instar du module de régulation externe 286, le module externe 386 comprend à l'identique le premier circuit soustracteur 314 à deux entrées et le deuxième circuit soustracteur 318 à deux entrées.

Le module de régulation externe 386 comprend un premier filtre 396 de conversion de la tension d'erreur de mode commun $\varepsilon_V$ en un courant de référence Iref, connecté à l'identique du premier filtre 316 entre le premier circuit soustracteur 314 et le deuxième circuit soustracteur 318, et dont la fonction de transfert $C_V(s)$ est ici une fonction particulière de type proportionnel ayant un gain égal à 1/R, R étant une première constante prédéterminée.

Le module de régulation externe 386 comprend un deuxième filtre 397 de conversion d'un courant d'erreur de mode commun $\varepsilon_I$ en le rapport cyclique D de mode commun aux branches de sortie, connecté à l'identique du deuxième filtre 316 entre le deuxième circuit soustracteur 318 et la borne de sortie destinée à fournir le même rapport cyclique de mode commun D aux circuits additionneurs des unités de pilotage, en particulier l'additionneur 346 représenté sur la Figure 5. La fonction de transfert $C_I(s)$ caractérisant le deuxième filtre 397 est ici une fonction particulière de type intégrateur égale à 1/Cp, dans laquelle p désigne l'opérateur de Laplace, et C désigne une deuxième constante prédéterminée.

Le module de régulation externe 386 comprend également un circuit proportionnel 398 de facteur de pente $\alpha$ pour créer en sortie une source correctrice de courant $\alpha$.Iout à l'entrée négative du deuxième circuit soustracteur 318. Le circuit proportionnel 398 de facteur de pente $\alpha$ est représenté ici par un circuit multiplieur 398, connecté à la prise de courant de sortie 282 par une première entrée 400 et dont le facteur de pente $\alpha$ est fixé en étant injecté à une deuxième entrée 402.

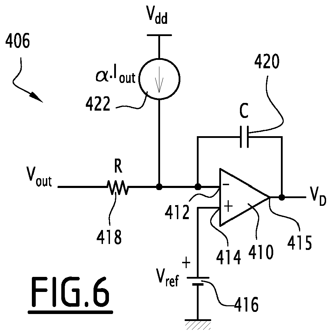

Suivant la Figure 6, le module externe de régulation décrit dans la Figure 5 est réalisé par exemple par circuit électronique 406 dont le cœur est un amplificateur opérationnel 410 ayant une première borne négative 412 de tension d'entrée, une deuxième borne positive 414 de tension d'entrée, et une borne de sortie 415.

Le circuit électronique 406 comprend une source de tension de référence Vref régulée 416, connectée à la deuxième borne positive 414, et une résistance d'entrée 418 de valeur R ayant une première extrémité connectée à la première borne négative 412 et une deuxième extrémité connectée à la prise de mesure de la tension de sortie pour recevoir le signal de mesure correspondant Vout.

Le circuit électronique 406 comprend également une capacité 410 de valeur C, connectée en rétroaction entre la borne de sortie 415 et la première borne négative 412 de l'amplificateur opérationnel 410, et un générateur de courant $\alpha$.Iout modulé linéairement par le courant de sortie Iout, c'est-à-dire le courant de la charge 14, avec le facteur de pente $\alpha$.

En régime statique, la tension de sortie Vout vérifie la relation :

$$V_{out} = V_{ref} - \alpha.R.I_{out} \quad \text{(relation 1)}$$

En régime dynamique la tension $V_D$, représentative du rapport cyclique D de mode commun, vérifie la relation :

$$V_D(p) = -\frac{1}{C.p}.\frac{V_{out}(p)}{R} - \frac{1}{C.p}.\alpha.I_{out}(p) \quad \text{(relation 2)},$$

dans laquelle p désigne l'opérateur de Laplace.

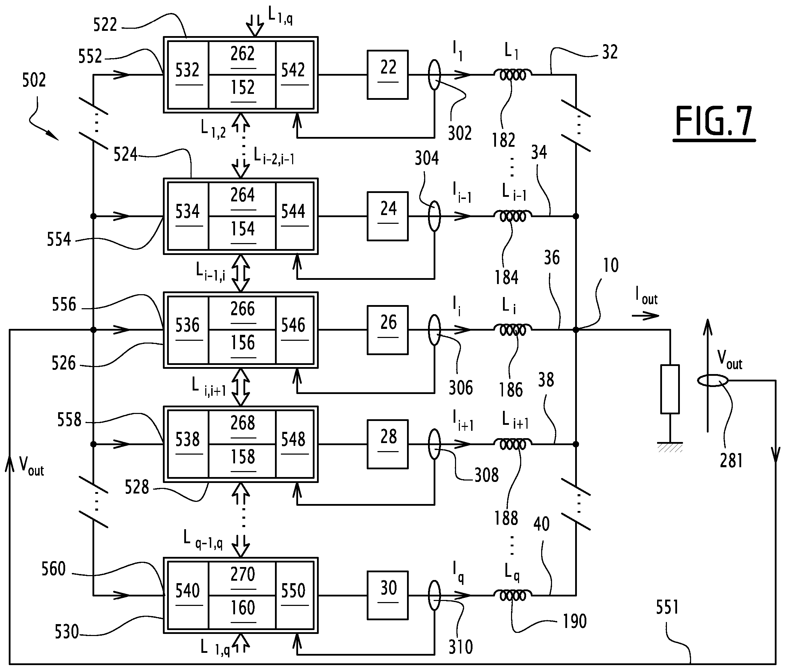

Suivant la Figure 7, une troisième forme de réalisation 502 de la CMD du convertisseur statique selon l'invention est dérivée de la première forme de réalisation décrite à la Figure 2 pour laquelle les composants, lorsqu'ils sont identiques à ceux décrits sur la Figure 1, portent les mêmes références numériques.

Le convertisseur statique 502 comprend des modules de contrôle 522, 524, 526, 528, 530 qui remplacent respectivement les modules de contrôle 252, 254, 256, 258, 260, décrits à la Figure 2 et associés respectivement aux branches de sortie 32, 34, 36, 38, 40.

A l'instar du convertisseur statique 202 de la Figure 2, chaque module de contrôle 522, 524, 526, 528, 530 comprend respectivement la même unité locale 152, 154, 156, 158, 160 de génération d'une porteuse propre triangulaire en tension, et la même unité locale d'équilibrage des courants de branche 262, 264, 266, 268, 270.

A la différence du convertisseur statique 202 de la Figure 2, chaque module de contrôle, 522, 524, 526, 528, 530 comprend une unité locale 532, 534, 536, 538, 540 de régulation interne de la tension de sortie, de type AVP, et une unité de pilotage amplifiée 542, 544, 546, 548, 550 qui diffère de l'unité de pilotage amplifiée 142, 144, 146, 148, 150 de la Figure 2.

A la différence du convertisseur statique 202 de la Figure 2, les unités de pilotage amplifié 542, 544, 546, 548, 550 sont les unités de pilotage amplifié 142, 144, 146, 148, 150 de la Figure 2, dans lesquelles l'additionneur d'entrée a été supprimé.

A la différence du convertisseur statique 202 de la Figure 2, la boucle principale 280 de régulation externe en mode commun de la tension Vout et du courant de sortie Iout et le module externe 286 de régulation externe sont supprimés et remplacés par une pluralité de régulations locales internes de type AVP, mises en œuvre en interne des modules de contrôle 522, 524, 526, 528, 530.

La mise en œuvre oeuvre des régulations locales internes requiert toutefois la distribution à tous les modules de contrôle de l'information concernant la tension de sortie du convertisseur 502 prélevée par la prise de mesure 281.

A cette fin, le convertisseur comprend un réseau formant un bus 551 de fourniture de l'information de tension de sortie Vout à chacun des modules de contrôle 522, 524, 526, 528, 530 en une borne d'entrée respective, unique et différente, 552, 554, 556, 558, 560.

Chaque unité locale de régulation interne de la tension de sortie de type AVP 532, 534, 536, 538, 540 comprend respectivement une boucle de régulation interne en tension de type AVP, unique et différente, configurée pour déterminer un rapport cyclique propre $D_1$, $D_{i-1}$, $D_i$, $D_{i+1}$, $D_q$ à partir de la mesure de la tension de sortie Vout, de la mesure du courant de sortie respectif $I_1$, $I_{i-1}$, $I_i$, $I_{i+1}$, $I_q$ traversant la branche de sortie 32, 34, 36, 38, 40 correspondante, de la tension de référence Vref, et d'un facteur propre de pente corrigée $\alpha_1$, $\alpha_{i-1}$, $\alpha_i$, $\alpha_i$ et $\alpha_q$.

Chaque facteur de pente corrigée $\alpha_1$, $\alpha_{i-1}$, $\alpha_i$, $\alpha_i$ et $\alpha_q$ est proportionnel au produit d'un facteur de pente principal $\alpha$ de référence prédéterminé et du rapport cyclique respectif $d_1$, $d_{i-1}$, $d_i$, $d_{i+1}$, $d_q$, déterminé par l'unité locale d'équilibrage des courants correspondante 262, 264, 266, 268, 270, suivant un facteur de proportionnalité indépendant du rang i du module de contrôle.

Chaque rapport cyclique propre Di associé à un module de contrôle, i variant de 1 à q, est fonction de la différence entre un courant de référence Iref et le produit $\alpha_i.I_i$ du facteur de correction de pente $\alpha_i$ et de la valeur mesurée du courant $I_i$ de la branche de sortie, le courant de référence Iref étant proportionnel à la différence entre la tension de référence Vref et la valeur de la tension de sortie Vout mesurée suivant une constante de proportionnalité 1/R, sensiblement identique sur l'ensemble des modules de contrôle.

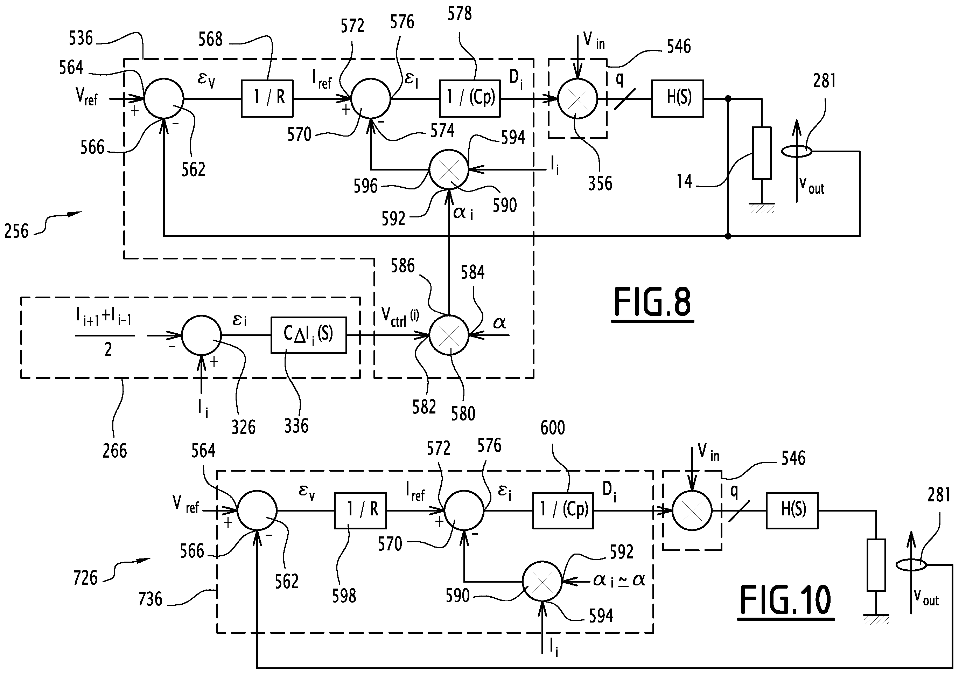

Suivant la Figure 8, la mise en œuvre structurelle des régulations locales internes de la tension de sortie Vout par les unités locales 532, 534, 536, 538, 540 de régulation interne de la tension de sortie, de type AVP, est décrite de manière plus détaillée.

A titre d'exemple et pour simplifier la Figure 8, seul le module de contrôle 526 de rang i est représenté partiellement avec son unité de pilotage amplifiée 546, son unité locale d'équilibrage des courants 266, et son unité locale 536 de régulation interne de la tension de sortie Vout.

Les interfaces d'interaction entre l'unité de pilotage amplifiée 546, l'unité locale d'équilibrage des courants 266 et le l'unité locale 536 de régulation interne de la tension de sortie Vout, sont représentées également.

La structure de l'unité locale d'équilibrage des courants 266 est identique à celle décrite aux Figures 4 et 5.

La structure de unité de pilotage amplifiée 546 est identique à celle décrite dans les Figures 4 et 5.

L'unité locale 536 de régulation interne de la tension de sortie comprend reliés en série un premier circuit soustracteur 562 à deux entrées positive 564 et négative 566 marquées respectivement sur la Figure 8 par les signes + et -, un premier filtre 568 de conversion de type proportionnel d'une tension d'erreur de mode commun $\varepsilon_V$ en un courant de référence Iref, un deuxième circuit soustracteur 570 à deux entrées positive 572 et négative 574, marquées respectivement par les signes + et -, et à une borne de sortie 576, et un deuxième filtre 320, de type intégrateur et de conversion d'un courant d'erreur de mode commun $\varepsilon_I$ en le rapport cyclique Di propre au module de rang i.

La fonction de transfert du premier filtre 568 de type proportionnel s'écrit 1/R, R étant une constante prédéterminée.

La fonction de transfert du deuxième filtre 578 de type intégrateur s'écrit 1/Cp, C étant une constante prédéterminée et p étant l'opérateur de Laplace.

L'unité locale 536 de régulation interne de la tension de sortie comprend également un circuit proportionnel 580 de modulation d'un facteur de pente moyen $\alpha$ pour créer en sortie un facteur de pente corrigé de valeur $\alpha_i$. Dans la pratique, le circuit proportionnel 580 est un amplificateur à gain constant a, connecté à son entrée à la sortie de l'unité locale d'équilibrage des courants 266. Sur la Figure 8, le circuit proportionnel 580 est représenté par un premier circuit multiplieur 580 ayant une première entrée 582 connectée à l'unité locale d'équilibrage des courants 266, une deuxième entrée 402 de réception du facteur de pente moyen α fixé, et une borne de sortie 586.

L'unité locale 536 de régulation interne de la tension de sortie comprend également un deuxième circuit multiplieur 590 ayant une première borne d'entrée 592, connectée à la borne de sortie 586 du circuit proportionnel 580, une deuxième borne d'entrée 594 connectée à prise de mesure du courant $I_i$ traversant la branche de rang i, et une borne de sortie 596 connectée à la borne négative 574 du deuxième circuit soustracteur 570.

Lorsque l'unité locale 536 de régulation interne fonctionne, le premier circuit soustracteur 562 calcule la différence entre la tension de référence prédéterminée Vref et la tension de sortie Vout mesurée par la prise de mesure de tension 281. Cette différence formant la tension d'erreur de mode commun $\varepsilon_V$ est convertie en un courant de référence Iref par le premier filtre de conversion 568, caractérisé par sa fonction de transfert 1/R.

L'unité locale d'équilibrage des courants 266 de rang i délivre un signal de correction de pente Vctr(i) qui est ensuite multiplié par le facteur de pente moyen α pour créer en sortie du premier multiplieur 580 un facteur de pente corrigé de valeur $\alpha_i$.

Le deuxième multiplieur 590 qui reçoit la valeur du facteur de pente corrigé $\alpha_i$ et la valeur du courant $I_i$ traversant la branche de rang i calcule le produit $\alpha_i.I_i$, lequel produit est fourni au deuxième circuit soustracteur 570.

L'unité locale 536 de régulation interne de la tension de sortie est réalisée par exemple par un circuit électronique de même structure que celui décrit à la Figure 6. Le cœur du circuit est un amplificateur opérationnel ayant une première borne négative de tension d'entrée, une deuxième borne positive de tension d'entrée, et une borne de sortie.

Le circuit électronique comprend une source de tension de référence Vref régulée, connectée à la deuxième borne positive, et une résistance d'entrée de valeur R ayant une première extrémité connectée à la première borne négative et une deuxième extrémité connectée à la prise de mesure de la tension de sortie pour recevoir le signal de mesure correspondant Vout.

Le circuit électronique comprend également une capacité de valeur C, connectée en rétroaction entre la borne de sortie et la première borne négative de l'amplificateur opérationnel, et un générateur de courant $\alpha_i.I_i$ modulé linéairement par le courant $I_i$ traversant la branche de rang i. Le facteur de pente corrigé $\alpha_i$ est fonction d'un facteur de pente moyen α commun à l'ensemble des modules et d'un facteur de correction de pente Vctr(i) propre au module de rang i. Le facteur de correction de pente Vctr(i) dépend de l'équilibrage local du courant $I_i$ traversant la branche de rang i avec ses deux courants adjacents $I_{i-1}$, $I_{i+1}$ traversant les branches de rand i-1 et i+1.

En régime statique, la tension de sortie Vout vérifie la relation :

$$V_{out} = V_{ref} - \alpha_i.R.I_i \text{ (relation 3)}$$

En régime dynamique, la tension $V_{Di}$ représentative du rapport cyclique $D_i$ de mode commun vérifie la relation :

$$V_{Di}(p) = -\frac{1}{C.p}.\frac{V_{out}(p)}{R} - \frac{1}{C.p}.\alpha_i.I_i(p) \qquad \text{(relation 4)}$$

dans laquelle p désigne l'opérateur de Laplace.

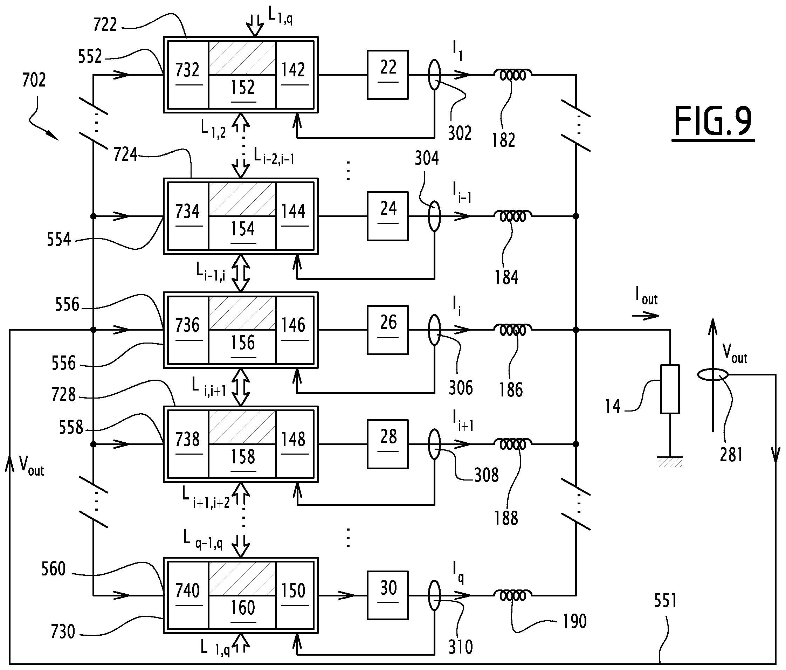

Suivant la Figure 9, une quatrième forme de réalisation 702 de la CMD du convertisseur statique selon l'invention, dérivée de la troisième forme de réalisation décrite dans la Figure 7, est représenté dans laquelle les composants, lorsqu'ils sont identiques à ceux décrits sur la Figure 7, portent les mêmes références numériques.

Le convertisseur statique 702 comprend des modules de contrôle 722, 724, 726, 728, 730 qui remplacent respectivement les modules de contrôle 522, 525, 526, 528, 530, associés respectivement aux branches de sortie 32, 34, 36, 38, 40.

A l'instar du convertisseur statique 502 de la Figure 7, chaque module de contrôle 722, 724, 726, 728, 730 comprend respectivement la même unité locale 152, 154, 156, 158, 160 de génération d'une porteuse propre triangulaire en tension, et la même unité de pilotage amplifiée 542, 544, 546, 548, 550.

A l'instar du convertisseur statique 502 de la Figure 7, la mise en œuvre oeuvre des régulations locales internes de type AVP requiert la distribution à tous les modules de contrôle 722, 724, 726, 728, 730 par le bus 551 de l'information concernant la tension de sortie Vout du convertisseur 702 prélevée par la prise de mesure 281.

A la différence du convertisseur statique 502 de la Figure 7, chaque module de contrôle, 722, 724, 726, 728, 730 est dépourvu d'une unité locale d'équilibrage des courants et comprend une unité locale 732, 734, 736, 738, 740 de régulation interne de la tension de sortie, de type AVP.

Chaque unité de régulation interne de la tension de sortie de type AVP 732, 734, 736, 738, 740 comprend respectivement une boucle de régulation interne en tension de type AVP, unique et différente, configurée pour déterminer un rapport cyclique propre $D_1$, $D_{i-1}$, $D_i$, $D_{i+1}$, $D_q$ à partir de la mesure de la tension de sortie Vout, de la mesure du courant de sortie respectif $I_1$, $I_{i-1}$, $I_i$, $I_{i+1}$, $I_q$ traversant la branche de sortie 32, 34, 36, 38, 40 correspondante, de la tension de référence Vref, et d'un facteur de pente propre $\alpha_1$, $\alpha_{i-1}$, $\alpha_i$, $\alpha_i$ et $\alpha_q$, sensiblement égal à une même valeur de facteur de pente moyen $\alpha$ prédéterminé.

Chaque rapport cyclique propre Di, associé à un module de contrôle, avec i variant de 1 à q, est fonction de la différence entre un courant de référence Iref et le produit $\alpha_i.I_i$ du facteur de pente $\alpha_i$ sensiblement égal à $\alpha$ et de la valeur mesurée du courant $I_i$ de la branche, le courant de référence Iref étant proportionnel à la différence entre la tension de référence Vref et la valeur de la tension de sortie Vout mesurée suivant une constante de proportionnalité 1/R, sensiblement identique sur l'ensemble des modules de contrôle.

Ainsi et par nature, la régulation de tension de type AVP au niveau de chaque branche offre un équilibrage naturel des courants des branches. Il se peut cependant que de légères disparités entre les valeurs des composants des électroniques de chaque module entraine de léger écarts sur les courants des branches. Si ces écarts sont tolérables (cas de convertisseurs à inductances non couplées entre elles), l'association dans chaque module des fonctions de régulation de la tension de sortie de type AVP et de la génération des porteuses avec gestion de leur entrelacement permet d'obtenir un contrôle entièrement décentralisé d'un convertisseur parallèle comportant un nombre q quelconque de cellules de commutation. Aucun organe de contrôle centralisé n'est plus alors nécessaire.

Suivant la Figure 10, la mise en œuvre structurelle des régulations locales internes de la tension de sortie Vout par les unités locales 732, 734, 736, 738, 740 de régulation interne de la tension de sortie, de type AVP, est décrite de manière plus détaillée.

A titre d'exemple et pour simplifier la Figure 10, seul le module de contrôle 726 de rang i est représenté partiellement avec son unité de pilotage amplifiée 546, et son unité locale 736 de régulation interne de la tension de sortie.

Les interfaces d'interaction entre l'unité de pilotage amplifiée 546 et l'unité locale 536 de régulation interne de la tension de sortie Vout, sont représentées également.

L'unité locale 736 de régulation interne de la tension de sortie de type AVP est l'unité locale de régulation interne de la tension de sortie de type AVP 536 de la Figure 8 dans laquelle le circuit proportionnel, c'est-à-dire le premier circuit multiplieur 580 connecté à une unité locale d'équilibrage des courants, a été supprimé.

Le circuit multiplieur 590 devient l'unique circuit multiplieur dans lequel la première borne d'entrée 592 reçoit la consigne propre du facteur de pente $\alpha_i$ sensiblement égale à l'unique facteur de pente moyen a, et dans lequel la deuxième borne d'entrée 594 est connectée à prise de mesure 306 du courant $I_i$ traversant la branche de sortie de rang i.

Lorsque l'unité locale 736 de régulation interne fonctionne, le premier circuit soustracteur 562 calcule la différence $\varepsilon_V$ entre la tension de référence prédéterminée Vref et la tension de sortie Vout mesurée par la prise de mesure de tension 281. Cette différence $\varepsilon_V$ formant la tension d'erreur de mode commun est convertie en un courant de référence Iref par le premier filtre de conversion 568, caractérisé par sa fonction de transfert 1/R.

Le circuit multiplieur 590 qui reçoit la valeur du facteur de pente de consigne $\alpha_i$ sensiblement égal à la valeur $\alpha$ commune à la totalité des modules de contrôle, et qui reçoit la valeur du courant $I_i$ traversant la branche de rang i, calcule le produit $\alpha .I_i$, lequel produit est fourni au deuxième circuit soustracteur 570.

L'unité locale 736 de régulation interne de la tension de sortie est réalisée par exemple par un circuit électronique de même structure que celui décrit à la Figure 6. Le cœur du circuit est un amplificateur opérationnel ayant une première borne négative de tension d'entrée, une deuxième borne positive de tension d'entrée, et une borne de sortie.

Le circuit électronique comprend une source de tension de référence Vref régulée, connectée à la deuxième borne positive, et une résistance d'entrée de valeur R ayant une première extrémité connectée à la première borne négative et une deuxième extrémité connectée à la prise de mesure de la tension de sortie pour recevoir le signal de mesure correspondant Vout.

Le circuit électronique comprend également une capacité de valeur C, connectée en rétroaction entre la borne de sortie et la première borne négative de l'amplificateur opérationnel, et un générateur de courant $\alpha.I_i$ modulé linéairement par le courant $I_i$ traversant la branche de rang i.

En régime statique, la tension de sortie Vout vérifie la relation :

$$V_{out} = V_{ref} - \alpha \,.R.I_i \qquad \text{(relation 5)}$$

En régime dynamique, la tension $V_D$ représentative du rapport cyclique D de mode commun vérifie la relation :

$$V_D(p) = -\frac{1}{C.p}.\frac{V_{out}(p)}{R} - \frac{1}{C.p}.\alpha \,.I_i(p) \qquad \text{(relation 6)}$$

dans laquelle p désigne l'opérateur de Laplace.

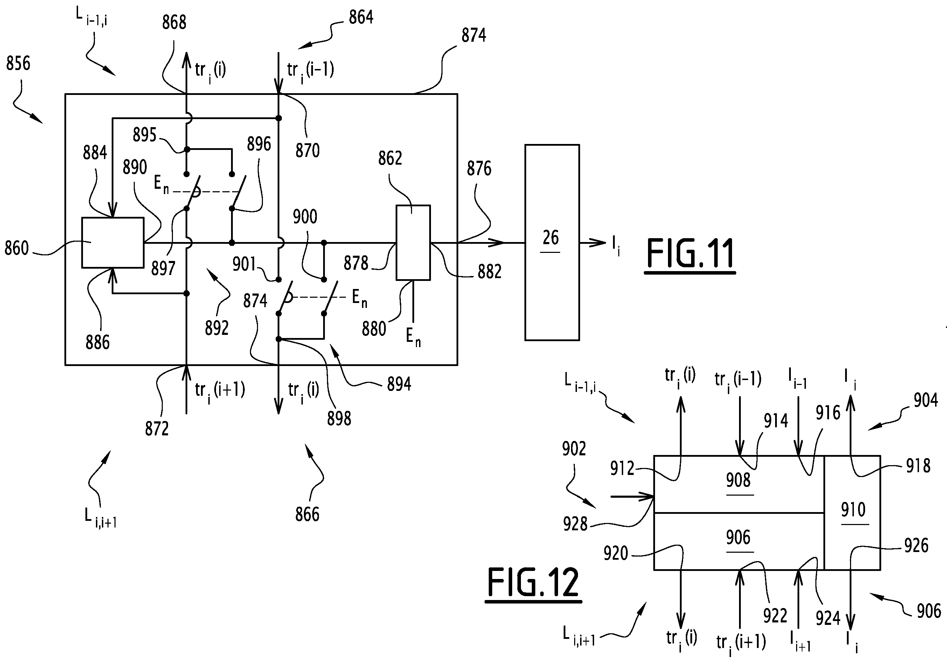

Suivant la Figure 11, un exemple de réalisation d'une reconfiguration automatique de la chaîne de communication entre modules, appliquée à la fonction de génération de porteuses triangulaires est présenté.

Un module de contrôle 856 de rang i présentant une telle fonction de reconfiguration automatique comprend une unité 860 de génération du signal de porteuse triangulaire tr(i) du module 856, et une unité de pilotage amplifié 862 de la cellule de commutation associée 26.

Le module de contrôle 856 comprend un premier port 864 de bornes d'entrée/sortie et un deuxième port 866 de bornes d'entrée/sortie raccordés respectivement à liaison de communication $L_{i-1,i}$ et la liaison de communication $L_{i,i+1}$.

Le premier port de bornes 864 comprend une première borne de sortie 868 destinée à délivrer le signal de porteuse triangulaire, noté tr(i), généré par l'unité de génération de porteuse 860 du module de rang i, et une deuxième borne d'entrée 870 destinée à recevoir le signal de porteuse triangulaire, noté tr(i-1), généré par l'unité de génération de porteuse du module adjacent de rang précédent i-1.

Le deuxième port de bornes 866 comprend une troisième borne d'entrée 872 destinée à recevoir le signal de porteuse triangulaire, noté tr(i+1), généré par l'unité de génération de porteuse du module adjacent de rang suivant i+1, et une quatrième borne d'entrée 874 destinée à délivrer le signal de porteuse triangulaire tr(i), généré par l'unité de génération de porteuse 860 du module de rang i.

Le module de contrôle comprend une cinquième borne de sortie 876, connectée à l'unité de pilotage amplifié 862 et à la cellule de commutation associée 26, et au travers de laquelle est acheminé le signal de commande de la cellule de commutation 26.

L'unité de pilotage amplifié 862 comprend une première borne d'entrée 878 pour recevoir le signal de porteuse triangulaire tr(i), généré par l'unité de génération de porteuse 860 du module 856 de rang i, une deuxième borne d'entrée 880 pour recevoir un signal noté En d'activation/désactivation de l'unité de pilotage amplifié 862, et une troisième borne 882 de sortie de la commande de la cellule de commutation connectée à la cinquième borne 876.

L'unité 860 de génération du signal de porteuse triangulaire tr(i) du module 856 comprend une première borne d'entrée 884, connectée à la borne externe 870 pour recevoir le signal de porteuse triangulaire tr(i-1), une deuxième borne d'entrée 886 connectée à la borne externe 8872 pour recevoir le signal de porteuse triangulaire tr(i+1), et une troisième borne de sortie 890, connectée à la borne d'entrée 878 de l'unité de pilotage amplifié 862 pour lui fournir le signal de porteuse triangulaire tr(i), généré par l'unité de génération de porteuse 860.

Le module de contrôle comprend des moyens de connexion/déconnexion 892, 894 du premier port 864 et du deuxième port 866 de/à l'unité de génération de porteuse triangulaire 860 du module de rang i, et en parallèle de connexion/déconnexion des deux ports entre eux.

Ici, les moyens de connexion/déconnexion 892, 894 comprennent un premier commutateur 882 et un deuxième commutateur 884, chacun étant à une entrée/deux sorties et ayant deux contacts à commande inversée.

L'entrée 895 du premier commutateur 892 est connectée à la première borne externe 868, la première sortie 896 étant connectée à la borne de sortie 890 et la deuxième borne de sortie 897 étant connectée à borne externe 872.

L'entrée 898 du deuxième commutateur 894 est connectée à la quatrième borne externe 874, la première sortie 900 étant connectée à la borne de sortie 890 de l'unité de génération 860 et la deuxième borne de sortie 902 étant connectée à borne externe 874.

Lorsqu'une commande d'activation au travers du signal noté En, généré en interne ou à l'extérieur du module est envoyée aux premier et deuxième commutateurs 892, 894, des connexions sont établis respectivement entre les bornes 864, 884 et entre les bornes 874, 890 tandis que les connexions sont interrompues respectivement entre les bornes 868, 872, et entre les bornes 870, 874.

Lorsqu'une commande de désactivation au travers du signal noté En à l'état inverse, généré en interne ou à l'extérieur du module est envoyée aux premier et deuxième commutateurs 892, 894, les connexions sont établies respectivement entre les bornes 868, 872, et entre les bornes 870, 874 tandis que les connexions sont interrompues entre les bornes 864, 884 et entre les bornes 874, 890.

De manière générale, un module de rang i quelconque, avec i compris entre 1 et q, comprend un premier port de connexion et un deuxième port de connexion configurés pour être raccordés en externe à une première liaison de communication et une deuxième liaison de communication.

Chaque module de rang i comprend des moyens de déconnexion/connexion des ports de connexion des/aux unités locales et en parallèle de connexion/déconnexion des deux ports entre eux, la commutation entre un premier état dans lequel les ports sont connectés aux unités locales et les ports sont déconnectés entre eux, et un deuxième état dans lequel les ports sont déconnectés des unités locales et les ports sont connectés entre eux, étant mise en oeuvre par un signal de commande externe au module ou par un signal interne élaboré au sein du module.

Ainsi, l'agencement dans une configuration chainée des modules entre eux offre la possibilité de changer le nombre de modules aisément. On peut en effet ôter un module de la chaine en connectant ses voisins entre eux. Cette propriété peut s'avérer particulièrement intéressante dans le cas de l'apparition d'une défaillance d'une cellule de commutation du convertisseur.

Un dispositif identique est également utilisé pour la gestion des communications des valeurs des courants de branche entre modules.

Suivant la Figure 12, un exemple particulier de réalisation d'un module de contrôle 902 ayant un rang quelconque i est représenté.

Le module de contrôle 902 est connecté respectivement à ses deux modules adjacents, non représentés sur la Figure et de rangs i-1 et i+1, au travers des liaisons de communication correspondantes $L_{i-1,i}$, $L_{i,i+1}$.

Ici, le module de contrôle 902 de rang i comprend une unité locale 906 de génération d'une porteuse propre triangulaire en tension, une unité locale d'équilibrage des courants 908 et une unité de pilotage amplifiée 910, en étant dépourvu d'unité locale de régulation interne de la tension de sortie de type AVP.

Le module de contrôle 902 comprend un premier port de connexion 904 au module de contrôle de rang précédent i-1 au travers de liaison de communication $L_{i-1,i}$, et un deuxième port de connexion 906 au module de contrôle de rang suivant i+1 au travers de liaison de communication $L_{i,i+1}$.

Le premier port de connexion 904 comprend une première borne de sortie 912 pour fournir le signal de porteuse triangulaire tri(i) du module 902 de rang i au module de contrôle de rang précédent i-1, une deuxième borne d'entrée 914 de réception du signal de porteuse triangulaire tri(i-1) en provenance du module de contrôle adjacent de rang i-1, une troisième borne d'entrée 916 de réception de la mesure du courant $I_{i-1}$ traversant la branche de sortie de rang i-1, un quatrième borne de sortie 918 d'émission de la mesure de courant $I_i$ traversant la branche de sortie de rang i.

Le deuxième port de connexion 906 comprend une cinquième borne de sortie 920 d'émission du signal de porteuse triangulaire tri(i) du module 902 de rang i vers le module de contrôle de rang suivant, une sixième borne d'entrée 922 de réception du signal de porteuse triangulaire tri(i+1) du module adjacent de rang suivant i+1, une septième borne d'entrée 924 de réception de la mesure du courant $I_{i+1}$ traversant la branche de sotie rang i+1, un huitième borne de sortie 926 d'émission de la mesure de courant i traversant la branche de sortie de rang i.

Le module de contrôle 902 comprend également une neuvième borne d'entrée 928 connectée à la prise de mesure de la mesure du courant $I_i$ traversant la branche de rang i.

En variante, le module de contrôle de rang i comprend une unité locale de régulation interne de la tension de sortie de type AVP couplée à une unité locale d'équilibrage des courants.

En variante, le module de contrôle de rang i est dépourvu d'une unité locale d'équilibrage des courants et comprend une unité locale de régulation interne de la tension de sortie de type AVP ayant un facteur de pente sensiblement de même valeur α sur l'ensemble des modules.

Il est à remarquer que pour chaque module de contrôle de rang i la mesure d'un courant individuel $I_i$ traversant la branche associé de rang i doit être fourni au module i.

De manière plus générale, chaque module d'un rang quelconque i, les deux modules adjacents à ce module et ayant les rangs i-1, i+1, et les liaisons de communications correspondantes $L_{i-1,i}$, $L_{i,i+1}$, sont configurés pour échanger des informations pertinentes concernant et destinés au module de rang quelconque i prises parmi le courant $I_i$ de la branche de rang i, les courants $I_{i-1}$, $I_{i+1}$, des branches adjacentes de rang i-1, i+1, (ou des courants différentiels $I_i - I_{i-1}$ et $I_{i+1} - I_i$), les signaux de porteuse triangulaire du module d'un rang quelconque i et des modules adjacent à ce module de rang i-1, i+1. La connectique obtenue est dû au fait que chaque module échange l'information de son courant de branche et de sa porteuse triangulaire avec ses modules adjacents.

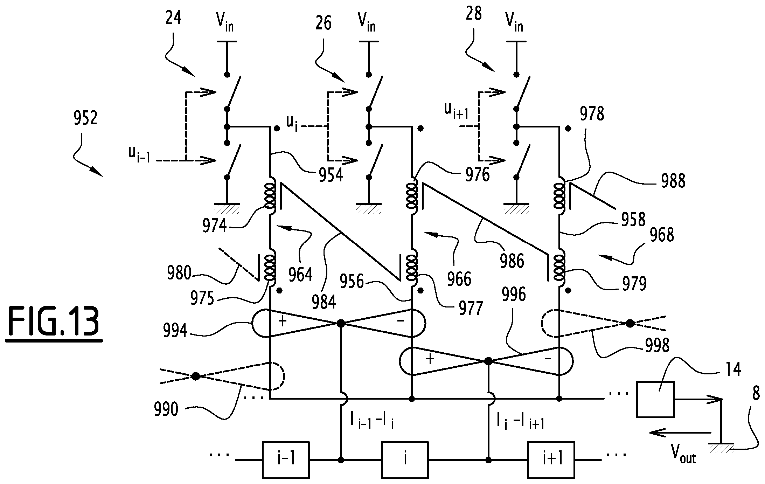

Suivant la Figure 13, une configuration particulière de réalisation des inductances de lissage et des mesures des courants traversant les branches de sortie est décrite.

Un convertisseur statique à architecture parallèle 952 mettant en œuvre une telle configuration comprend des branches de sortie 954, 956, 958 à inductances couplées, trois seulement étant représentées sur la Figure 13.

Chaque branche de sortie 954, 956, 958 est associée et connectée à son entrée à une cellule de commutation différente 24, 26, 28 supposée associée au rang i-1, i, i+1 au sein de la chaîne de communication.

Les branches de sortie 954, 956, 958 sont connectées en sortie à une même borne d'entrée de la charge 14.

Chaque branche de sortie 954, 956, 958 comprend respectivement un premier enroulement 974, 976, 978 et un deuxième enroulement 975, 977, 979 connectés en série formant une première inductance et une deuxième inductance de lissage.

Le premier enroulement et le deuxième enroulement d'une même branche de sortie sont découplés entre eux en terme de flux magnétique mais sont bobinés en sens inverse en terme de sens de circulation du courant.

Le premier enroulement d'une branche de sortie ayant un rang i quelconque est couplé en terme de flux magnétique au deuxième enroulement de branche de sortie adjacente de rang suivant au travers d'un élément de couplage de flux magnétique unique et différent.

Ici, sont représentés seulement quatre éléments de couplage de flux magnétique 980, 984, 986, 988, correspondant respectivement au couplage en flux magnétique du deuxième enroulement 975 avec le premier enroulement non représenté de la branche de rang i-2, du premier enroulement 974 de la branche de rang i-1 avec le deuxième enroulement 977 de la branche de rang suivant i, du premier enroulement 976 de la branche de rang i avec le deuxième enroulement 979 de la branche de rang suivant i+1, le premier enroulement 978 de la branche de rang i+1 avec le deuxième enroulement non représenté de la branche de rang suivant i+2.

Le convertisseur statique à architecture parallèle 952 comprend des capteurs de mesure de courant différentiel 990, 994, 996, 998 de type Fluxgate, c'est-à-dire de mesure d'un flux de deux lignes de courants circulant en sens inverse l'une de l'autre, disposé en sortie de deux branches de sortie adjacentes.

Les capteurs de mesure de courant différentiel 990, 994, 996, 998, seuls représentés sur la Figure 13, sont configurés ici pour fournir respectivement les mesures de courants différentiels $I_{i-2} - I_{i-1}$, $I_{i-1} - I_i$, $I_i - I_{i+1}$, $I_{i+1} - I_{i+2}$.

Chaque unité locale d'équilibrage des courants de rang i est configurée pour calculer $\varepsilon_i = \dfrac{(I_{i-1} + I_{i+1})}{2} - I_i$

à partir des deux mesures différentielles $(I_{i-1} - I_i)$ et $(I_i - I_{i+1})$.

Cette configuration et ses avantages sont décrits dans l'article de Mathieu Le Bolloch, Marc Cousineau et Thiery Meynard intitulé « New Materless Moduar Curent-Sharing Technique for D/DC Parallel Converters » EPE-PEMC 2010, 14th International Power Electronics and Motion Conference, Ohrid République de Macédoine, 6-8 Septembre 2010.

Cette solution améliore les performances du filtrage de sortie lorsqu'elle est réalisable, c'est-à-dire lorsque le convertisseur statique ne comporte pas de régulations locales internes et lorsque l'implantation des cellules de commutation, des inductances de lissage et des capteurs de courants le permet.

De manière générale, chaque branche de sortie comprend une ou plusieurs inductances de lissage.

Les inductances de lissage de deux branches de deux modules adjacents quelconques peuvent au choix être couplées comme décrit sur la Figure 13, ou non couplés chaque module de contrôle comprend une unité locale d'équilibrage des courants.

Ainsi, dans le cas d'un convertisseur utilisant des inductances couplées entre elles, l'association dans chaque module des fonctions de l'équilibrage des courants de branche et de la génération des porteuses avec gestion de leur entrelacement permet de réduire considérablement la connectique nécessaire entre l'organe de contrôle centralisé et les cellules de commutation. On peut noter qu'un équilibrage des courants basé sur la mesure des différences des courants de branche permet d'égaliser les valeurs de ces courants sans nécessiter l'usage d'un capteur à grande précision.

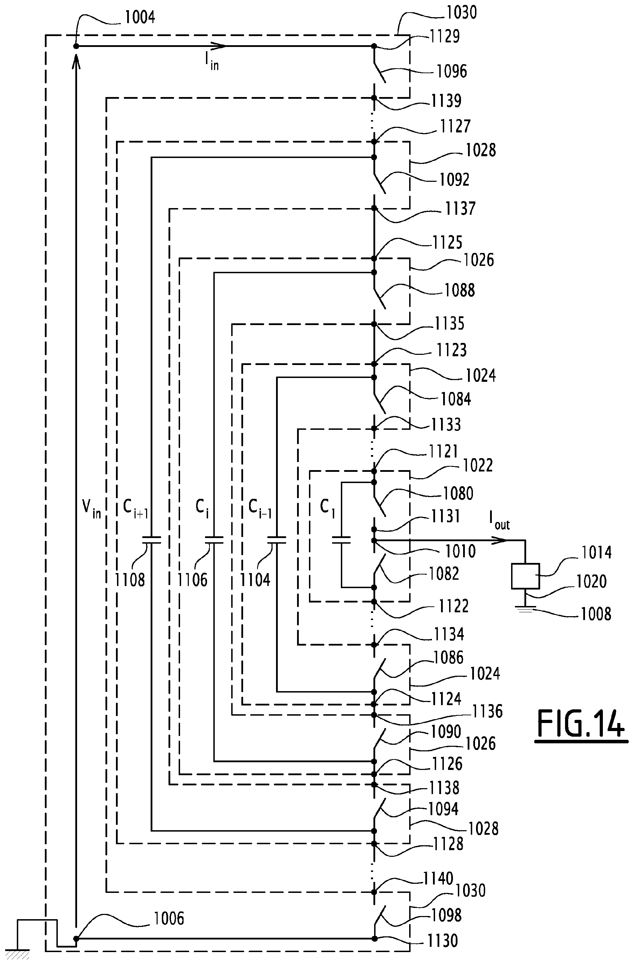

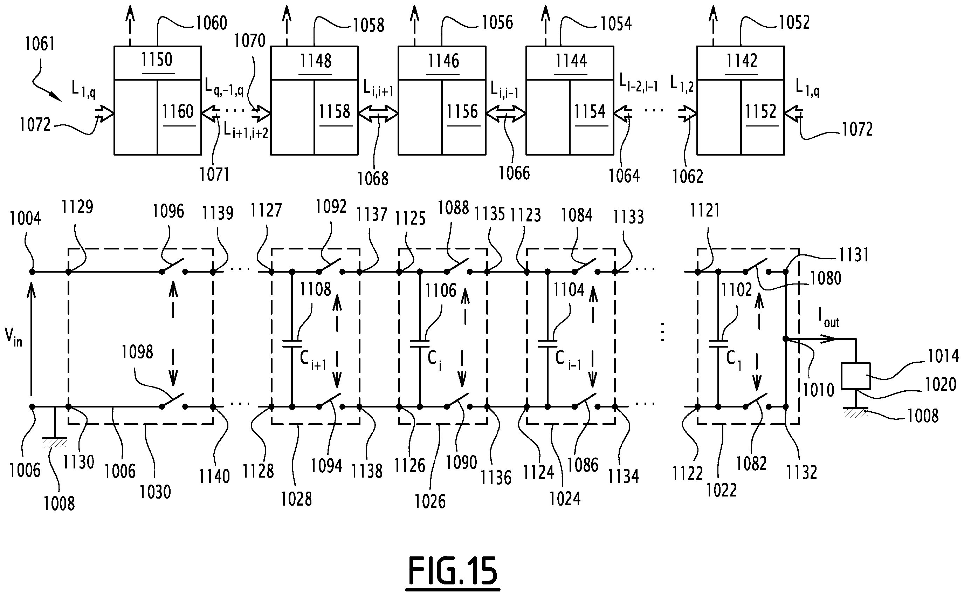

Suivant les Figures 14 et 15, un convertisseur statique à architecture série 2, comprend une première borne d'entrée d'alimentation 1004 et une deuxième borne d'entrée d'alimentation 1006, raccordées à une source d'alimentation, non représentée, sous une tension Vin, la deuxième borne d'entrée 1006 d'alimentation étant mise à une masse 1008.

Le convertisseur statique série 1002 comprend une borne de sortie 1010 raccordée à une première extrémité 1012 d'une charge de sortie 1014, modélisée par exemple par une capacité de sortie et une résistance de sortie de valeur Rout mises en parallèle, une deuxième extrémité 1020 de la charge de sortie 1014 étant raccordée à la masse de référence 1008, et la charge de sortie étant traversée par un courant de sortie ou de charge noté Iout.

Le convertisseur statique série 1012 comprend également :

- un nombre entier total q de cellules de commutation 1022, 1024, 1026, 1028, 1030, disposées en série,
- un même nombre total q de modules de contrôle 1052, 1054, 1056, 1058, 1060, représentés seulement sur la Figure 15,
- une chaîne de communication 1061 ayant un même nombre q de liaisons de communication 1062, 1064, 1066, 1068, 1070, 1072 reliant suivant une boucle fermée (en anglais Daisy Chain) les modules de contrôle 1052, 1054, 1056, 1058, 1060.

De manière générale, le nombre total q est supérieur ou égal à 3.

Chaque cellule de commutation électronique est associée respectivement à un module de contrôle unique et différent, la cellule de commutation et le mode de contrôle associé étant repérés par un même rang entier i de positionnement unique et différent, compris entre 1 et q et d'autant plus grand que la cellule de commutation est connecté au plus près du générateur d'alimentation.

A titre d'exemple sur les Figures 14 et 15, le nombre total q de cellules de commutation, et en conséquence de modules de contrôle est supérieur ou égal à 7. Seuls, cinq modules sont représentés, le premier module de contrôle 1052 ayant un rang i égal à 1, le deuxième module 1056 étant un module générique ayant un rang d'indice courant i, le troisième module 1054 ayant un rang d'indice i-1 et étant un module générique adjacent précédent le module générique 1056 dans la chaîne de communication 1061, le quatrième module 1058 ayant un rang d'indice i+1 et étant un module générique adjacent succédant au module générique 1056 dans la chaîne de communication 1061, le cinquième module de contrôle 1060 ayant un rang i égal à q et étant un module adjacent précédent dans la chaîne de communication le premier module générique 1052 de rang 1.

Deux modules de contrôle quelconques de rangs i et i+1 adjacents sur la chaîne de communication 1061 sont reliés par une liaison de communication unique et différente, désignée par $L_{i,i+1}$.

Il est à remarquer que dans la structure minimale d'un convertisseur à trois modules de contrôle et à trois cellules de commutation, le module adjacent successeur au module de rang 3 est le module de rang 1, et le module de rang adjacent précédent le rang de module 1 est le module de rang 3.

Il est à remarquer que dans le cas d'une architecture série le rang de positionnement i dépend certes de l'ordre donné par la connectivité des modules de contrôle au sein de la boucle formant la chaîne de communication 1061 mais dépend avant tout de l'ordre fixé par la connectivité série des cellules de commutation entre elles par rapport à la charge 1014 ou de manière complémentaire par rapport à la source d'alimentation. En effet, l'ordre de connectivité série des cellules de commutation régit l'ordre de connectivité des modules de contrôle au sein de la chaîne fermée de communication 1061.

Les cellules de commutation 1022 ; 1024 ; 1026 ; 1028 ; 1030, délimitées par des bordures en traits pointillés sur les Figures 14, 15, comprennent respectivement chacune une paire unique et différente d'interrupteurs électroniques 1080, 1082 ; 1084, 1086 ; 1088, 1090 ; 1092, 1094 ; 1096, 1098 ; reliés en parallèle au travers d'une capacité flottante 1102, 1104, 1106,1108, unique et différente, disposée en entrée de la cellule de commutation 1022, 1024, 1026 1028 vers les bornes d'alimentation 1004, 1006 lorsque le rang de positionnement i est différent de q.

Les cellules de commutation 1022 ; 1024 ; 1026 ; 1028 ; 1030 comprennent respectivement chacune une première paire de bornes d'entrée 1121, 1122 ; 1123, 1124 ; 1125, 1126 ; 1127, 1128 ; 1129, 1130 ; raccordés respectivement en entrée des deux interrupteurs correspondants 1080, 1082 ; 1084, 1086 ; 1088, 1090 ; 1092, 1094 ; 1096, 1098 et à la capacité flottante correspondante 1102 ; 1104 ; 1106 ; 1108, notée également $C_1$, $C_{i-1}$, $C_i$, $C_{i+1}$, lorsqu'elle existe.

Les cellules de commutation 1022 ; 1024 ; 1026 ; 1028 ; 1030 comprennent respectivement chacune une deuxième paire de bornes de sortie 1131, 1132 ; 1133, 1134 ; 1135, 1136 ; 1137, 1138 ; 1139, 1140 ; raccordés respectivement en sortie des deux interrupteurs correspondants 1080, 1082 ; 1084, 1086 ; 1088, 1090 ; 1092, 1094 ; 1096, 1098.

Les bornes de sortie 1131, 1132 de la deuxième paire de bornes de la cellule de commutation 1022 de rang 1 sont connectées ensemble à l'unique borne de sortie 1010 du convertisseur.

Les bornes d'entrée 1129 et 1130 de la première paire de la cellule de commutation 1030 de rang q sont respectivement connectées à la première borne 1004 et la deuxième borne 1006 d'alimentation du convertisseur 1002.

Les bornes d'entrée de la première paire de bornes de la cellule de commutation d'un rang quelconque i compris ente 1 et q-1 et les bornes de sortie de la deuxième paire de borne de la cellule de commutation de rang suivant sont respectivement connectée entre elles.

Chaque module de contrôle 1052, 1054, 1056, 1058, 1060 comprend respectivement une unité de pilotage amplifiée 1142, 1144, 1146, 1148, 1150 des deux interrupteurs de la cellule de commutation correspondante 1022, 1024, 1026, 1028, 1030, et une unité locale 1152, 1154, 1156, 1158, 1160, unique et différente, de génération d'une porteuse propre triangulaire en tension.

Chaque unité locale de génération de la porteuse triangulaire d'un module de contrôle quelconque ayant un rang courant i est configurée pour contrôler le positionnement de sa phase d'entrelacement au sein de la totalité des porteuses triangulaires entrelacées en fonction seulement des signaux des porteuses triangulaires des deux modules adjacents au module quelconque de rang i et ayant les rangs respectifs i-1, i+1, fournis par les deux modules adjacents i-1, i+1 au module quelconque de rang i au travers des deux liaisons de communication correspondantes $L_{i-1,i}$ et $L_{i,i+1}$. Le rang de positionnement i est compris entre 1 et q avec i-1 égal à q lorsque i égal à q et i+1 égal à 1 lorsque i est égal à q.

Ainsi, par exemple l'unité locale 1152 de génération de la porteuse triangulaire du premier module de contrôle 1052 de rang 1 est configurée pour contrôler le positionnement de sa phase d'entrelacement au sein de la totalité des porteuses triangulaires entrelacées en fonction seulement des signaux des porteuses triangulaires de ses deux modules adjacents ayant les rangs respectifs q, 2, fournis par les deux modules adjacents q, 2 au premier module 1052 au travers des deux liaisons de communication correspondantes 1072, 1062, désignés par $L_{q,1}$ et $L_{1,2}$.

De même l'unité locale 1160 de génération de la porteuse triangulaire du cinquième module de contrôle 1060 de rang q est configuré pour contrôler le positionnement de sa phase d'entrelacement au sein de la totalité des porteuses triangulaires entrelacées en fonction seulement des signaux des porteuses triangulaires de ses deux modules adjacents 1058, 1052 ayant les rangs respectifs q-1, 1, fournis par les deux mêmes modules adjacents q-1, 1 au cinquième module 1160 de rang q au travers des deux liaisons de communication correspondantes 1071, 1072, désignés par $L_{q-1,q}$ et $L_{q,1}$.

Chaque module de contrôle 1052, 1054, 1056, 1058, 1060 comprend une unité locale d'équilibrage des tensions cellule, non représentée sur la Figure 15, et/ou une unité locale de régulation interne du courant d'entrée Iin ou de sortie Iout de ACP (en anglais Average Current Positioning), non représentée sur la Figure 15.

Chaque unité locale d'équilibrage des tensions cellule d'un module quelconque de rang i est configurée pour déterminer une correction de rapport cyclique di en fonction seulement de la différence entre la moyenne des valeurs des deux tensions cellule, notées $V_{i-1}$, $V_{i+1}$ des cellules de commutation dont les modules de rang i-1, i+1 sont adjacents au module quelconque de rang i et de la valeur de la tension cellule $V_i$ de la cellule de la commutation associée au module quelconque de rang i.

Chaque unité locale de régulation interne du courant d'entrée ou de sortie du convertisseur de type ACP ayant un rang i donné est configurée au travers de la mise en œuvre d'une boucle propre en courant d'entrée ou sortie pour déterminer un rapport cyclique propre Di, la détermination de Di étant fonction d'un produit de la valeur de la tension cellule $V_i$ de la cellule de commutation associée au module quelconque et d'un facteur de pente $\alpha_i$ dépendant du rang du module.

Ainsi, l'association dans chaque module des fonctions de régulation du courant de sortie (ou d'entrée) du convertisseur de type ACP, de l'équilibrage des tensions de cellule et de la génération des porteuses avec gestion de leur entrelacement, permet d'obtenir un contrôle entièrement décentralisé d'un convertisseur série comportant un nombre q quelconque de cellules de commutation. Aucun organe de contrôle centralisé n'est plus alors nécessaire.

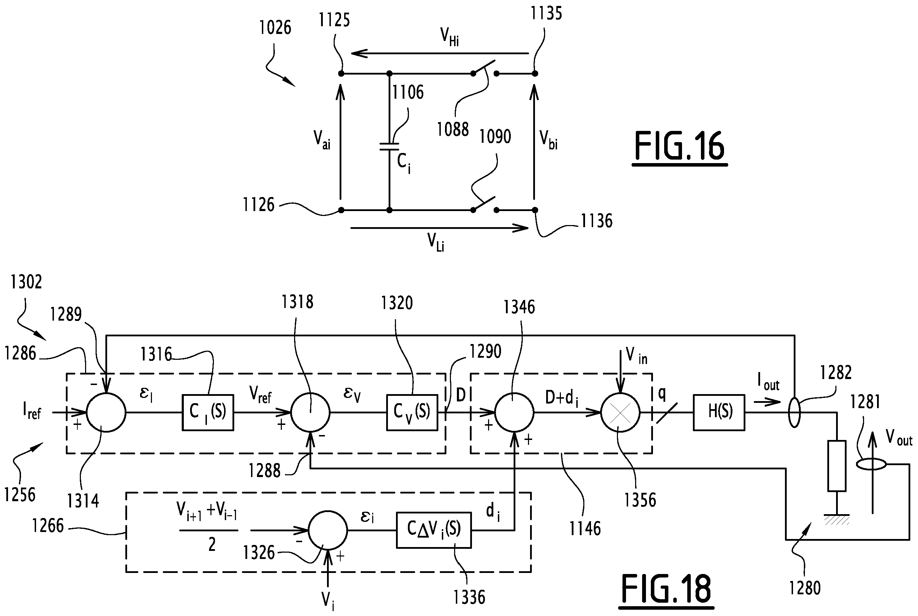

Suivant la Figure 16, une cellule de commutation ayant un rang générique i compris entre 2 et q-1 est représentée par exemple par la cellule de commutation 1026.

La tension cellule $V_i$ est égale la somme de la tension aux bornes du premier interrupteur 1088 notée VHi et de la tension aux bornes du deuxième interrupteur 1090 notée VLi.

La tension cellule $V_i$ peut s'exprimer également par la relation :

$$V_i = V_{ai} - V_{bi} \qquad \text{(relation 7)}$$

dans laquelle $V_{ai}$ désigne la tension différentielle d'entrée de la cellule de rang i, ici aux bornes d'entrée 1125, 1126 de la première paire, et mesurée aux bornes de la capacité flottante Ci branchée en parallèle, et dans laquelle $V_{bi}$ désigne la tension différentielle de sortie de la cellule de rang i, ici aux bornes de sortie 1135, 1136 de la deuxième paire, et mesurée aux bornes de la capacité flottante $C_{i-1}$ de la cellule de rang précédent i-1.

Cette relation reste valable pour i égale à 1, avec $V_{a1}$ égale à la tension mesurée aux bornes de la capacité flottante C1 branchée en parallèle de la cellule de rang 1 et $V_{b1}$ égale à 0V.

Cette relation reste valable pour i égale à q, avec $V_{aq}$ égale à la tension d'entrée Vin mesurée entre les bornes d'alimentation 1004, 1006 du convertisseur statique, et $V_{bq}$ égale à la tension d'entrée de la cellule de rang précédent q-1 mesurée aux bornes de la capacité flottante $C_{q-1}$.

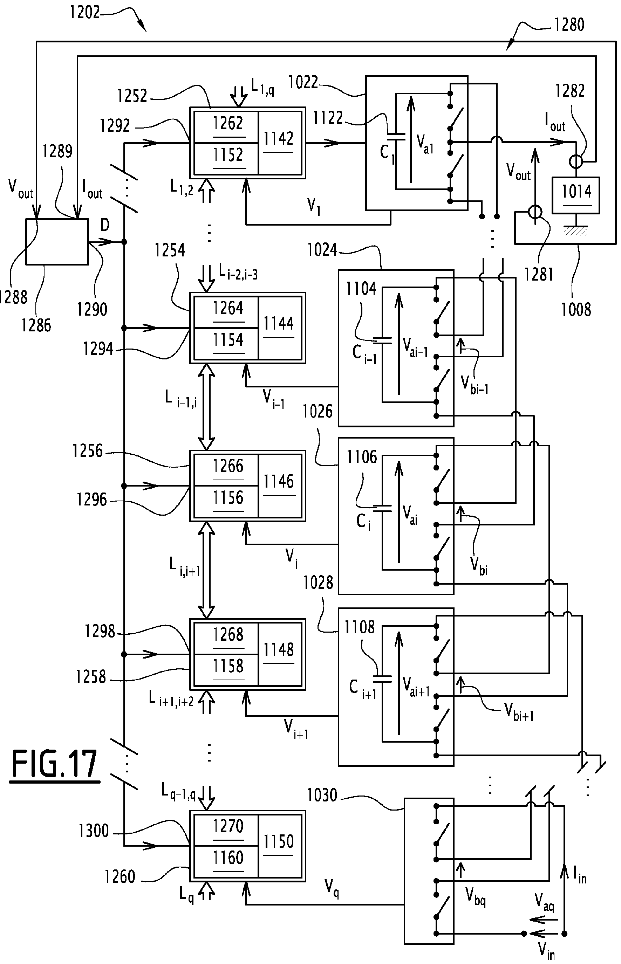

Suivant la Figure 17, une deuxième forme de réalisation 1202 de la CMD du convertisseur statique à architecture série comprend des composants, identiques à ceux décrits sur les Figure 14 et 15 en portant les mêmes références numériques et agencés suivant la même architecture.

Le convertisseur statique 1202 comprend des modules de contrôle 1252, 1254, 1256, 1258, 1260, associés respectivement chacun à une cellule de commutation 1022 1024, 1026, 1028, 1040 unique et différente, et ayant respectivement les mêmes unités de pilotage amplifiée 1142, 1144, 1146, 1148, 1150 et les mêmes unités locales 1152, 1154, 1156, 1158, 1160 de génération d'une porteuse propre triangulaire en tension que celles décrites à la Figure 15.

Chaque module de contrôle 1252, 1254, 1256, 1258, 1260 comprend ici respectivement une unité locale d'équilibrage des tensions cellule 1262, 1264, 1266, 1268, 1270 en étant dépourvu d'unité locale de régulation interne de courant de type ACP.

Chaque unité locale d'équilibrage des tensions cellule d'un module de contrôle de rang quelconque i, i variant de 1 à q, est configurée pour déterminer une correction de rapport cyclique di en fonction seulement de la différence entre la moyenne des valeurs des deux tensions cellule $V_{i-1}$, $V_{i+1}$ des cellules de commutation dont les modules sont adjacents au module quelconque de rang i et la valeur de la tension cellule $V_i$ de la cellule de commutation associée au module quelconque de rang i.

Le convertisseur statique 1202 comprend une boucle principale 1280 en tension et en courant dans laquelle la tension de sortie Vout et le courant de sortie Iout sont des observables dont les images sont prélevées respectivement par une prise de tension 1281 et une prise de courant 1282.

Le convertisseur statique série 1202 comprend un module de régulation externe 1286 ayant une première borne d'entrée 1288, une deuxième borne d'entrée 1289 et une borne de sortie 1290.

La première borne d'entrée 1288 et la deuxième borne d'entrée 1289 sont connectées respectivement à la prise de tension 1281 et à la prise de courant 1282 pour recevoir un signal de mesure représentatif de la tension de sortie Vout et un signal de mesure représentatif du courant de sortie Iout.

Le module externe de régulation externe 1286 est configuré pour déterminer un rapport cyclique D de mode commun aux cellules de commutation à partir de la mesure de la tension de sortie Vout et de la mesure du courant de sortie Iout, et à partir d'un courant de référence Iref.

La borne de sortie 1290 du module externe de régulation 1286 est connectée de manière partagée à chaque module de contrôle local 1252, 1254, 1256, 1258, 1260 au travers d'une borne d'entrée, unique et différente, 1292, 1294, 1296, 1298, 1300 associée pour fournir le rapport cyclique D de mode commun aux cellules de commutation.

Chaque cellule de commutation 1022, 1024, 1026, 1028, 1030 est configurée pour fournir à son module 1252, 1254, 1256, 1258, 1260 associé de rang respectif 1, i-1, i, i+1 et par conséquent à l'unité locale d'équilibrage des tensions cellule correspondante, une mesure de la tension cellule $V_1$, $V_{i-1}$, $V_i$, $V_{i+1}$, $V_q$ correspondante.

Chaque module de contrôle 1252, 1254, 1256, 1258, 1260 comprend un circuit additionneur associé, unique et différent, pour calculer un rapport cyclique corrigé $D'_1$, $D'_{i-1}$, $D'_i$ $D'_{i+1}$, $D'_q$, comme la somme du rapport cyclique D de mode commun et de la correction de rapport cyclique respective $d_1$, $d_{i-1}$, $d_i$, $d_{i+1}$, $d_q$ déterminée par l'unité locale d'équilibrage des tensions cellule correspondante 1262, 1264, 1266, 1268, 1270.

Ainsi, l'association dans chaque module des fonctions de l'équilibrage des tensions de cellule et de la génération des porteuses avec gestion de leur entrelacement permet de réduire considérablement la connectique nécessaire entre l'organe de contrôle centralisé et les cellules de commutation. Dans ce cas, un seul fil portant l'information commune du rapport cyclique de mode commun calculé dans le circuit externe est nécessaire. Cette information est transmise sous forme de tension.

Suivant la Figure 18, un schéma simplifié 1302 de la CMD du convertisseur statique 1202 de la Figure 17, représente la mise en œuvre structurelle de l'équilibrage des tensions cellule et la mise en œuvre structurelle de la régulation externe de la tension et du courant de sortie Vout, Iout par la boucle externe 1280 et le module externe 1286, décrits à la Figure 17.

A titre d'exemple générique et représentatif, seul le module de contrôle 1256 de rang i est représenté partiellement avec son unité de pilotage amplifiée 1146 et son unité locale d'équilibrage des courants 1266.

Les interfaces d'interaction entre l'unité de pilotage amplifiée 1146, l'unité locale d'équilibrage des courants 1266 et le module externe 1286 de régulation externe en tension et courant de sortie, sont représentées également.

Le module de régulation externe 1286 en tension et courant de sortie est ici classique en terme d'absence d'un contrôle externe de type ACP, et comprend un premier circuit soustracteur 1314 à deux entrées positive et négative désignées par les signes + et -, un premier filtre 1316 de conversion d'un courant d'erreur de mode commun $\varepsilon_I$ en une tension de référence Vref, un deuxième circuit soustracteur 1318 à deux entrées positive et négative désignées respectivement par les signes + et -, et un deuxième filtre 1320 de conversion d'une tension d'erreur de mode commun $\varepsilon_V$ en le rapport cyclique D de mode commun aux cellules de commutation.

L'unité locale d'équilibrage des tensions cellule 1266 est configurée pour déterminer une tension cellule moyennée localement $(V_{i-1} + V_{i+1})/2$, à partir de la donnée du couple des tensions cellule adjacentes $V_{i-1}$, $V_{i+1}$ fournies respectivement par la paire de liaisons $(L_{i-1,i} ; L_{i,i+1})$.

L'unité locale d'équilibrage des tensions cellule 1266 comprend respectivement un circuit soustracteur 1326, unique et différent, pour calculer un signal de courant différentiel local $\varepsilon_i$, avec pour i donné :

$$\varepsilon_i = \frac{(V_{i-1} + V_{i+1})}{2} - V_i,$$

$V_i$ étant la tension cellule de la cellule de commutation de rang i associée au module de même rang,

$V_{i-1}$ et $V_{i+1}$ étant les tensions cellule des cellules de commutation de rang i-1 et i+1 associés aux modules de rang correspondant, lesdits modules de contrôle de rangs i-1, i+1 étant adjacents au module de contrôle de rang i, en terme de positionnement dans la chaîne de communication 1061.

L'unité locale d'équilibrage des tensions cellule 1266 comprend également un filtre de conversion 1336, unique et différent, caractérisé par sa fonction de transfert propre $C\Delta I_i(p)$, pour convertir le signal de courant différentiel local $\varepsilon_i$ en la correction de rapport cyclique correspondante $d_i$.

L'unité locale de pilotage amplifiée 1146, associée au module de contrôle 1146, comprend un circuit additionneur associé 1346, unique et différent, pour calculer un rapport cyclique corrigé $D'_i$ égal à D+$d_i$, D désignant le rapport cyclique commun fourni par le module externe de régulation externe 1286 décrit à la Figure 17.

Le circuit additionneur 1346 possède des première et deuxième bornes d'entrée positives, désignées par un signe +, d'emplacement différent sur la Figure 18. La première borne d'entrée est connectée à l'unité de régulation externe 1286 pour recevoir le rapport cyclique commun D, tandis que la deuxième borne d'entrée est connectée à l'unité locale d'équilibrage des courants 1266 pour recevoir la correction de rapport cyclique $d_i$ correspondant au module de contrôle 1256 de rang i.

Lorsque le module de régulation externe 1286 fonctionne, le premier circuit soustracteur 1314 calcule la différence entre le courant de référence prédéterminée Iref et le courant de sortie Iout mesurée par la prise de mesure de courant 1282. Cette différence formant le courant d'erreur de mode commun $\varepsilon_I$ est convertie en une tension de référence Vref par le premier filtre de conversion 1316 caractérisé par une fonction de transfert notée $C_I(s)$.

Le signal de tension de référence Vref et le signal de la tension de sortie Vout mesurée par la prise de tension 1281 sont respectivement injectés à la borne d'entrée positive et à la borne d'entrée négative du deuxième circuit soustracteur 1318.

Le deuxième circuit soustracteur 1318 calcule la différence (Vref - Vout) entre le signal de tension de référence Vref et le signal de tension de sortie Vout, pour former la tension d'erreur de mode commun $\varepsilon_V$. La tension d'erreur de mode commun $\varepsilon_V$ est convertie en le rapport cyclique D de mode commun par le deuxième filtre de conversion 1320 caractérisé par une fonction de transfert notée $C_V(s)$.

En variante, l'unité de régulation externe 1286 est dépourvue d'un contrôle interne de type ACP, et la régulation externe mise en œuvre est, soit une régulation externe en tension de sortie fondée sur la mesure de la tension de sortie, soit une régulation externe en courant de sortie fondée sur la mesure du courant de sortie

En variante, le module externe 1286 classique de régulation externe est remplacé par un module de contrôle externe de type ACP.

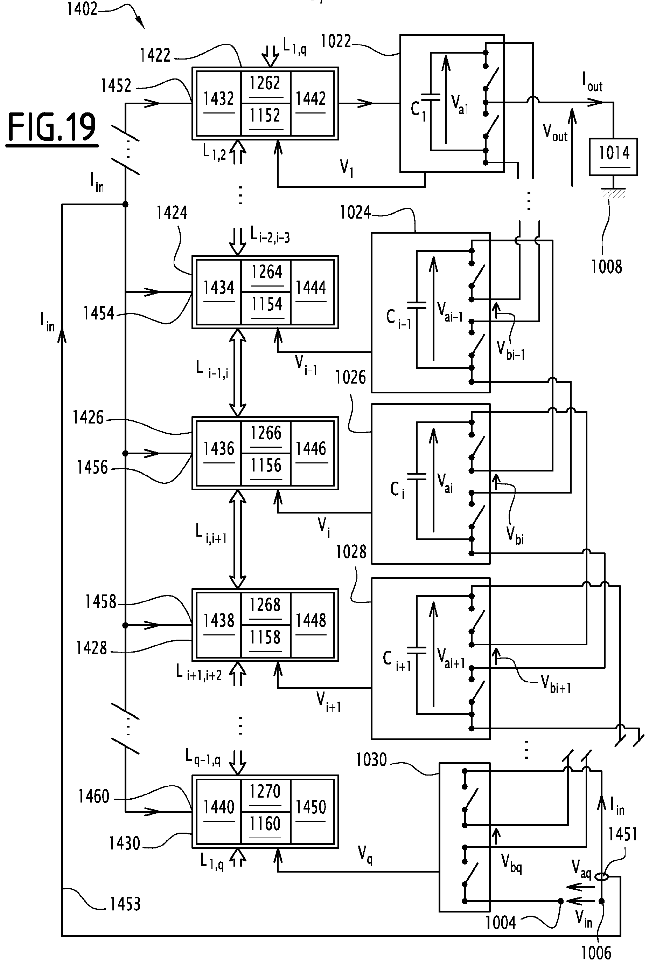

Suivant la Figure 19, une troisième forme de réalisation 1402 de la CMD du convertisseur statique selon l'invention, dérivée de la première forme de réalisation décrite à la Figure, 17 est représentée dans laquelle les composants lorsqu'ils sont identiques à ceux décrits sur la Figure 17, portent les mêmes références numériques.

Le convertisseur statique 1402 comprend des modules de contrôle 1422, 1424, 1426, 1428, 1430 qui remplacent respectivement les modules de contrôle 1252, 1254, 1256, 1258, 260, associés respectivement aux cellules de commutation 1022, 1024, 1026, 1028, 1030 et décrits à la Figure 17.

A l'instar du convertisseur statique série 1202 de la Figure 2, chaque module de contrôle 1422, 1424, 1426, 1428, 1430 comprend respectivement la même unité locale 1152, 1154, 1156, 1158, 1160 de génération d'une porteuse propre triangulaire en tension et la même unité locale d'équilibrage des courants 1262, 1264, 1266, 1268, 1270.

A la différence du convertisseur statique 1202 de la Figure 17, chaque module de contrôle, 1422, 1424, 1426, 1428, 1430 comprend une unité locale 1432, 1434, 1436, 1438, 1440 de régulation interne du courant d'entrée Iin, de type ACP, et une unité de pilotage amplifiée 1442, 1444, 1446, 1448, 1450 qui diffère de l'unité de pilotage amplifiée 1142, 1144, 1146, 1148, 1150 de la Figure 17.

A la différence du convertisseur statique 1202 de la Figure 17, les unités de pilotage amplifié 1442, 1444, 1446, 1448, 1450 sont les unités de pilotage amplifié 1142, 1144, 146, 1148, 1150 dans lesquelles l'additionneur d'entrée correspondant a été supprimé.

A la différence du convertisseur statique 1202 de la Figure 17, la boucle principale 1280 de régulation externe en mode commun de la tension Vout et du courant de sortie Iout et le module externe 1286 de régulation externe sont supprimés et remplacés par une pluralité de régulations locales de type ACP mises en œuvre en interne des modules de contrôle 1422, 1424, 1426, 1428, 1430.

La mise en œuvre des régulations locales internes requiert toutefois la distribution à tous les modules de contrôle de l'information concernant la tension de sortie du convertisseur 1402 prélevée par une prise de mesure de courant d'entrée 1451.

A cette fin, le convertisseur statique série 1402 comprend un réseau formant un bus 1453 de fourniture de l'information de mesure du courant d'entrée Iin à chacun des modules de contrôle 1422, 1424, 1426, 1428, 1430 en une borne d'entrée respective, unique et différente 1452, 1454, 1456, 1458, 1460.

Chaque unité de régulation interne du courant d'entrée de type de type ACP 1432, 1434, 1436, 1438, 1440 comprend respectivement une boucle de régulation interne en courant de type ACP, unique et différente, configurée pour déterminer un rapport cyclique propre $D_1$, $D_{i-1}$, $D_i$, $D_{i+1}$, $D_q$ à partir de la mesure du courant d'entrée Iin, de la mesure du tension cellule respective $V_1$, $V_{i-1}$, $V_i$, $V_{i+1}$, $V_q$ de la cellule de commutation 1022, 1024, 1026, 1028, 1030 correspondante, du courant de référence Iref, et d'un facteur de pente inverse corrigée $\alpha_1$, $\alpha_{i-1}$, $\alpha_i$, $\alpha_i$ et $\alpha_q$.

Chaque facteur de pente inverse corrigée $\alpha_1$, $\alpha_{i-1}$, $\alpha_i$, $\alpha_i$ et $\alpha_q$ est proportionnel au produit d'un facteur de pente inverse principal $\alpha$ de référence prédéterminé et de l'inverse du rapport cyclique respectif $d_1$, $d_{i-1}$, $d_i$, $d_{i+1}$, $d_q$ déterminé par l'unité locale d'équilibrage des tensions cellule correspondante 1262, 1264, 1266, 1268, 1270, suivant un facteur de proportionnalité indépendant du rang i du module de contrôle.

Chaque rapport cyclique propre Di propre à la cellule de rang i, i variant de 1 à q, est fonction de la différence entre une tension de référence Vref et le produit $\frac{1}{\alpha_i}.V_i$ de l'inverse du facteur de pente inverse corrigé $\alpha_i$ et de la valeur mesurée de tension cellule $V_i$ de la cellule de commutation de rang i, la tension de référence Vref étant proportionnelle à la différence entre le courant de référence Iref et la valeur du courant d'entrée Iin mesuré suivant une constante Z/R sensiblement identique sur l'ensemble des modules de contrôle.

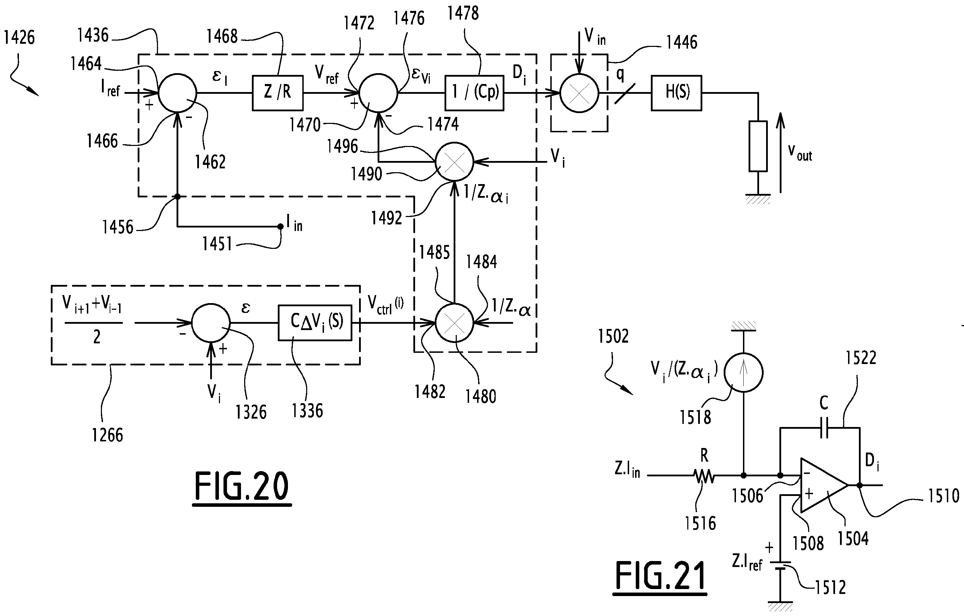

Suivant la Figure 20, la mise en œuvre structurelle des régulations locales internes en courant d'entrée Iin par les unités locales 1432, 1434, 1436, 1438, 1440 de régulation interne de la Figure 19 est décrite de manière plus détaillée.

A titre d'exemple et pour simplifier la Figure 20, seul le module de contrôle 1426 de rang i est représenté partiellement avec son unité de pilotage amplifiée 1446, son unité locale d'équilibrage des tensions cellule 1266, et son unité locale 1436 de régulation interne du courant d'entrée.

Les interfaces d'interaction entre l'unité de pilotage amplifiée 1446, l'unité locale d'équilibrage des tensions cellule 1266 et l'unité locale 1436 de régulation interne du courant d'entrée Iin sont représentées également.

La structure de l'unité locale d'équilibrage des tensions cellule 1266 est identique à celle décrite à la Figure 18.

La structure de unité de pilotage amplifiée 1446 est une structure modifiée de celle décrite dans la Figure 17, dans laquelle le circuit additionneur 1346 a été supprimé.

L'unité locale 1436 de régulation interne du courant d'entrée comprend reliés en série un premier circuit soustracteur 1462 à deux entrées positive 1464 et négative 1466 marquées respectivement sur la Figure 20 par les signes + et -, un premier filtre 1468 de conversion de type proportionnel d'un courant d'erreur de mode commun $\varepsilon_I$ en une tension de référence Vref, un deuxième circuit soustracteur 1470 à deux entrées positive 1472 et négative 1474, marquées respectivement par les signes + et -, et à une borne de sortie 1476, et un deuxième filtre 1478, de type intégrateur et de conversion d'une tension d'erreur $\varepsilon_{Vi}$ en le rapport cyclique Di propre du module de contrôle de rang i.

La fonction de transfert du premier filtre 1468 de type proportionnel s'écrit Z/R, Z et R étant des constantes prédéterminées.

La fonction de transfert du deuxième filtre 1478 de type intégrateur s'écrit 1/Cp, C étant une constante prédéterminée et p étant l'opérateur de Laplace.

L'unité locale 1436 de régulation interne du courant d'entrée Iin de rang i comprend également un circuit proportionnel 1480 de modulation de l'inverse d'un facteur de pente inverse moyenne $\alpha$ par un facteur de correction Vctr(i) dépendant de l'unité locale d'équilibrage des tensions cellule 1266, pour créer en sortie l'inverse d'un facteur de pente inverse corrigée de valeur $\alpha_i$.

Dans la pratique, le circuit proportionnel 1480 est un amplificateur à gain constant $1/Z\alpha$ dont l'entrée est connectée à la sortie de l'unité locale d'équilibrage des tensions cellule 1266.

Sur la Figure 20, le circuit proportionnel 1480 est représenté par un premier circuit multiplieur 1480 ayant une première borne d'entrée 1482 connectée à l'unité locale d'équilibrage des tensions cellule 1266, une deuxième borne d'entrée 1484 de réception du facteur fixé de pente inverse moyen a, et une troisième borne de sortie 1485.

L'unité 1436 de régulation interne du courant d'entrée Iin comprend également un deuxième circuit multiplieur 1490 ayant une première borne d'entrée 1492, connectée à la borne de sortie 1485 du circuit proportionnel 1480, une deuxième borne d'entrée 1492 connectée à une prise de mesure de la tension cellule $V_i$ de la cellule de commutation de rang i, et une borne de sortie 1496 connectée à la borne négative 1474 du deuxième circuit soustracteur 1'70.

Lorsque l'unité locale 1436 de régulation interne fonctionne, le premier circuit soustracteur 1'62 calcule la différence entre le courant de référence prédéterminé Iref et le courant d'entrée Iin mesurée par la prise de mesure de courant d'entrée 1451. Cette différence formant le courant d'erreur de mode commun $\varepsilon_I$ est convertie en une tension de référence Vref par le premier filtre de conversion 1468 caractérisé par sa fonction de transfert Z/R.

L'unité locale d'équilibrage des courants 1266 de rang i délivre un signal de correction de pente Vctr(i) qui est ensuite multiplié par l'inverse du facteur de pente inverse moyen $\alpha$ pour créer en sortie du premier multiplieur 1480 l'inverse d'un facteur de pente inverse corrigé de valeur $\alpha_i$ multiplié par la constante 1/Z.

Le deuxième multiplieur 1490 qui reçoit à la constante de proportionnalité 1/Z près l'inverse du facteur de pente inverse corrigé $\alpha_i$ et la valeur de la tension cellule $V_i$ de la cellule de commutation de rang i calcule le produit $\dfrac{1}{Z}\dfrac{1}{\alpha_i}.V_i$, lequel produit est fourni au deuxième circuit soustracteur 1470.

Suivant la Figure 21, l'unité locale 1436 de régulation interne du courant d'entrée Iin de type ACP est réalisée par exemple par un circuit électronique 1502 dont le cœur est un amplificateur opérationnel 1504.

L'amplificateur opérationnel 1504 comporte une première borne négative 1506 de tension d'entrée, une deuxième borne positive 1508 de tension d'entrée, et une borne de sortie 1510.

Le circuit électronique 1502 comprend une source de tension de référence Vref régulée 1512, connectée à la deuxième borne positive 1508, et une résistance d'entrée de valeur R ayant une première extrémité connectée à la première borne négative 1506 et une deuxième extrémité, connectée à la prise de mesure du courant d'entrée au travers d'un convertisseur courant/tension d'impédance Z pour recevoir le signal de mesure du courant d'entrée convertie en tension.

Le circuit électronique 1502 comprend également une capacité de valeur C, connectée en rétroaction entre la borne de sortie 1510 et la première borne négative 1506 de l'amplificateur opérationnel 1504, et un générateur de tension $\dfrac{1}{Z}\dfrac{1}{\alpha_i}.V_i$ modulé linéairement par la tension cellule $V_i$ de la cellule de commutation de rang i. Le facteur de pente inverse corrigé $\alpha_i$ est fonction d'un facteur de pente inverse moyen $\alpha$ commun à l'ensemble des modules et d'un facteur de correction de pente Vctr(i) propre au module de rang i. Le facteur de correction de pente Vctr(i) dépend de l'équilibrage local de la tension cellule $V_i$ de la cellule de commutation de rang i avec ses deux tensions cellule adjacentes $V_{i-1}$, $V_{i+1}$ des cellules de commutation correspondantes de rang i-1 et i+1.

En régime statique, le courant d'entrée Iin vérifie la relation :

$$I_{in} = I_{ref} + \frac{R.V_i}{Z^2.\alpha_i} \quad \text{(relation 8)}$$

En régime dynamique, la tension $V_{Di}$ représentative du rapport cyclique $D_i$ vérifie la relation :

$$V_{Di}(p) = -\frac{1}{C.p} . \frac{Z.Iin(p)}{R} - \frac{1}{C.p} . \frac{1}{Z.\alpha_i}.V_i(p) \quad \text{(relation 9)},$$

dans laquelle p désigne l'opérateur de Laplace.

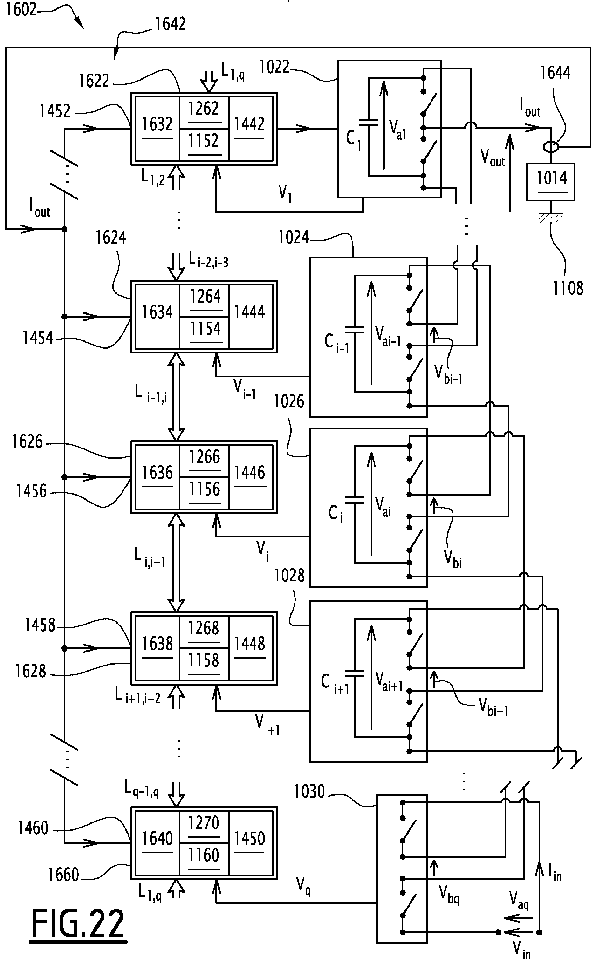

Suivant la Figure 22, une quatrième forme de réalisation 1602 de la CMD du convertisseur statique selon l'invention, dérivée de la troisième forme de réalisation 1402 décrite à la Figure 19, comporte des composants qui, lorsqu'ils sont identiques à ceux décrits sur la Figure 19, portent les mêmes références numériques.

A l'instar du convertisseur statique série 1402 de la Figure 19, chaque module de contrôle 1622, 1624, 1626, 1628, 1630 comprend respectivement la même unité locale 1152, 1154, 1156, 1158, 1160 de génération d'une porteuse propre triangulaire en tension, la même unité locale d'équilibrage des tensions cellule 1262, 1264, 1266, 1268, 1270, et la même unité de pilotage amplifiée 1442, 1444, 1446, 1448, 1450.

A la différence du convertisseur statique 1402 de la Figure 19, les régulations locales internes de type ACP sont des régulations locales du courant de sortie Iout du convertisseur au lieu du courant d'entrée Iin du convertisseur.

Le convertisseur statique 1602 comprend des modules de contrôle 1622, 1624, 1626, 1628, 1630 qui remplacent respectivement les modules de contrôle 1422, 1424, 1456, 1428, 1430, associés respectivement aux cellules de commutation 1022, 1024, 1026, 1028, 1030 et décrits à la Figure 19. Les modules contrôle 1622, 1624, 1626, 1628, 1630 ont les mêmes composants, et la même architecture que les modules de contrôle 1422, 1424, 1456, 1428, 1430, et en diffèrent seulement par les valeurs de réglage des constantes C, R, Z.

A la différence convertisseur statique 1402 de la Figure 19, l'extrémité commune du réseau 1453 de distribution à tous les modules de contrôle de l'observable de courant que l'on souhaite réguler est connectée à une prise de mesure 1644 du courant de sortie Iout.

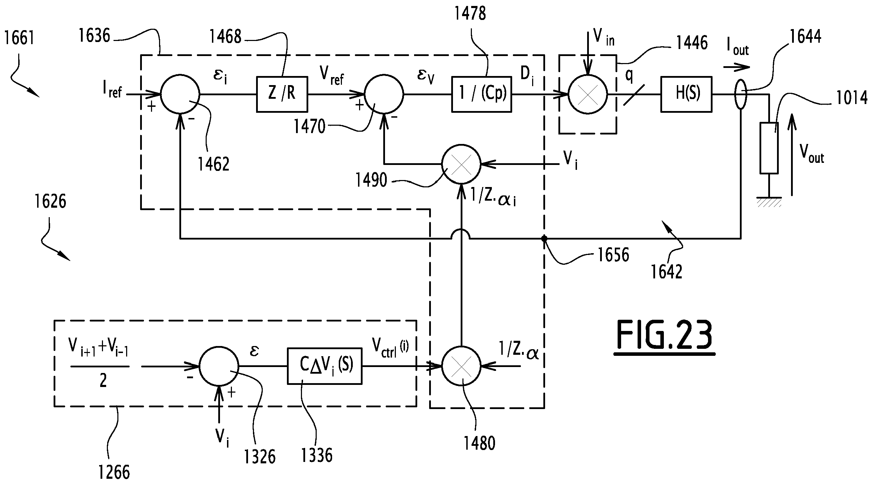

Suivant la Figure 23, la mise en œuvre structurelle des régulations locales internes du courant de sortie par les unités locales 1632, 1634, 1636, 1638, 1640 de régulation interne du courant de sortie de type ACP, est identique à celle décrite dans la Figure 20, à l'exception de la borne d'entrée de chaque premier circuit soustracteur qui est connectée à la prise 1644 de mesure commune du courant de sortie Iout.

Il est à remarquer que pour ce schéma de régulation, en régime statique, le courant de sortie Iout vérifie la relation :

$$I_{out} = I_{ref} + \frac{R.V_i}{Z^2.\alpha_i} * sign(I_{ref}) \quad \text{(relation 10)},$$

dans laquelle sign(.) désigne la fonction signe.

En régime dynamique, la tension $V_{Di}$ représentative du rapport cyclique $D_i$ vérifie la relation :

$$V_{Di}(p) = -\frac{1}{C.p} . \frac{Z.Iout(p)}{R} - \frac{1}{C.p} . \frac{1}{Z.\alpha_i}.V_i(p) \quad \text{(relation 11)}$$

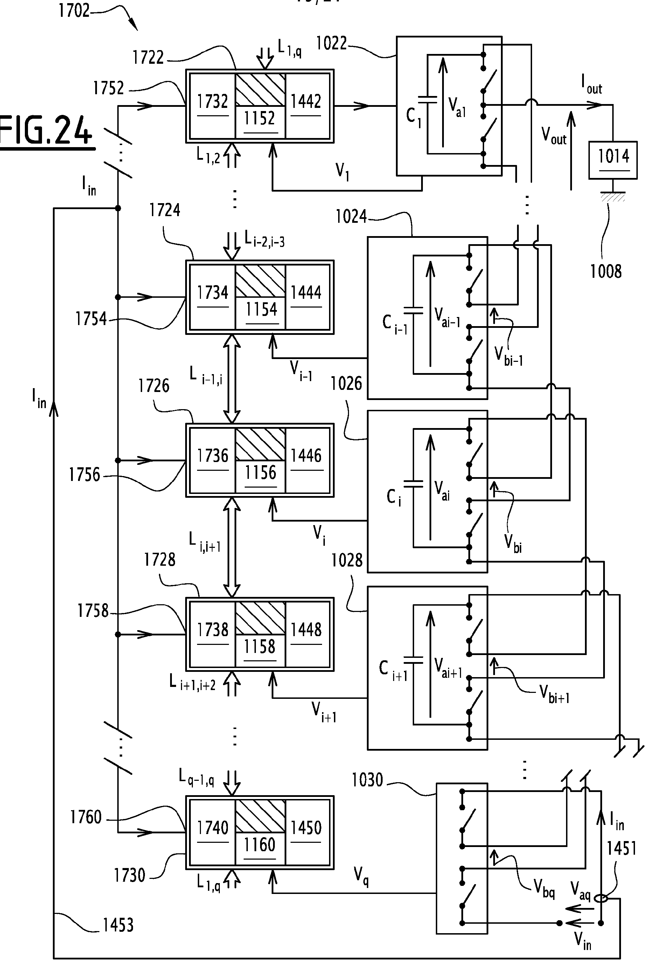

Suivant la Figure 24, une cinquième forme de réalisation 1702 de la CMD du convertisseur statique série selon l'invention, dérivée de la troisième forme de réalisation décrite dans la Figure 19, comprend des composants qui, lorsqu'ils sont identiques à ceux décrits sur la Figure 19, portent les mêmes références numériques.

Le convertisseur statique 1702 comprend des modules de contrôle 1722, 1724, 1726, 1728, 1730 qui remplacent respectivement les modules de contrôle 1422, 1424, 1426, 1428, 1430, associés respectivement aux cellules de commutation 1022, 1024, 1026, 1028, 1030 et décrits à la Figure 19.

A l'instar du convertisseur statique 1402 de la Figure 19, chaque module de contrôle 1722, 1724, 1726, 1728, 1730 comprend respectivement la même unité locale 1152, 1154, 1156, 1158, 1160 de génération d'une porteuse propre triangulaire en tension, et la même unité de pilotage amplifiée 1442, 1444, 1446, 1448, 1450.

A l'instar du convertisseur statique 1402 de la Figure 19, la mise en œuvre oeuvre des régulations locales internes de type ACP requiert la distribution à tous les modules de contrôle par le bus 1453 de l'information concernant le courant d'entrée Iin du convertisseur série prélevée par la prise de mesure de courant d'entrée 1451.

A la différence du convertisseur statique 1402 de la Figure 19, chaque module de contrôle, 1722, 1724, 1726, 1728, 1730 est dépourvu d'une unité locale d'équilibrage des tensions cellule et comprend une unité locale 1732, 1734, 1736, 1738, 1740 de régulation interne du courant d'entrée Iin, de type ACP.

Chaque unité de régulation interne du courant d'entrée de type ACP 1732, 1734, 1736, 1738, 1740 comprend respectivement une boucle de régulation interne en courant d'entrée de type ACP, unique et différente, configurée pour déterminer un rapport cyclique propre $D_1$, $D_{i-1}$, $D_i$, $D_{i+1}$, $D_q$ à partir de la mesure du courant d'entrée Iin, de la mesure de la tension cellule $V_1$, $V_{i-1}$, $V_i$, $V_{i+1}$, $V_q$ de la cellule de commutation correspondante 1022, 1024, 1026, 1028, du courant de référence Iref, et d'un facteur propre de pente inverse corrigé $\alpha_1$, $\alpha_{i-1}$, $\alpha_i$, $\alpha_i$ et $\alpha_q$, réglé sensiblement égal à un même facteur de pente inverse moyen $\alpha$, prédéterminé et commune à l'ensemble des modules de contrôle 1722, 1724, 1726, 1728, 1730.

Chaque rapport cyclique propre Di associé à un module de contrôle, i variant de 1 à q, est fonction de la différence entre une tension de référence Vref et le produit $\frac{1}{\alpha_i}.V_i$ de l'inverse du facteur propre de pente inverse $\alpha_i$ sensiblement égal à $\alpha$ et de la valeur mesurée de la tension cellule $V_i$ de rang i, la tension de référence Vref étant proportionnelle à la différence entre le courant de référence Iref et la valeur du courant d'entrée Iin mesurée suivant une constante de proportionnalité Z/R sensiblement identique par rapport à l'ensemble des modules de contrôle.

Ainsi et par nature, la régulation de courant de type ACP au niveau de chaque cellule offre un équilibrage naturel des tensions de cellules. Il se peut cependant que de légères disparités entre les valeurs des composants des électroniques de chaque module entraine de légers écarts sur les tensions des cellules. Si ces écarts sont tolérables (généralement le cas), l'association dans chaque module des fonctions de régulation du courant de sortie (ou d'entrée) du convertisseur de type ACP et de la génération des porteuses avec gestion de leur entrelacement permet d'obtenir un contrôle entièrement décentralisé d'un convertisseur série comportant un nombre q quelconque de cellules de commutation. Aucun organe de contrôle centralisé n'est plus alors nécessaire.

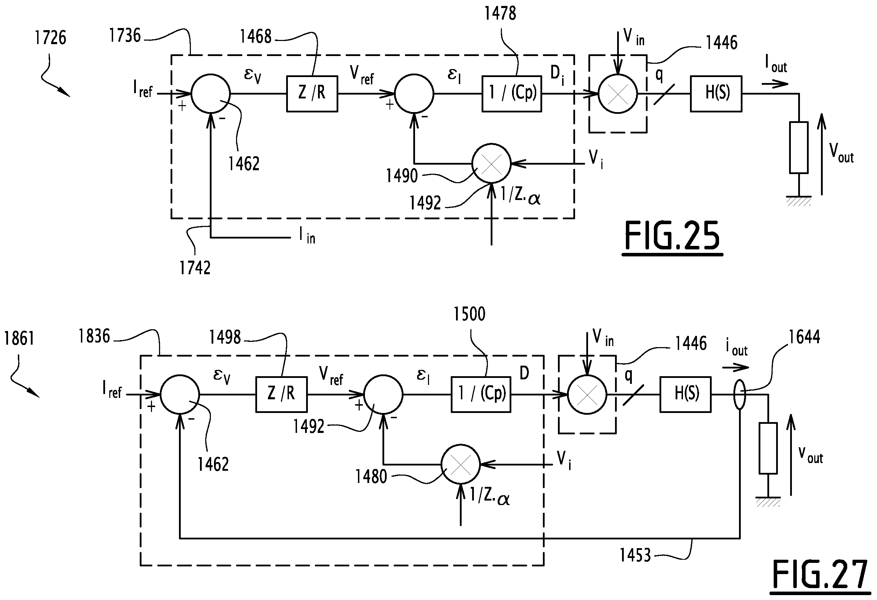

Suivant la Figure 25, la mise en œuvre structurelle des régulations locales internes du courant d'entrée Iin par les unités locales 1732, 1734, 1736, 1738, 1740 de régulation interne du courant d'entrée, de type ACP, est décrite de manière plus détaillée.

A titre d'exemple, et pour simplifier la Figure 25 seul le module de contrôle 1726 de rang i est représenté partiellement avec son unité de pilotage amplifiée 1446, et son unité locale 1736 de régulation interne du courant d'entrée.

Les interfaces d'interaction entre l'unité de pilotage amplifiée 1446 et l'unité locale 1736 de régulation du courant d'entrée Iin sont également représentées.

L'unité locale 1736 de régulation interne du courant d'entrée de type ACP est identique à l'unité locale de régulation interne du courant d'entré en courant d'entrée de type ACP 1436 de la Figure 20 dans laquelle le circuit proportionnel ou le premier circuit multiplieur 1480, connecté alors à une unité locale d'équilibrage des courants, a été supprimé.

Le circuit multiplieur 1490 devient l'unique circuit multiplieur dans lequel la première borne d'entrée 1492 reçoit la consigne propre de l'inverse du facteur de pente inverse corrigé $\alpha_i$ à la constante de proportionnalité près, avec $\alpha_i$ sensiblement égal à $\alpha$, c'est-à-dire reçoit $\frac{1}{Z.\alpha}$.

La deuxième borne d'entrée 1494 reste connectée à la borne de fourniture de la tension cellule $V_i$ par la cellule de commutation de rang i.

L'unité locale 1736 de régulation interne de la tension de sortie est réalisée par exemple par un circuit électronique de même structure que celui 1502 décrit à la Figure 21.

A la différence du circuit 1502 de la Figure 21, le générateur de tension $\frac{1}{Z}\frac{1}{\alpha_i}.V_i$ modulé linéairement par la tension cellule $V_i$ de la cellule de commutation de rang i est remplacé par un générateur de tension de valeur $\frac{1}{Z}\frac{1}{\alpha}.V_i$,

modulé linéairement par la tension cellule $V_i$ suivant un coefficient linéaire $\dfrac{1}{Z.\alpha}$ indépendant du rang i du module de contrôle.

En régime statique, le courant d'entrée Iin vérifie la relation :

$$I_{in} = I_{ref} + \frac{R.V_i}{Z^2.\alpha} \qquad \text{(relation 12)}$$

En régime dynamique, la tension $V_{Di}$ représentative du rapport cyclique $D_i$ vérifie la relation :

$$V_{Di}(p) = -\frac{1}{C.p}.\frac{Z.Iin(p)}{R} - \frac{1}{C.p}.\frac{1}{Z.\alpha}.V_i(p) \quad \text{(relation 13)}.$$

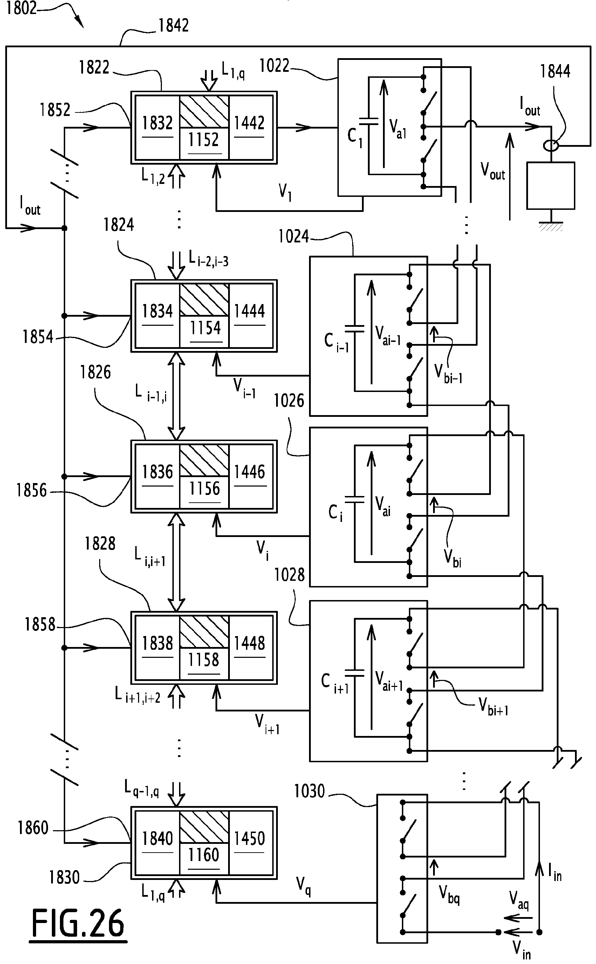

Suivant la Figure 26, une sixième forme de réalisation 1802 de la CMD du convertisseur statique à architecture série selon l'invention, dérivée de la quatrième forme de réalisation décrite dans la Figure 22, comprend des composants commun, qui lorsqu'ils sont identiques à ceux décrits sur la Figure 22, portent les mêmes références numériques.

Le convertisseur statique 1802 comprend des modules de contrôle 1822, 1824, 1826, 1828, 1830 qui remplacent respectivement les modules de contrôle 1622, 1624, 1626, 1628, 1630, associés respectivement aux cellules de commutation 1022, 1024, 1026, 1028, 1030 et décrits à la Figure 22.

A l'instar du convertisseur statique 1602 de la Figure 22, chaque module de contrôle 1822, 1824, 1826, 1828, 1830 comprend respectivement la même unité locale 1152, 1154, 1156, 1158, 1160 de génération d'une porteuse propre triangulaire en tension, et la même unité de pilotage amplifiée 1442, 1444, 1446, 1448, 1450.

A l'instar du convertisseur statique 1602 de la Figure 22, la mise en œuvre des régulations locales internes de type ACP requiert la distribution à tous les modules de contrôle par le bus 1453 de l'information concernant le courant de sortie du convertisseur série prélevée par la prise de mesure de courant d'entrée 1644.

A la différence du convertisseur statique 1602 de la Figure 22, chaque module de contrôle, 1822, 1824, 1826, 1828, 1830 est dépourvu d'une unité locale d'équilibrage des tensions cellule et comprend une unité locale 1832, 1834, 1836, 1838, 1840 de régulation interne du courant de sortie Iout, de type ACP.

Chaque unité de régulation interne du courant de sortie de type ACP 1832, 1834, 1836, 1838, 1840 comprend respectivement une boucle de régulation interne en courant de sortie de type ACP, unique et différente, configurée pour déterminer un rapport cyclique propre $D_1$, $D_{i-1}$, $D_i$, $D_{i+1}$, $D_q$ à partir de la mesure du courant de sortie Iout, de la mesure de la tension cellule $V_1$, $V_{i-1}$, $V_i$, $V_{i+1}$, $V_q$ de la cellule de commutation correspondante 1022, 1024, 1026, 1028, du courant de référence Iref, et d'un facteur de pente inverse corrigé propre $\alpha_1$, $\alpha_{i-1}$, $\alpha_i$, $\alpha_i$ et $\alpha_q$, réglé sensiblement égal à un même facteur de pente inverse moyen $\alpha$, prédéterminé et commun à l'ensemble des modules.

Chaque rapport cyclique propre Di associé à un module de contrôle, i variant de 1 à q, est fonction de la différence entre une tension de référence Vref et le produit $\dfrac{1}{\alpha_i}.V_i$ de l'inverse du facteur propre de pente inverse $\alpha_i$ sensiblement égal à $\alpha$ et de la valeur mesurée de la tension cellule $V_i$ de rang i, la tension de référence Vref étant proportionnelle à la différence entre le courant de référence Iref et la valeur du courant de sortie mesuré suivant une constante de proportionnalité Z/R sensiblement identique par rapport à l'ensemble des modules de contrôle.

Suivant la Figure 27, la mise en œuvre structurelle des régulations locales internes du courant de sortie par les unités locales 1832, 1834, 1836, 1838, 1840 de régulation interne du courant de sortie de type ACP, est identique à celle décrite dans la Figure 25 à l'exception de la borne d'entrée de chaque premier circuit soustracteur, par exemple le circuit 1462, qui est connectée à la prise de mesure commune du courant de sortie 1644, comme décrit à la Figure 26.

Il est à remarquer que pour ce schéma de régulation, en régime statique, le courant de sortie Iout vérifie la relation :

$$I_{out} = I_{ref} + \frac{R.V_i}{Z^2.\alpha} * sign(I_{ref}) \qquad \text{(relation 14)}$$

En régime dynamique, la tension $V_{Di}$ représentative du rapport cyclique $D_i$ vérifie la relation :

$$V_{Di}(p) = -\frac{1}{C.p} \cdot \frac{Z.Iout(p)}{R} - \frac{1}{C.p} \cdot \frac{1}{Z.\alpha} V_i(p) \qquad \text{(relation 15)}$$

Pour l'ensemble des diverses configurations de convertisseurs statiques à architecture parallèle ou série, les interrupteurs des cellules de commutation sont des interrupteurs électroniques classiques

Par exemple, les interrupteurs électroniques sont compris dans l'ensemble formé par les transistors bipolaires, les transistors MOS de puissance, les transistors de type IGBT, les thyristors GTOs etc....

En plus des technologies classiques du silicium, les technologies de type nitrure de gallium GaN et de type carbure de silicium SiC peuvent être utilisées pour réaliser les interrupteurs des convertisseurs statiques décrits ci-dessus.

En variante de chacun des modes de réalisation des convertisseurs statiques décrits ci-dessus, chaque unité de pilotage amplifiée sauf son additionneur lorsqu'il existe ne fait pas partie du module associé mais est disposé à proximité de la cellule de commutation associée.

## Revendications

1. Convertisseur statique à architecture parallèle, destiné à être alimenté par une source de tension Vin et à fournir un courant de sortie Iout, comprenant

    une première borne d'entrée d'alimentation (4), une deuxième borne d'entrée d'alimentation (6), une borne de sortie (10), un nombre total q de cellules de commutation électronique (22, 24, 26, 28, 30) disposées en parallèle, un même nombre total q de branches de sortie (32, 34, 36, 38, 40) reliées en commun suivant des premières extrémités (42, 44, 46, 48, 50) à la borne de sortie (10), un même nombre total q de modules de contrôle (52, 54, 56, 58, 60 ; 252, 254, 256, 258, 260 ; 522, 524, 526, 528, 530 ; 722, 724, 726, 728, 730), une chaîne (61) de q liaisons de communication (64, 66, 68, 70) reliant suivant une boucle fermée les modules de contrôle (52, 54, 56, 58, 60),

    chaque cellule de commutation électronique (22, 24, 26, 28, 30) étant associée à un module de contrôle unique et différent (52, 54, 56, 58, 60 ; 252, 254, 256, 258, 260 ; 522, 524, 526, 528, 530 ; 722, 724, 726, 728, 730) et à une branche de sortie unique et différente (32, 34, 36, 38, 40), le module (56), la cellule de commutation (26) et la branche de sortie (36) associés étant repérés par un même rang entier unique et différent, compris ente 1 et q, de positionnement i au sein de la chaîne de communication (61),

    deux modules de contrôle quelconques (56, 58), adjacents au sein de la chaîne de communication (61) et de rang respectif i, i+1, étant reliés par une liaison de communication unique et différente (68) $L_{i,i+1}$,

    les cellules de commutation (22, 24, 26, 28, 30) comprenant chacune une paire unique et différente de deux interrupteurs électroniques (80 ; 82 , 84 ; 86 , 88 ; 90, 92 ;94, 96 ;98) reliés en série, une première borne d'alimentation de cellule (102, 104, 106, 108, 110), une deuxième borne d'alimentation de cellule (112, 114, 116, 118, 120) et une borne de sortie intermédiaire unique et différente (122, 124, 126, 128, 130), commune aux deux interrupteurs électroniques (80 ; 82 , 84 ; 86 , 88 ; 90, 92 ;94, 96 ;98) reliés en série et reliée à une deuxième extrémité (132, 134, 136,138, 140) de la branche de sortie associée (32, 34, 36, 38, 40),

    les premières bornes d'alimentation (102, 104, 106, 108, 110) et les deuxièmes bornes d'alimentation (112 114, 116, 118, 120) de cellule étant connectés respectivement à la première borne d'entrée d'alimentation (4) et à la deuxième borne d'entrée d'alimentation (6),

    chaque module de contrôle (52, 54, 56, 58, 60 ; 252, 254, 256, 258, 260 ; 522, 524, 526, 528, 530 ; 722, 724, 726, 728, 730) comprenant respectivement une unité locale, unique et différente, de génération d'une porteuse propre triangulaire en tension (152, 154, 156, 158, 160),

    l'unité locale de génération de la porteuse triangulaire (156) d'un module de contrôle quelconque (56 ; 256 ; 526 ; 726) de rang i étant configurée pour contrôler le positionnement de sa phase d'entrelacement au sein de la totalité des porteuses triangulaires entrelacées en fonction seulement des signaux des porteuses triangulaires des deux modules (54, 58 ; 254, 258 ; 524, 528 ; 724, 728) de rang respectif i-1, i+1 adjacents au module quelconque (56 ; 256 ;526 ;726) de rang i, fournis par les deux modules adjacents (54, 58 ; 254, 258 ; 524, 528 ; 724, 728) au module quelconque (56 ; 256 ;526 ;726) au travers des deux liaisons de communication correspondantes (66, 68), i étant compris entre 1 et q, avec i-1 égal à q lorsque i est égal à 1, et i+1 égal à 1 lorsque i est égal à q,

    **caractérisé en ce que**

    chaque module de contrôle (52, 54, 56, 58, 60 ; 252, 254, 256, 258, 260 ; 522, 524, 526, 528, 530 ; 722, 724, 726, 728, 730) comprend respectivement une unité de régulation interne de la tension de sortie de type AVP unique et différente (532, 534, 536, 538, 540 ; 732, 734, 736, 738, 740),

    l'unité de régulation interne de la tension de sortie de type AVP (536 ; 736) d'un module quelconque (56 ; 526, 726) de rang i étant configurée au travers de la mise en œuvre d'une boucle interne propre en tension et/ou en courant pour déterminer un rapport cyclique propre Di, la détermination de Di étant fonction d'un produit de la valeur du courant Ii traversant la branche (36) connectée à la cellule de commutation (26) associée au module quelconque (56 ;526 ; 726) de rang i et d'un facteur de pente αi dépendant du rang i du module (56 ;526).

2. Convertisseur statique à architecture parallèle selon la revendication 1, dans lequel chaque module de contrôle (52, 54, 56, 58, 60 ; 252, 254, 256, 258, 260 ; 522, 524, 526, 528, 530 ; 722, 724, 726, 728, 730) comprend en outre respectivement une unité locale d'équilibrage des courants unique et différente (262, 264, 266, 268, 270), l'unité locale d'équilibrage des courants (266) d'un module quelconque (56 ; 256) de rang i étant configurée pour déterminer une correction de rapport cyclique di en fonction seulement de la différence entre la moyenne des valeurs des deux courants $I_{i-1}$, $I_{i+1}$ traversant les deux branches de sortie (34, 38) des cellules de commutation (24, 28) dont les modules (54, 58 ;254, 256) sont adjacents au module quelconque (56 ; 256) de rang i et la valeur du courant Ii traversant la branche (36) connectée à la cellule de commutation (26) associée au module quelconque (56 ; 256) de rang i.

3. Convertisseur statique à architecture parallèle selon la revendication 2, dans lequel pour chaque branche associée à un module quelconque i, une prise de mesure individuelle du courant Ii traversant la branche est fournie.

4. Convertisseur statique à architecture parallèle selon la revendication 2, dans lequel chaque unité de régulation interne de la tension de sortie de type AVP comprend une boucle de régulation interne en tension de type AVP, configurée pour déterminer un rapport cyclique propre Di de mode commun à partir d'une prise de mesure de la tension de sortie Vout, d'une prise de mesure du courant de sortie Ii traversant la branche associée, d'une tension de référence Vref, et d'un facteur de pente corrigé αi, le facteur de pente corrigé αi est proportionnel au produit d'un facteur de pente principal α moyen commun à l'ensemble des modules et du facteur correctif $V_{ctrl}(i)$ déterminé par l'unité locale d'équilibrage des courants du module i suivant un rapport de proportionnalité indépendant du rang i du module, le rapport cyclique propre Di de mode commun est fonction de la différence entre un courant de référence Iref et du produit du facteur de correction de pente αi et de la valeur du courant Ii de branche mesuré, le courant de référence Irf étant proportionnel à la différence entre la tension de référence Vref et la valeur de la tension de sortie Vout mesurée suivant une constante 1/R sensiblement identique sur l'ensemble des modules.

5. Convertisseur statique à architecture parallèle selon la revendication 1, dans lequel chaque module de contrôle (52, 54, 56, 58, 60 ; 722, 724, 726, 728, 730) comprend une unité de régulation interne de la tension de sortie de type AVP (732, 734, 736, 738, 740) en étant dépourvu d'une unité locale d'équilibrage des courants, et chaque unité de régulation interne de la tension de sortie de type AVP (732, 734, 736, 738, 740) comprend une boucle de régulation interne en tension de type AVP, configurée pour déterminer un rapport cyclique propre Di de mode commun à partir d'une prise de mesure de la tension de sortie Vout, d'une prise de mesure du courant de sortie Ii traversant la branche associée, d'une tension de référence Vref, et un facteur de pente propre de source de courant αi, le facteur de pente propre αi est réglé sensiblement égale à une valeur de facteur de pente principal α commun à l'ensemble des modules, le rapport cyclique propre Di de mode commun est fonction de la différence entre un courant de référence Iref et du produit du facteur de pente propre αi et de la valeur du courant Ii de branche mesuré, le courant de référence Irf étant proportionnel à la différence entre la tension de référence Vref et la valeur de la tension de sortie Vout mesurée suivant une constante 1/R sensiblement identique sur l'ensemble des modules.

6. Convertisseur statique à architecture parallèle selon l'une quelconque des revendications 1 à 5, dans lequel chaque module d'un rang quelconque i, les modules adjacent à ce module de rang i-1, i+1, et les liaisons de communications correspondantes $L_{i-1,i}$, $L_{i,i+1}$ sont configurés pour échanger des informations pertinentes concernant le module de rang quelconque i prises parmi le courant $I_i$ de la branche de rang i, les courants $I_{i+1}$, $I_{i-1}$ des branches adjacentes de rang i-1, i+1, les courants différentiels $I_i - I_{i-1}$ et $I_{i+1} - I_i$, les signaux de porteuse triangulaire du module d'un rang quelconque i et des modules adjacent à ce module de rang i-1, i+1.

7. Convertisseur statique à architecture parallèle selon l'une quelconque des revendications 1 à 6, dans lequel chaque branche (32, 34, 36, 38, 40) comprend une ou plusieurs inductances de lissage, (182, 184, 186, 188, 190) les inductances de lissage de deux branches de deux modules adjacents quelconques pouvant être couplées.

8. Convertisseur statique à architecture parallèle selon l'une quelconque des revendications 1 à 7, dans lequel chaque module de rang i comprend un premier port de connexion et un deuxième port de connexion configurés pour être raccordés en externe à une première liaison de communication et une deuxième liaison de communication suivant un même interface, et en interne aux diverses unités locales, et

chaque module de rang i comprend une unité de déconnexion/connexion des ports de connexion des/aux unités locales et en parallèle de connexion/déconnexion des ports entre eux, la commutation entre un premier état dans lequel les ports sont connectés des unités locales et les ports sont déconnectés, et un deuxième état dans lequel les ports sont déconnectés des unités locales et les ports sont connectés, étant mise en oeuvre par un signal de commande externe au module ou par un signal interne élaboré au sein du module.

9. Convertisseur à architecture série, destiné à être alimenté par un générateur d'alimentation de tension Vin et un courant Iin et à fournir une tension de sortie Vout et un courant de sortie Iout, comprenant

une première borne d'entrée d'alimentation (1004), une deuxième borne d'entrée d'alimentation (1006), une borne de sortie (1010), un nombre total q de cellules de commutation électronique (1022, 1024, 1026, 1028, 1030) disposées en série, un même nombre total q de modules de contrôle (1052, 1054, 1056, 1058, 1060), une chaîne (1061) de q liaisons de communication (1062, 1064, 1066, 1070, 1071, 1072) reliant suivant une boucle fermée les modules de contrôle (1052, 1054, 1056, 1058, 1060),

chaque cellule de commutation électronique (1022, 1024, 1026, 1028, 1030) étant associée à un module de contrôle unique et différent (1052, 1054, 1056, 1058, 1060), la cellule de commutation électronique (1026) et le module de contrôle associé (1056) associés étant repérés par un même rang entier i unique et différent de positionnement, compris entre 1 et q et d'autant plus grand que la cellule de commutation (1026) est connectée au plus près des bores d'entrée d'alimentation (1004, 1006),

deux modules de contrôle quelconques (1056, 1058) adjacents au sein de la chaîne de communication (1061) et de rang i, i+1 étant reliés par une liaison de communication unique et différente (1068) $L_{i,i+1}$,

les cellules de commutation (1022, 1024, 1026, 1028, 1030) comprenant chacune une paire unique et différente d'interrupteurs électroniques (1080 ; 1082, 1084 ; 1086, 1088 ; 1090 , 1092 ; 1094, 1096 ; 1098) reliés en parallèle au travers d'une capacité flottante unique et différente (1102, 1104, 1106, 1108) disposée en entrée de la cellule de commutation (1022, 1024, 1026, 1028) vers les bornes d'entrée d'alimentation (1004, 1006) lorsque le rang de positionnement i est différent de q, une première paire d'entrée de bornes d'entrée (1121 ; 1122, 1123 ; 1124, 1125 ; 1126, 1127 ; 1128, 1129 ; 1130) raccordées en entrée des deux interrupteurs (1080 ; 1082, 1084 ; 1086, 1088 ; 1090 , 1092 ; 1094, 1096 ; 1098) et à la capacité flottante (1102, 1104, 1106, 1108), une deuxième paire de bornes de sortie (1131 ; 1132, 1133 ; 1134, 1135 ; 1136, 1137 ; 1138, 1139; 1140) raccordées en sortie des deux interrupteurs (1080 ; 1082, 1084; 1086, 1088 ; 1090 , 1092 ; 1094, 1096 ; 1098),

chaque module de contrôle (1052, 1054, 1056, 1058, 1060) comprenant respectivement une unité locale, unique et différente, de génération d'une porteuse propre triangulaire en tension (1152, 1154, 1156, 1158, 1160),

l'unité locale de génération de la porteuse triangulaire (1156) d'un module de contrôle quelconque (1056) de rang i étant configurée pour contrôler le positionnement de sa phase d'entrelacement au sein de la totalité des porteuses triangulaires entrelacées en fonction seulement des signaux des porteuses triangulaires des deux modules (1054, 1058) de rang respectif i-1, i+1 adjacents au module quelconque (1056) de rang i, fournis par les deux modules adjacents (1054, 1058) au module quelconque (1056) de rang i au travers des deux liaisons de communication correspondantes (1066, 1068), i étant compris entre 1 et q, avec i-1 égal à q lorsque i est égal à 1, et i+1 égal à 1 lorsque i est égal à q,

**caractérisé en ce que**

chaque module de contrôle (1052, 1054, 1056, 1058, 1060) comprend une unité de régulation interne du courant d'entrée ou de sortie de type ACP unique et différente (1432, 1434, 1436,1438, 1440 ;1632, 1634, 1636, 1638, 1640 ; 1732, 1734, 1736, 1738, 1740 ; 1832, 1834, 1836, 1838, 1840),

l'unité de régulation interne du courant d'entrée ou de sortie de type ACP (1436 ;1636 ;1736 ;1836) d'un module quelconque (1056 ; 1256) de rang i étant configurée au travers de la mise en œuvre d'une boucle interne propre en tension et/ou courant pour déterminer un rapport cyclique propre Di, la détermination de Di étant fonction d'un produit de la valeur de la tension Vi de la cellule de commutation (1026) associée au module quelconque (1056 ; 1256) et d'un facteur de pente $\alpha$i dépendant du rang i du module (1056 ; 1256).

10. Convertisseur statique à architecture série selon la revendication 9, chaque module de contrôle (1052, 1054, 1056, 1058, 1060) comprend une unité locale d'équilibrage de tensions cellule unique et différente (1262, 1264, 1266, 1268, 1270),

l'unité locale d'équilibrage des tensions cellule (1266) d'un module quelconque (1056) de rang i étant configurée pour déterminer une correction de rapport cyclique di en fonction seulement de la différence entre la moyenne des valeurs des deux tensions cellule $V_{i-1}$, $V_{i+1}$ des cellules de commutation (1024, 1028) dont les modules (1054, 1058) de rang respectif i-1, i+1 sont adjacents au module quelconque (1056) de rang i et la valeur de la tension cellule Vi de la cellule de commutation (1026), la tension cellule Vi d'une cellule de commutation quelconque (1026) de rang i étant égale à la différence entre la tension différentielle d'entrée Vai et la tension différentielle de sortie Vbi de la cellule de commutation (1026) de rang i.

11. Convertisseur statique à architecture série selon la revendication 10, dans lequel pour chaque module quelconque i, une prise de mesure de la tension Vi de la cellule de commutation correspondante est fournie au travers d'une première prise de mesure différentielle de la tension en d'entrée Vai et d'une deuxième prise de mesure différentielle de la tension en sortie Vbi.

12. Convertisseur statique à architecture série selon la revendication 9, dans lequel chaque unité locale de régulation interne du courant d'entrée de type ACP (1732, 1734, 1736, 1738, 1740) comprend une boucle de régulation interne en courant de type ACP, configurée pour déterminer un rapport cyclique propre Di à partir d'une prise de mesure du courant d'entrée Iin, d'une prise de mesure de la tension cellule Vi de la cellule de rang i, d'un courant de référence Iref, et un facteur de pente inverse corrigé de source de tension $\alpha$i,

le facteur de pente inverse corrigé $\alpha$i est réglé sensiblement égal à une valeur de facteur de pente inverse principal $\alpha$ commun à l'ensemble des modules,

le rapport cyclique propre Di est fonction de la différence entre une tension de référence Vref et du produit de l'inverse du facteur propre de pente inverse ai et de la valeur de la tension cellule Vi mesurée pour la cellule de rang i, la tension Vref étant proportionnelle à la différence entre le courant de référence iref et la valeur du courant d'entrée Iin mesuré suivant une constante Z/R sensiblement identique sur l'ensemble des modules de contrôle.

13. Convertisseur statique à architecture série selon la revendication 9, dans lequel chaque unité locale de régulation interne du courant de sortie de type ACP (1832, 1834, 1836, 1838, 1840) comprend une boucle de régulation interne en courant de type ACP, configurée pour déterminer un rapport cyclique propre Di à partir d'une prise de mesure du courant de sortie Iout, d'une prise de mesure de la tension cellule Vi de la cellule de rang i, d'un courant de référence Iref, et un facteur de pente inverse corrigé de source de tension $\alpha$i,

le facteur de pente inverse corrigé ai est réglé sensiblement égal à une valeur de facteur de pente inverse principal $\alpha$ commun à l'ensemble des modules,

le rapport cyclique propre Di est fonction de la différence entre une tension de référence Vref et du produit de l'inverse du facteur propre de pente inverse ai et de la valeur de la tension cellule Vi mesurée pour la cellule de rang i, la tension Vref étant proportionnelle à la différence entre le courant de référence iref et la valeur du courant de sortie Iout mesuré suivant une constante Z/R sensiblement identique sur l'ensemble des modules de contrôle.

14. Convertisseur statique à architecture série selon l'une quelconque des revendications 9 à 13, dans lequel chaque module d'un rang quelconque i, les modules adjacent à ce module de rang i-1, i+1, et les liaisons de communications correspondantes $L_{i-1,i}$, $L_{i,i+1}$ sont configurés pour échanger des informations pertinentes concernant le module de rang quelconque i prises parmi la tension cellule $V_i$ de la cellule de rang i, les tensions cellule $V_{i+1}$, $V_{i-1}$ des cellules adjacentes de rang i-1, i+1, les signaux de porteuse triangulaire du module d'un rang quelconque i et des modules adjacent à ce module de rang i-1, i+1.

15. Convertisseur statique à architecture série selon l'une quelconque des revendications 9 à 14, dans lequel chaque module de rang i comprend un premier port de connexion et un deuxième port de connexion configurés pour être raccordés en externe à une première liaison de communication et une deuxième liaison de communication suivant un même interface, et en interne aux diverses unités locales, et

chaque module de rang i comprend une unité de déconnexion/connexion des ports de connexion des/aux unités locales et en parallèle de connexion/déconnexion des ports entre eux, la commutation entre un premier état dans lequel les ports sont connectés des unités locales et les ports sont déconnectés, et un deuxième état dans lequel les ports sont déconnectés des unités locales et les ports sont connectés, étant mise en oeuvre par un signal de commande externe au module ou par un signal interne élaboré au sein du module.

**Patentansprüche**

1. Statischer Wandler mit paralleler Architektur, der von einer Spannungsquelle Vin versorgt werden soll und einen Ausgangsstrom Iout bereitstellen soll, aufweisend

einen ersten Stromeingangsanschluss (4), einen zweiten Stromeingangsanschluss (6), einen Ausgangsanschluss (10), eine Gesamtzahl q elektronischer Schaltzellen (22, 24, 26, 28, 30), die parallel angeordnet sind, die gleiche Gesamtzahl q von Ausgangszweigen (32, 34, 36, 38, 40), die über erste Enden (42, 44, 46, 48, 50) gemeinsam mit dem Ausgangsanschluss (10) verbunden sind, die gleiche Gesamtzahl q von Steuermodulen (52, 54, 56, 58, 60;

252, 254, 256, 258, 260; 522, 524, 526, 528, 530; 722, 724, 726, 728, 730), eine Kette (61) von q Kommunikationsverbindungen (64, 66, 68, 70), die gemäß einer geschlossenen Regelschleife die Steuermodule (52, 54, 56, 58, 60) verbindet,

wobei jede elektronische Schaltzelle (22, 24, 26, 28, 30), einem eineindeutigen Steuermodul (52, 54, 56, 58, 60; 252, 254, 256, 258, 260; 522, 524, 526, 528, 530; 722, 724, 726, 728, 730) und einem eineindeutigen Ausgangszweig (32, 34, 36, 38, 40) zugeordnet ist, wobei das Modul (56), die Schaltzelle (26) und der zugeordnete Ausgangszweig (36) durch denselben eineindeutigen ganzen Rang zwischen 1 und q der Positionierung i innerhalb der Kommunikationskette (61) identifiziert werden,

zwei beliebige Steuermodule (56, 58), die innerhalb der Kommunikationskette (61) aneinander angrenzend sind und den jeweiligen Rang i, i + 1 haben und durch eine eineindeutige Kommunikationsverbindung (68) $L_{i,i+1}$ verbunden sind,

wobei die Schaltzellen (22, 24, 26, 28, 30) jeweils ein eineindeutiges Paar von zwei elektronischen Schaltern (80; 82, 84; 86, 88; 90, 92; 94, 96; 98), die in Reihe geschaltet sind, einen ersten Zellenstromversorgungsanschluss (102, 104, 106, 108, 110), einen zweiten Zellenstromversorgungsanschluss (112, 114, 116, 118, 120) und einen eineindeutigen Ausgangszwischenanschluss (122, 124, 126, 128, 130) aufweisen, der den beiden elektronischen Schaltern (80; 82, 84; 86, 88; 90, 92; 94, 96; 98), die in Reihe geschaltet sind, gemeinsam ist, und mit einem zweiten Ende (132, 134, 136, 138, 140) des zugeordneten Ausgangszweigs (32, 34, 36, 38, 40) verbunden ist,

wobei die ersten Stromversorgungsanschlüsse (102, 104, 106, 108, 110) und die zweiten Stromversorgungsanschlüsse (112, 114, 116, 118, 120) der Zelle jeweils mit dem ersten Stromeingangsanschluss (4) und dem zweiten Stromeingangsanschluss (6) verbunden sind,

wobei jedes Steuermodul (52, 54, 56, 58, 60; 252, 254, 256, 258, 260; 522, 524, 526, 528, 530; 722, 724, 726, 728, 730) jeweils eine eineindeutige lokale Einheit zur Erzeugung eines eigenen Dreiecksspannungsträgers (152, 154, 156, 158, 160) aufweist,

wobei die lokale Einheit zum Erzeugen des Dreiecksträgers (156) eines beliebigen Steuermoduls (56; 256; 526; 726) mit Rang i eingerichtet ist, die Positionierung seiner Verschachtelungsphase innerhalb aller verschachtelten Dreiecksträger nur in Funktion der Signale der Dreiecksträger der beiden Module (54, 58; 254, 258; 524, 528; 724, 728) mit jeweiligem Rang i-1, i + 1 neben dem beliebigen Modul (56; 256; 526; 726) mit Rang i, die von den beiden angrenzenden Modulen (54, 58; 254, 258; 524, 528; 724, 728) über die beiden zugeordneten Kommunikationsverbindungen (66, 68) an das beliebige Modul (56; 256; 526; 726) geliefert werden, steuert, wobei i zwischen 1 und q liegt, wobei i-1 gleich q ist, wenn i gleich 1 ist, und i + 1 gleich 1 ist, wenn i gleich q ist,

**dadurch gekennzeichnet, dass**

jedes Steuermodul (52, 54, 56, 58, 60; 252, 254, 256, 258, 260; 522, 524, 526, 528, 530; 722, 724, 726, 728, 730) jeweils eine eineindeutige lokale interne Einheit zum Regeln der Ausgangsspannung vom AVP-Typ (532, 534, 536, 538, 540; 732, 734, 736, 738, 740) aufweist,

wobei die lokale interne Einheit zum Regeln der Ausgangsspannung vom AVP-Typ (536; 736) eines beliebigen Moduls (56; 526, 726) mit Rang i durch die Implementierung einer eigenen internen Spannungs- und/oder Stromschleife eingerichtet ist, ein eigenes Tastverhältnis Di zu bestimmen, wobei die Bestimmung von Di eine Funktion eines Produkts des Wertes des Stroms Li, der durch den Zweig (36) fließt, der mit der Schaltzelle (26) verbunden ist, die dem beliebigen Modul (56; 526; 726) mit Rang i zugeordnet ist, und eines Steigungsfaktor $\alpha$i, der vom Rang i des Moduls (56; 526) abhängt, ist.

2. Statischer Wandler mit paralleler Architektur nach Anspruch 1, wobei jedes Steuermodul (52, 54, 56, 58, 60; 252, 254, 256, 258, 260; 522, 524, 526, 528, 530 ; 722, 724, 726, 728, 730) außerdem jeweils eine eineindeutige lokale Stromausgleichseinheit (262, 264, 266, 268, 270) aufweist,

wobei die lokale Stromausgleichseinheit (266) eines beliebigen Moduls (56; 256) mit Rang i eingerichtet ist, eine Tastverhältniskorrektur di als Funktion nur der Differenz zwischen dem Durchschnitt der Werte der beiden Ströme $I_{i-1}$, $I_{i+1}$, die durch die beiden Ausgangszweige (34, 38) der Schaltzellen (24, 28) fließen, deren Module (54, 58; 254, 256) an das beliebige Modul (56; 256) mit Rang i angrenzen, und dem Wert des Stroms, $I_i$, der durch den Zweig (36) fließt, der mit der Schaltzelle (26) verbunden ist, die dem beliebigen Modul (56; 256) mit Rang i zugeordnet ist, zu bestimmen.

3. Statischer Wandler mit paralleler Architektur nach Anspruch 2, bei dem für jeden Zweig, der einem beliebigen Modul i zugeordnet ist, eine individuelle Messung des Stroms $I_i$, der den Zweig durchfließt, bereitgestellt wird.

4. Statischer Wandler mit paralleler Architektur nach Anspruch 2, wobei jede interne Einheit zum Regeln der Ausgangsspannung vom Typ AVP eine interne Spannungsregelungsschleife vom AVP-Typ aufweist, die konfiguriert ist, ein eigenes Gleichtakt-Tastverhältnis Di aus einer Messung der Ausgangsspannung Vout, einer Messung des Ausgangsstroms Ii, der den zugeordneten Zweig durchfließt, einer Referenzspannung Vref und eines korrigierten Steigungsfaktors ai zu bestimmen,
wobei der korrigierte ai Steigungsfaktor proportional zum Produkt eines allen Modulen gemeinsamen Hauptsteigungsfaktors $\alpha$ und des Korrekturfaktors $V_{ctrl}(i)$ ist, der durch die lokale Stromausgleichseinheit des Moduls i gemäß einem Proportionalitätsverhältnis unabhängig vom Rang i des Moduls bestimmt wird,
wobei das eigene Gleichtakt-Tastverhältnis Di eine Funktion der Differenz zwischen einem Referenzstrom Iref und dem Produkt des Steigungskorrekturfaktors ai und des Werts des gemessenen Zweigstroms Ii ist, wobei der Referenzstrom Irf proportional zur Differenz zwischen der Referenzspannung Vref und dem Wert der Ausgangsspannung Vout, gemessen gemäß einer Konstante 1 / R, die bei allen Modulen im Wesentlichen identisch ist, ist.

**5.** Statischer Wandler mit paralleler Architektur nach Anspruch 1, wobei jedes Steuermodul (52, 54, 56, 58, 60; 722, 724, 726, 728, 730) eine interne Ausgangsspannungsregeleinheit vom AVP-Typ (732, 734, 736, 738, 740) aufweist, und frei ist von einer lokalen Stromausgleichseinheit, und
jede interne Spannungsregelungseinheit vom AVP-Typ (732, 734, 736, 738, 740) eine interne Spannungsregelungsschleife vom AVP-Typ, die eingerichtet ist, ein eigenes Gleichtakt-Tastverhältnis Di ausgehend von einer Messung der Ausgangsspannung Vout, einer Messung des Ausgangsstroms Ii, die den zugeordneten Zweig durchfließt, einer Referenzspannung Vref und einem Steigungsfaktor $\alpha i$, der für die Stromquelle spezifisch ist, zu bestimmen
wobei der eigene Steigungsfaktor ai im Wesentlichen gleich einem Wert des Hauptsteigungsfaktors $\alpha$ gesetzt ist, der allen Modulen gemeinsam ist,
wobei das eigene Gleichtakt-Tastverhältnis Di eine Funktion der Differenz zwischen einem Referenzstrom Iref und dem Produkt des eigenen Steigungsfaktors ai und des Wert des gemessenen Zweigstroms Ii ist, wobei der Referenzstrom Irf proportional zur Differenz zwischen der Referenzspannung Vref und dem Wert der Ausgangsspannung Vout, gemessen gemäß einer Konstante 1 / R, die bei allen Modulen im Wesentlichen identisch ist, ist.

**6.** Statischer Wandler mit paralleler Architektur nach einem der Ansprüche 1 bis 5, wobei jedes Modul mit einem beliebigen Rang i, die diesem Modul angrenzenden Module mit Rang i-1, i+1 und die zugeordneten Kommunikationsverbindungen , $L_{i-1,i}$, $L_{i,i+1}$ eingerichtet sind zum Austauschen von relevante Informationen über das Modul des beliebigen Rangs i, ausgewählt aus dem Strom Ii des Zweigs mit Rang i, den Strömen $I_{i+1}$, $I_{i-1}$ der angrenzenden Zweige mit Rang i-1, i+1, den Differenzströmen $I_i$- $I_{i-1}$ und $I_{i+1}$- $I_i$, der Dreiecksträgersignale des Moduls mit dem beliebigen Rang i und der an dieses Modul angrenzenden Module mit Rang i-1, i+1.

**7.** Statischer Wandler mit paralleler Architektur nach einem der Ansprüche 1 bis 6, wobei jeder Zweig (32, 34, 36, 38, 40) einen oder mehrere Glättungsinduktivitäten (182, 184, 186, 188, 190) enthält, wobei die Glättungsinduktivitäten von zwei Zweigen von zwei angrenzenden Modulen, gekoppelt werden können.

**8.** Statischer Wandler mit paralleler Architektur nach einem der Ansprüche 1 bis 7, wobei
jedes Modul mit Rang i einen ersten Verbindungsport und einen zweiten Verbindungsport aufweist, eingerichtet zum Verbinden extern mit einer ersten Kommunikationsverbindung und einer zweiten Kommunikationsverbindung gemäß derselben Schnittstelle, und intern mit den verschiedenen lokalen Einheiten und
jedes Modul mit Rang i eine Einheit zum Trennen/Verbinden der Verbindungsports von/mit den lokalen Einheiten und parallel zum Verbinden/Trennen der Ports untereinander aufweist, wobei das Umschalten zwischen einem ersten Zustand, in dem die Ports mit den lokalen Einheiten verbunden sind, und die Ports getrennt sind, und einem zweiten Zustand, in dem die Ports von den lokalen Einheiten getrennt sind und die Ports verbunden sind, durch ein Steuersignal außerhalb des Moduls oder durch ein internes Signal, das innerhalb des Moduls erzeugt wird, durchgeführt wird.

**9.** Statischer Wandler mit serieller Architektur, der von einem Generator einer Versorgungsspannung Vin und einem Strom Iin versorgt werden soll und eine Ausgangsspannung Vout und einen Ausgangsstrom Iout bereitstellen soll, aufweisend
einen ersten Stromeingangsanschluss (1004), einen zweiten Stromeingangsanschluss (1006), einen Ausgangsanschluss (1010), eine Gesamtzahl q elektronischer Schaltzellen (1022, 1024, 1026, 1028, 1030) ,die in Reihe angeordnet sind, die gleiche Gesamtzahl q von Steuermodulen (1052, 1054, 1056, 1058, 1060), eine Kette (1061) von q Kommunikationsverbindungen (1062, 1064, 1066, 1070, 1071, 1072), die die Steuermodule (1052, 1054, 1056, 1058, 1060) gemäß einer geschlossenen Regelschleife verbindet,
wobei jede elektronische Schaltzelle (1022, 1024, 1026, 1028, 1030) einem eineindeutigen Steuermodul (1052, 1054, 1056, 1058, 1060) zugeordnet ist, wobei die elektronische Schaltzelle (1026) und das zugeordnete Steuermodul (1056) durch denselben eineindeutigen ganzzahligen Rang i der Positionierung identifiziert wird, der zwischen 1 und 1 liegt und umso größer ist, je näher die Schaltzelle (1026) an den Stromeingangsanschlüssen (1004, 1006) angeschlossen ist,

wobei zwei beliebige Steuermodule (1056, 1058), die innerhalb der Kommunikationskette (1061) aneinander angrenzen und den Rang i, i+1 haben, durch eine eineindeutige Kommunikationsverbindung (1068) $L_{i,i+1}$ verbunden sind,

wobei die Schaltzellen (1022, 1024, 1026, 1028, 1030) jeweils ein eineindeutiges Paar elektronischer Schalter (1080; 1082, 1084; 1086, 1088; 1090, 1092; 1094, 1096; 1098), die parallel durch einen eineindeutigen schwebenden Kondensator (1102, 1104, 1106, 1108) verbunden sind, der am Eingang der Schaltzelle (1022, 1024, 1026, 1028) zu den Eingangsanschlüssen der Stromversorgung (1004, 1006) hin angeordnet ist, wenn sich der Positionierungsrang i von q unterscheidet, ein erstes Eingangspaar von Eingangsanschlüssen (1112; 1122, 1123; 1124, 1125; 1126, 1127; 1128, 1129; 1130), die eingangsseitig mit den beiden Schaltern (1080; 1082, 1084; 1086, 1088; 1090, 1092; 1094, 1096; 1098) und mit der schwebenden Kapazität (1102, 1104, 1106, 1108) verbunden sind und ein zweites Paar von Ausgangsanschlüssen (1131; 1132, 1133; 1134, 1135; 1136, 1137; 1138, 1139; 1140) aufweist, die ausgangsseitig mit den beiden Schaltern (1080; 1082, 1084; 1086, 1088; 1090, 1092; 1094, 1096; 1098) verbunden sind,

wobei jedes Steuermodul (1052, 1054, 1056, 1058, 1060) jeweils eine eineindeutige lokale Einheit zum Erzeugen eines eigenen Dreiecksspannungsträgers (1152, 1154, 1156, 1158, 1160) aufweist,

wobei die lokale Einheit zum Erzeugen des Dreiecksträgers (1156) eines beliebigen Steuermoduls (1056) mit Rang i eingerichtet ist, die Positionierung seiner Verschachtelungsphase innerhalb aller verschachtelten Dreiecksträger gemäß nur in Abhängigkeit der Signale von den Dreiecksträgern der beiden Module (1054, 1058) mit jeweiligem Rang i-1, i + 1 angrenzend an das beliebige Modul (1056) mit Rang i, die von den beiden angrenzenden Modulen (1054, 1058) an das beliebige Modul (1056) mit Rang i über die beiden zugeordneten Kommunikationsverbindungen (1066, 1068) geliefert werden, zu steuern, wobei i zwischen 1 und q liegt, wobei i-1 gleich q ist, wenn i gleich 1 ist, und i+1 gleich 1 ist, wenn i gleich q ist,

**dadurch gekennzeichnet, dass**

jedes Steuermodul (1052, 1054, 1056, 1058, 1060) eine eineindeutige interne Einheit zum Regeln des Eingangs- oder Ausgangsstroms vom ACP-Typ (1432, 1434, 1436, 1438, 1440; 1632, 1634, 1636, 1638, 1640; 1732, 1734, 1736, 1738, 1740; 1832, 1834, 1836, 1838; 1840) aufweist,

wobei die interne Regeleinheit des Eingangs- oder Ausgangsstroms vom Typ ACP (1436; 1636; 1736; 1836) eines beliebigen Moduls (1056; 1256) mit Rang i durch die Implementierung einer eigenen internen Spannungs- und/oder Stromschleife zum Bestimmen eines eigenen Tastverhältnisses Di eingerichtet ist, wobei die Bestimmung von Di eine Funktion eines Produkts des Wertes der Spannung Vi der Schaltzelle (1026) ist, die dem beliebigen Modul (1056, 1256) zugeordnet ist und eines Steigungsfaktor ai ist, der vom Rang i des Moduls (1056; 1256) abhängt.

10. Statischer Wandler mit serieller Architektur nach Anspruch 9, wobei jedes Steuermodul (1052, 1054, 1056, 1058, 1060) eine eineindeutige lokale Zellenspannungsausgleichseinheit (1262, 1264, 1266, 1268, 1270) aufweist,

wobei die lokale Stromausgleichseinheit (1266) eines beliebigen Moduls (1056) mit Rang i eingerichtet ist, eine Tastverhältniskorrektur di als Funktion nur der Differenz zwischen dem Durchschnitt der Werte der beiden Spannungen $V_{i-1}$, $V_{i+1}$ der Schaltzellen (1024, 1028), deren Module (1054, 1058) mit jeweiligem Rang i-1, i+1 an das beliebige Modul (1056) mit Rang i angrenzen, und dem Zellenspannungswert $V_i$ der Schaltzelle (1026) zu bestimmen, wobei die Zellenspannung Vi einer beliebigen Schaltzelle (1026) mit Rang i gleich der Differenz zwischen der differenziellen Eingangsspannung Vai und der differenziellen Ausgangsspannung Vbi der Schaltzelle (1026) mit Rang i ist.

11. Statischer Wandler mit serieller Architektur nach Anspruch 10, in dem für jedes beliebige Modul i eine Messung der Spannung Vi der zugeordneten Schaltzelle durch eine erste Messung der differenziellen Eingangsspannung Vai und einer zweiten Messung der differenziellen Ausgangsspannung Vbi bereitgestellt wird.

12. Statischer Wandler mit serieller Architektur nach Anspruch 9, wobei jede lokale Einheit zur internen Regelung des Eingangsstroms vom ACP-Typ (1732, 1734, 1736, 1738, 1740) eine interne Stromregelschleife vom ACP-Typ aufweist, die eingerichtet ist, ein eigenes Tastverhältnis Di aus einer Messung des Eingangsstroms Iin, einer Messung der Zellenspannung Vi der Zelle mit Rang i, einem Referenzstrom Iref und einem korrigierten inversen Steigungsfaktor der Spannungsquelle ai zu bestimmen,

wobei der korrigierte inverse Steigungsfaktor ai im Wesentlichen gleich einem inversen Hauptsteigungsfaktorwerts gesetzt wird, der allen Modulen gemeinsam ist,

wobei das eigene Tastverhältnis Di eine Funktion der Differenz zwischen einer Referenzspannung Vref und dem Produkt der Inversen des eigenen inversen Steigungsfaktors ai und des Wertes der Zellenspannung Vi, gemessen für die Zelle mit Rangs i, ist, wobei die Spannung Vref proportional zur Differenz zwischen dem Referenzstrom iref und dem Wert des Eingangsstroms Iin ist, gemessen gemäß einer für alle Steuermodule im Wesentlichen identischen Konstanten Z / R an allen Steuermodule.

13. Statischer Wandler mit serieller Architektur nach Anspruch 9, bei dem jede lokale interne Stromsteuereinheit vom ACP-Typ (1832, 1834, 1836, 1838, 1840) eine interne Stromregelschleife vom ACP-Typ aufweist, die eingerichtet ist, um sein eigenes Tastverhältnis Di aus einer Messung des Ausgangsstroms Iout, einer Messung der Zellenspannung Vi der Zelle mit Rang i, einem Referenzstrom Iref und einem korrigierten inversen Steigungsfaktor der Spannungsquelle ai zu bestimmen,

wobei der korrigierte inverse Steigungsfaktor ai im Wesentlichen gleich einem Wert des inversen Hauptsteigungsfaktors gesetzt wird, der allen Modulen gemeinsam ist,

wobei das eigene Tastverhältnis Di eine Funktion der Differenz zwischen einer Referenzspannung Vref und dem Produkt des eigenen inversen Steigungsfaktors der ai und des Wertes der Zellenspannung Vi, gemessen für die Zelle mit Rang i, ist, wobei die Spannung Vref proportional zu der Differenz zwischen dem Referenzstrom iref und dem Wert des Ausgangsstroms Iout ist, gemessen gemäß einer für alle Steuermodule im Wesentlichen identischen Konstanten Z / R an allen Steuermodule.

14. Statischer Wandler mit serieller Architektur nach einem der Ansprüche 9 bis 13, wobei jedes Modul eines beliebigen Ranges i, die an dieses Modul angrenzenden Module des Ranges i-1, i+1 und die entsprechenden Kommunikationsverbindungen $L_{i-1}$, $L_{i+1}$ zum Austauschen von relevanten Informationen bezüglich des Moduls eines beliebigen Ranges i eingerichtet sind, ausgewählt aus der Zellenspannung $V_i$ der Zelle mit Rang i, den Zellenspannungen $V_{i+1}$, $V_{i-1}$ der angrenzenden Zellen mit Rang i-1, i+1, den Dreiecksträgersignalen des Moduls mit beliebigen Ranges i und der an dieses Modul angrenzenden Module mit Rang i-1, i+1.

15. Statischer Wandler mit serieller Architektur nach einem der Ansprüche 9 bis 14, wobei

jedes Modul mit Rang i einen ersten Verbindungsport und einen zweiten Verbindungsport aufweist, die so eingerichtet sind, dass sie extern mit einer ersten Kommunikationsverbindung und einer zweiten Kommunikationsverbindung gemäß derselben Schnittstelle und intern mit den verschiedenen lokalen Einheiten verbunden sind und

jedes Modul mit Rang i eine Einheit zum Trennen/Verbinden der Verbindungsports von/mit den lokalen Einheiten und parallel zum Verbinden/Trennen der Ports untereinander aufweist, wobei das Umschalten zwischen einem ersten Zustand, in dem die Ports mit den lokalen Einheiten verbunden sind und die Ports getrennt sind, und einem zweitem Zustand, in dem die Ports von den lokalen Einheiten getrennt sind und die Ports verbunden sind, durch ein Steuersignal außerhalb des Moduls oder durch ein internes Signal, das innerhalb des Moduls erzeugt wird, durchgeführt wird.

**Claims**

1. A static converter with parallel architecture, designed to be powered by a voltage source Vin and to provide an output current Iout, comprising

a first power supply input terminal (4), a second power supply input terminal (6), an output terminal (10), a total number q of electronic switching cells (22, 24, 26, 28, 30) arranged in parallel, a total number q of output branches (32, 34, 36, 38, 40) connected in common along first ends (42, 44, 46, 48, 50) to the output terminal (10), a same total number q of control modules (52, 54, 56, 58, 60; 252, 254, 256, 258, 260; 522, 524, 526, 528, 530; 722, 724, 726, 728, 730), a chain (61) of q communication links (64, 66, 68, 70) connecting the control modules (52, 54, 56, 58, 60) in a closed loop,

each electronic switching cell (22, 24, 26, 28, 30) being associated with a single and different control module (52, 54, 56, 58, 60; 252, 254, 256, 258, 260; 522, 524, 526, 528, 530; 722, 724, 726, 728, 730) and with a single and different output branch (32, 34, 36, 38, 40), the associated module (56), switching cell (26) and output branch (36) being identified by a same single and different integer rank, comprised between 1 and q, for positioning i within the communication chain (61),

any two control modules (56, 58), adjacent within the communication chain (61) and with respective rank i, i+1, being connected by a single and different communication link (68) $L_{i,i+1}$,

the switching cells (22, 24, 26, 28, 30) each comprising a single and different pair of two electronic switches (80; 82, 84; 86, 88; 90, 92; 94, 96; 98) connected in series, a first cell power supply terminal (102, 104, 106, 108, 110), a second cell power terminal supply (112, 114, 116, 118, 120) and a single and different intermediate output terminal (122, 124, 126, 128, 130), shared by the two electronic switches (80; 82, 84; 86, 88; 90, 92; 94, 96; 98) connected in series and connected to a second end (132, 134, 136, 138, 140) of the associated output branch (32, 34, 36, 38, 40), the first cell power supply terminals (102, 104, 106, 108, 110) and the second cell power supply terminals (112, 114, 116, 118, 120) being connected to the first power supply input terminal (4) and the second power supply input terminal (6), respectively,

each control module (52, 54, 56, 58, 60; 252, 254, 256, 258, 260; 522, 524, 526, 528, 530; 722, 724, 726, 728, 730) respectively comprising a single and different local unit for generating a unique triangular voltage carrier (152, 154, 156, 158, 160),

the local unit for generating the triangular carrier (156) of any control module (56; 256; 526; 726) with rank i being configured to control the positioning of its interleaving phase within all of the interleaved triangular carriers based solely on the signals of the triangular carriers of the two modules (54, 58; 254, 258; 524, 528; 724, 728) with respective rank i-1, i+1 adjacent to the any module (56; 256; 526; 726) with rank i, provided by the two modules (54, 58; 254, 258; 524, 528; 724, 728) adjacent to the any module (56; 256; 526; 726) through two corresponding communication links (66, 68), i being comprised between 1 and q, with i-1 equal to q when i is equal to 1, and i+1 equal to 1 when i is equal to q,

**characterized in that**

each control module (52, 54, 56, 58, 60 ; 252, 254, 256, 258, 260 ; 522, 524, 526, 528, 530 ; 722, 724, 726, 728, 730) respectively comprises a single and different unit for internal regulation of the output voltage of the AVP type (532, 534, 536, 538, 540 ; 732, 734, 736, 738, 740),

the internal unit regulating the output voltage of the AVP type (536; 736) of any module (56; 526; 726) with rank i being configured by implementing a unique internal voltage and/or current loop to determine a unique cyclic ratio Di, the determination of Di depending on a product of the value of the current li passing through the branch (36) connected to the switching cell (26) associated with the any module (56; 526; 726) with rank i and a slope factor $\alpha i$ depending on the rank i of the module (56; 526).

2. The static converter with parallel architecture according to claim 1, each control module (52, 54, 56, 58, 60 ; 252, 254, 256, 258, 260 ; 522, 524, 526, 528, 530 ; 722, 724, 726, 728, 730) further respectively comprises a single and different local unit for balancing the currents (262, 264, 266, 268, 270),

the local unit for balancing the currents (266) of any module (56; 256) with rank i being configured to determine a cyclic ratio correction di based solely on the difference between the mean of the values of the two currents $I_{i-1}$, $I_{i+1}$ passing through the two output branches (34, 38) of the switching cells (24, 28) whose modules (54, 58; 254, 256) are adjacent to the any module (56; 256) with rank i and the value of the current li passing through the branch (36) connected to the switching cell (26) associated with the any module (56; 256) of rank i.

3. The static converter with parallel architecture according to claim 2,

wherein for each branch associated with any module i, an individual measurement of the current li passing through the branch is provided.

4. The static converter with parallel architecture according to claim 2, wherein

each internal unit for regulating the output voltage of the AVP type comprises an internal loop for regulating the voltage of the AVP type, configured to determine a unique common mode cyclic ratio Di from a measurement of the output voltage Vout, a measurement of the output current li passing through the associated branch, a reference voltage Vref, and a corrected slope factor $\alpha i$,

the corrected slope factor $\alpha i$ is proportional to the product of a mean main slope factor $\alpha$ shared by all of the modules and the corrective factor $V_{ctrl}(i)$ determined by the local unit for balancing the currents of the module i according to a proportionality ratio independent of the rank i of the module,

the unique common mode cyclic ratio Di depends on the difference between a reference current Iref and the product of the slope correction factor $\alpha i$ and the value of the measured branch current li, the reference current Irf being proportional to the difference between the reference voltage Vref and the value of the output voltage Vout measured according to a constant 1/R that is substantially identical over all of the modules.

5. The static converter with parallel architecture according to claim 1, wherein each control module (52, 54, 56, 58, 60; 722, 724, 726, 728, 730) comprises an internal unit for regulating the output voltage of the AVP type (732, 734, 736, 738, 740) and does not have a local unit for balancing currents, and

each internal unit for regulating the output voltage of the AVP type (732, 734, 736, 738, 740) comprises an internal voltage regulating loop of the AVP type, configured to determine a unique common mode cyclic ratio Di from an output voltage measurement Vout, an output current measurement li passing through the associated branch, a reference voltage Vref, and a unique current source slope factor $\alpha i$,

the unique slope factor $\alpha i$ is adjusted to be substantially equal to a main slope factor value $\alpha$ shared by all of the modules,

the unique common mode cyclic ratio Di depends on the difference between a reference current Iref and the product of the unique slope factor $\alpha i$ and the value of the measured branch current li, the reference current Irf being proportional to the difference between the reference voltage Vref and the value of the output voltage Vout measured according to a constant 1/R that is substantially identical over all of the modules.

6. The static converter with parallel architecture according to any one of claims 1 to 5, wherein each module with any rank i, the modules adjacent to that module with rank i-1, i+1, and the corresponding communication links $L_{i-1,i}$, $L_{i,i+1}$ are configured to exchange relevant information related to the module of any rank i taken from among the current $I_i$ of the branch with rank i, the currents $I_{i+1}$, $I_{i-1}$ of the adjacent branches with rank i-1, i+1, the differential currents $I_i - I_{i-1}$ and $I_{i+1} - I_i$, the triangular carrier signals of the module of any rank i and the modules adjacent to that module with rank i-1, i+1.

7. The static converter with parallel architecture according to any one of claims 1 to 6, wherein each branch (32, 34, 36, 38, 40) comprises one or more smoothing inductors (182, 184, 186, 188, 190), the smoothing inductors of two branches of any two adjacent modules being able to be coupled.

8. The static converter with parallel architecture according to any one of claims 1 to 7, wherein
   each module with rank i comprises a first connection port and a second connection port configured to be connected externally to a first communication link and a second communication link using a same interface, and internally to the various local units, and
   each module with rank i comprises a disconnection/connection unit for the connection ports of/to the local units and in parallel for connection/disconnection of the ports relative to each other, the switching between a first state in which the ports are connected to the local units and the ports are disconnected, and a second state in which the ports are disconnected from the local units and the ports are connected, being implemented by a control signal outside the module or an internal signal developed within the module.

9. A static converter with series architecture and decentralized control, designed to be powered by a voltage supply generator Vin and a current Iin and to provide an output voltage Vout and an output current Iout, comprising
   a first power supply input terminal (1004), a second power supply input terminal (1006), an output terminal (1010), a total number q of electronic switching cells (1022, 1024, 1026, 1028, 1030) arranged in series, a same total number q of control modules (1052, 1054, 1056, 1058, 1060), a chain (1061) of q communication links (1062, 1064, 1066, 1070, 1071, 1072) connecting the control modules of a closed loop (1052, 1054, 1056, 1058, 1060),
   each electronic switching cell (1022, 1024, 1026, 1028, 1030) being associated with a single and different control module (1052, 1054, 1056, 1058, 1060), the electronic switching cell (1026) and the associated control module (1056) being identified by a same single and different integer positioning rank i, comprised between 1 and q and larger when the switching cell (1026) is connected as close as possible to the power supply input terminals (1004, 1006),
   any two control modules (1056, 1058), adjacent within the communication chain (1061) and with rank i, i+1, being connected by a single and different communication link (1068) $L_{i,i+1}$,
   the switching cells (1022, 1024, 1026, 1028, 1030) each comprising a single and different pair of electronic switches (1080 ; 1082, 1084 ; 1086, 1088 ; 1090 , 1092 ; 1094, 1096 ; 1098) connected in parallel through a single and different floating capacitance (1102, 1104, 1106, 1108) positioned at the input of the switching cell (1022, 1024, 1026, 1028) toward the power supply input terminals (1004, 1006) when the positioning rank i is different from q, a first input pair of input terminals (1121 ; 1122, 1123 ; 1124, 1125 ; 1126, 1127 ; 1128, 1129 ; 1130) connected to the input of the two switches (1080 ; 1082, 1084 ; 1086, 1088 ; 1090 , 1092 ; 1094, 1096 ; 1098) and to the floating capacitance (1102, 1104, 1106, 1108), a second pair of output terminals (1131 ; 1132, 1133 ; 1134, 1135 ; 1136, 1137 ; 1138, 1139 ; 1140) connected to the output of the two switches (1080 ; 1082, 1084 ; 1086, 1088 ; 1090 , 1092 ; 1094, 1096 ; 1098),
   each control module (1052, 1054, 1056, 1058, 1060) respectively comprising a single and different local unit for generating a unique triangular voltage carrier (1152, 1154, 1156, 1158, 1160),
   the local unit for generating the triangular carrier (1156) of any control module (1056) with rank i being configured to control the positioning of its interleaving phase within all of the interleaved triangular carriers based solely on the signals of the triangular carriers of the two modules (1054, 1058) with respective rank i-1, i+1 adjacent to the any module (1056) with rank i, provided by the two modules (1054, 1058) adjacent to the any module (1056) with rank i through two corresponding communication links (1066, 1068), i being comprised between 1 and q, with i-1 equal to q when i is equal to 1, and i+1 equal to 1 when i is equal to q,
   **characterized in that** each control module (1052, 1054, 1056, 1058, 1060) respectively comprises a single and different unit for internal regulation of the input current of the ACP type (1432, 1434, 1436, 1438, 1440 ; 1632, 1634, 1636, 1638, 1640 ; 1732, 1734, 1736, 1738, 1740 ; 1832, 1834, 1836, 1838, 1840),
   the internal unit regulating the input or output current of the ACP type (1436; 1636; 1736; 1836) of any module (1056;

1256) with rank i being configured by implementing a unique internal voltage and/or current loop to determine a unique cyclic ratio Di, the determination of Di depending on a product of the value of the voltage Vi passing through the branch connected to the switching cell (1026) associated with the any module (1056; 1256) with rank i and a slope factor $\alpha$i depending on the rank i of the module (1056; 1256).

10. The static converter with series architecture according to claim 9, each control module (1052, 1054, 1056, 1058, 1060) respectively comprises a single and different local unit for balancing voltages (1262, 1264, 1266, 1268, 1270), the local unit for balancing the cell voltages (1266) of any module (1056) with rank i being configured to determine a cyclic ratio correction di based solely on the difference between the mean of the values of the two cell voltages $V_{i-1}$, $V_{i+1}$ of the switching cells (1024, 1028) whose modules (1054, 1058) with respective rank i-1, i+1 are adjacent to the any module (1056) with rank i and the value of the cell voltage Vi of the switching cell (1026), the cell voltage Vi of any switching cell (1026) with rank i being equal to the difference between the differential input voltage Vai and the differential output voltage Vbi of the switching cell (1026) with rank i.

11. The static converter with series architecture according to claim 10, wherein, for each any module i, a measurement of the voltage Vi of the corresponding switching cell is provided through a first differential measurement of the input voltage Vai and a second differential measurement of the output voltage Vbi.

12. The static converter with series architecture according to claim 9, wherein each local unit for regulating the input current of the ACP type (1732, 1734, 1736, 1738, 1740) comprises an internal loop for regulating the current of the ACP type, configured to determine a unique cyclic ratio Di from a measurement of the input current Iin, a measurement of the cell voltage Vi of the cell with rank i, a reference current Iref, and a corrected voltage source inverse slope factor $\alpha$i,
the corrected inverse slope factor $\alpha$i is adjusted to be substantially equal to a main inverse slope factor value $\alpha$ shared by all of the modules,
the unique cyclic ratio Di depends on the difference between a reference voltage Vref and the product of the inverse of the unique inverse slope factor $\alpha$i and the value of the measured cell voltage Vi for the cell with rank i, the voltage Vref being proportional to the difference between the reference current iref and the value of the input current Iin measured according to a constant Z/R that is substantially identical over all of the control modules.

13. The static converter with series architecture according to claim 9, wherein each local unit for internal regulation of the output current of the ACP type (1832, 1834, 1836, 1838, 1840) comprises an internal loop for regulating the current of the ACP type, configured to determine a unique cyclic ratio Di from a measurement of the output current Iout, a measurement of the cell voltage Vi of the cell with rank i, a reference current Iref, and a corrected voltage source inverse slope factor $\alpha$i,
the corrected inverse slope factor $\alpha$i is adjusted to be substantially equal to a main inverse slope factor value $\alpha$ shared by all of the modules,
the unique cyclic ratio Di depends on the difference between a reference voltage Vref and the product of the inverse of the unique inverse slope factor $\alpha$i and the value of the measured cell voltage Vi for the cell with rank i, the voltage Vref being proportional to the difference between the reference current iref and the value of the output current Iout measured according to a constant Z/R that is substantially identical over all of the control modules.

14. The static converter with series architecture according to any one of claims 9 to 13, wherein each module with any rank i, the modules adjacent to that module with rank i-1, i+1, and the corresponding communication links $L_{i-1,i}$, $L_{i,i+1}$ are configured to exchange relevant information related to the module of any rank i taken from among the cell voltage $V_i$ of the cell with rank i, the cell voltages $V_{i+1}$, $V_{i-1}$ of the adjacent cells with rank i-1, i+1, the triangular carrier signals of the module of any rank i and the modules adjacent to that module with rank i-1, i+1.

15. The static converter with parallel architecture according to any one of claims 9 to 14, wherein
each module with rank i comprises a first connection port and a second connection port configured to be connected externally to a first communication link and a second communication link using a same interface, and internally to the various local units, and
each module with rank i comprises a disconnection/connection unit for the connection ports of/to the local units and in parallel for connection/disconnection of the ports relative to each other, the switching between a first state in which the ports are connected to the local units and the ports are disconnected, and a second state in which the ports are disconnected from the local units and the ports are connected, being implemented by a control signal outside the module or an internal signal developed within the module.

**FIG.1**

FIG.2

FIG.3

EP 2 870 686 B1

FIG.4

FIG.5

EP 2 870 686 B1

FIG.6

FIG.7

EP 2 870 686 B1

FIG.8

FIG.10

FIG.9

FIG.11

FIG.12

EP 2 870 686 B1

FIG.13

FIG.14

**FIG.15**

**FIG.16**

**FIG.18**

FIG.17

FIG.19

**FIG.20**

**FIG.21**

## FIG.22

FIG.23

EP 2 870 686 B1

FIG.24

FIG.25

FIG.27

**FIG.26**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **MARC COUSINEAU et al.** Triangular Carrier Self-Alignment Using Modular Approach for Interleaved Converter Control. *EPE 2011 :14th European Conference on Power Electronics and Applications,* 01 Septembre 2011

- **MATHIEU LE BOLLOCH ; MARC COUSINEAU ; THIERY MEYNARD.** New Materless Moduar Curent-Sharing Technique for D/DC Parallel Converters. *EPE-PEMC 2010, 14th International Power Electronics and Motion Conference,* Septembre 2010, 6-8